(19) **Europäisches Patentamt European Patent Office Office européen des brevets**

(11) **EP 4 712 476 A1**

(12) **EUROPEAN PATENT APPLICATION**
published in accordance with Art. 153(4) EPC

(43) Date of publication:
**18.03.2026 Bulletin 2026/12**

(21) Application number: **23936067.0**

(22) Date of filing: **10.05.2023**

(51) International Patent Classification (IPC):
**H04N 19/186** $^{(2014.01)}$      **H04N 19/103** $^{(2014.01)}$

(52) Cooperative Patent Classification (CPC):
**H04N 19/103; H04N 19/186**

(86) International application number:
**PCT/CN2023/093229**

(87) International publication number:
**WO 2024/229745 (14.11.2024 Gazette 2024/46)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **GUANGDONG OPPO MOBILE TELECOMMUNICATIONS CORP., LTD.**
**Dongguan, Guangdong 523860 (CN)**

(72) Inventor: **HUANG, Hang**
**Dongguan, Guangdong 523860 (CN)**

(74) Representative: **Mewburn Ellis LLP**
**Aurora Building**
**Counterslip**
**Bristol BS1 6BX (GB)**

(54) **CODING METHOD, DECODING METHOD, BITSTREAM, CODER, DECODER AND STORAGE MEDIUM**

(57)     A coding method, a bitstream, an encoder, a decoder, and a storage medium are disclosed in embodiments of the disclosure. The method includes the following. Mode enable information of a current block is determined. If the mode enable information indicates that a weighted chroma fusion mode is used for the current block and a chroma fusion merge mode is enabled for the current block, a bitstream is decoded to determine a value of first syntax flag information. If the first syntax flag information indicates that the chroma fusion merge mode is used for the current block, the bitstream is decoded to determine an index value of the current block. A parameter candidate list of the current block is constructed, and a model parameter of the current block is determined according to the parameter candidate list and the index value, where the model parameter is used for determining a first prediction value of the current block based on a cross-component prediction mode. As such, bit overhead can be reduced, and thus the coding efficiency can be improved.

| |
|---|
| DETERMINE MODE ENABLE INFORMATION OF CURRENT BLOCK — S901 |
| IF MODE ENABLE INFORMATION INDICATES THAT WEIGHTED CHROMA FUSION MODE IS USED FOR CURRENT BLOCK AND CHROMA FUSION MERGE MODE IS ENABLED FOR CURRENT BLOCK, DECODE BITSTREAM TO DETERMINE VALUE OF FIRST SYNTAX FLAG INFORMATION — S902 |
| IF FIRST SYNTAX FLAG INFORMATION INDICATES THAT CHROMA FUSION MERGE MODE IS USED FOR CURRENT BLOCK, DECODE BITSTREAM TO DETERMINE INDEX VALUE OF CURRENT BLOCK — S903 |
| CONSTRUCT PARAMETER CANDIDATE LIST OF CURRENT BLOCK, AND DETERMINE MODEL PARAMETER OF CURRENT BLOCK ACCORDING TO PARAMETER CANDIDATE LIST AND INDEX VALUE, WHERE MODEL PARAMETER IS USED FOR DETERMINING FIRST PREDICTION VALUE OF CURRENT BLOCK BASED ON CROSS-COMPONENT PREDICTION MODE — S904 |

FIG. 9

**Description**

TECHNICAL FIELD

Embodiments of the disclosure relate to the field of video coding technology, in particular to a coding method, a bitstream, an encoder, a decoder, and a storage medium.

BACKGROUND

Based on a reference software test platform for the latest video coding standard H.266/versatile video coding (VVC), a new-generation reference software model, i.e., an enhanced compression model (ECM), is proposed by the joint video experts team (JVET).

In the ECM, there may be multiple modes for prediction, including a luma prediction mode and a chroma prediction mode. The chroma prediction mode may be further classified into two types: a cross-component prediction mode and a non-cross-component prediction mode. In a cross-component prediction mode merge technology, due to incomplete consideration in the technology, additional bit overhead is usually incurred, and thus the coding efficiency is reduced.

SUMMARY

A coding method, a bitstream, an encoder, a decoder, and a storage medium are provided in embodiments of the disclosure, which can reduce bit overhead and thus improve the coding efficiency.

Technical solutions of embodiments of the disclosure may be implemented as follows.

In a first aspect, a decoding method is provided in embodiments of the disclosure. The method is applied to a decoder and includes the following. Mode enable information of a current block is determined. If the mode enable information indicates that a weighted chroma fusion mode is used for the current block and a chroma fusion merge mode is enabled for the current block, a bitstream is decoded to determine a value of first syntax flag information. If the first syntax flag information indicates that the chroma fusion merge mode is used for the current block, the bitstream is decoded to determine an index value of the current block. A parameter candidate list of the current block is constructed, and a model parameter of the current block is determined according to the parameter candidate list and the index value, where the model parameter is used for determining a first prediction value of the current block based on a cross-component prediction mode.

In a second aspect, an encoding method is provided in embodiments of the disclosure. The method is applied to an encoder and includes the following. Mode enable information of a current block is determined. If the mode enable information indicates that a weighted chroma fusion mode is used for the current block and a chroma fusion merge mode is enabled for the current block, a value of first syntax flag information is determined. If the first syntax flag information indicates that the chroma fusion merge mode is used for the current block, a parameter candidate list of the current block is constructed. A model parameter of the current block is determined according to the parameter candidate list, where the model parameter is used for determining a first prediction value of the current block based on a cross-component prediction mode.

In a third aspect, a bitstream is provided in embodiments of the disclosure. The bitstream is generated by performing bit encoding according to to-be-encoded information. The to-be-encoded information includes at least one of: an index value of a current block, a value of first syntax flag information, a value of second syntax flag information, a value of third syntax flag information, a value of fourth syntax flag information, a value of fifth syntax flag information, a value of sixth syntax flag information, a value of seventh syntax flag information, or a value of eighth syntax flag information. The first syntax flag information indicates whether a chroma fusion merge mode is used for the current block, the second syntax flag information indicates whether a weighted chroma fusion mode is used for the current block, the third syntax flag information indicates whether a chroma fusion mode is used for the current block, the fourth syntax flag information indicates whether a linear-model chroma fusion mode is used for the current block, the fifth syntax flag information indicates whether a single-linear-model chroma fusion mode or a bilinear-model chroma fusion mode is used for the current block, the sixth syntax flag information indicates whether a non-cross-component prediction mode is used for the current block, the seventh syntax flag information indicates whether a cross-component prediction mode is used for the current block, and the eighth syntax flag information indicates whether a cross-component merge (CCMerge) mode is used for the current block.

In a fourth aspect, an encoder is provided in embodiments of the disclosure. The encoder includes a first determining unit. The first determining unit is configured to determine mode enable information of a current block; and determine a value of first syntax flag information, if the mode enable information indicates that a weighted chroma fusion mode is used for the current block and a chroma fusion merge mode is enabled for the current block. The first determining unit is further configured to construct a parameter candidate list of the current block, if the first syntax flag information indicates that the chroma fusion merge mode is used for the current block; and determine a model parameter of the current block according to the parameter candidate list, where the model parameter is used for determining a first prediction value of the current block based on a cross-component prediction mode.

In a fifth aspect, an encoder is provided in embodiments of the disclosure. The encoder includes a first memory and a first processor. The first memory is configured to store a computer program executable by the first processor. The first processor is configured to perform the method of the second aspect when executing the computer program.

In a sixth aspect, a decoder is provided in embodiments of the disclosure. The decoder includes a second determining unit and a decoding unit. The second determining unit is configured to determine mode enable information of a current block. The decoding unit is configured to decode a bitstream to determine a value of first syntax flag information, if the mode enable information indicates that a weighted chroma fusion mode is used for the current block and a chroma fusion merge mode is enabled for the current block; and decode the bitstream to determine an index value of the current block, if the first syntax flag information indicates that the chroma fusion merge mode is used for the current block. The second determining unit is further configured to construct a parameter candidate list of the current block, and determine a model parameter of the current block according to the parameter candidate list and the index value, where the model parameter is used for determining a first prediction value of the current block based on a cross-component prediction mode.

In a seventh aspect, a decoder is provided in embodiments of the disclosure. The decoder includes a second memory and a second processor. The second memory is configured to store a computer program executable by the second processor. The second processor is configured to perform the method of the first aspect when executing the computer program.

In an eighth aspect, a computer-readable storage medium is provided in embodiments of the disclosure. The computer-readable storage medium is configured to store a computer program which, when executed, is operable to implement the method of the first aspect or the method of the second aspect.

A coding method, a bitstream, an encoder, a decoder, and a storage medium are provided in embodiments of the disclosure. At an encoding end, mode enable information of a current block is determined. If the mode enable information indicates that a weighted chroma fusion mode is used for the current block and a chroma fusion merge mode is enabled for the current block, a value of first syntax flag information is determined. If the first syntax flag information indicates that the chroma fusion merge mode is used for the current block, a parameter candidate list of the current block is constructed. A model parameter of the current block is determined according to the parameter candidate list. At a decoding end, mode enable information of a current block is determined. If the mode enable information indicates that a weighted chroma fusion mode is used for the current block and a chroma fusion merge mode is enabled for the current block, a bitstream is decoded to determine a value of first syntax flag information. If the first syntax flag information indicates that the chroma fusion merge mode is used for the current block, the bitstream is decoded to determine an index value of the current block. A parameter candidate list of the current block is constructed, and a model parameter of the current block is determined according to the parameter candidate list and the index value. The model parameter is used for determining a first prediction value of the current block based on a cross-component prediction mode. As such, when the weighted chroma fusion mode is used for the current block, considering a usage rate of the chroma fusion merge mode, the determination of whether the chroma fusion merge mode is enabled for the current block is added herein. The value of the first syntax flag information needs to be coded only when the chroma fusion merge mode is enabled for the current block. In this way, codewords can be effectively saved, additional bit overhead caused by the first syntax flag information can be avoided, and thus the coding efficiency can be improved.

BRIEF DESCRIPTION OF THE DRAWINGS

FIG. 1 is a schematic diagram of a current block, a neighbouring reconstructed chroma sample, and a neighbouring reconstructed luma sample.
FIG. 2A is a schematic diagram of a linear model based on a cross-component linear model (CCLM) mode.
FIG. 2B is a schematic diagram of a linear model based on a CCLM-SLOPE mode.
FIG. 3 is a schematic diagram of a multi-model based on a multi-model linear model (MMLM) mode.
FIG. 4 is a schematic diagram of candidate positions of spatial neighbouring blocks.
FIG. 5 is a schematic diagram of candidate positions of spatial non-neighbouring blocks.
FIG. 6 is a schematic block diagram of an encoder provided in embodiments of the disclosure.
FIG. 7 is a schematic block diagram of a decoder provided in embodiments of the disclosure.
FIG. 8 is a schematic diagram of a network architecture of a coding system provided in embodiments of the disclosure.
FIG. 9 is schematic flowchart 1 of a decoding method provided in embodiments of the disclosure.

FIG. 10 is schematic flowchart 2 of a decoding method provided in embodiments of the disclosure.
FIG. 11 is schematic flowchart 1 of an encoding method provided in embodiments of the disclosure.
FIG. 12 is schematic flowchart 2 of an encoding method provided in embodiments of the disclosure.
FIG. 13 is a schematic structural diagram of an encoder provided in embodiments of the disclosure.
FIG. 14 is a schematic diagram of a specific hardware structure of an encoder provided in embodiments of the disclosure.
FIG. 15 is a schematic structural diagram of a decoder provided in embodiments of the disclosure.
FIG. 16 is a schematic diagram of a specific hardware structure of a decoder provided in embodiments of the disclosure.
FIG. 17 is a schematic structural diagram of a coding system provided in embodiments of the disclosure.

DETAILED DESCRIPTION

To enable a more detailed understanding of features and technical content in embodiments of the disclosure, the embodiments of the disclosure will be described in detail below in conjunction with the accompanying drawings which are provided for illustrative purposes only and are not intended to limit the embodiments of the disclosure.

Unless otherwise defined, all technical and scientific terms used herein have the same meaning as commonly understood by those skilled in the art. The terms used herein are for the purpose of describing embodiments of the disclosure only and are not intended to limit the disclosure.

In the following description, reference to "some embodiments" describes a subset of all possible embodiments, but it may be understood that "some embodiments" may refer to the same or different subsets of all possible embodiments and may be combined with each other without conflict.

It may be further noted that the terms "first/second/third" involved in embodiments of the disclosure are merely for distinguishing similar objects and do not imply a particular ordering with respect to the objects. It may be understood that "first/second/third" may, where appropriate, be interchanged in a particular order or sequence so that embodiments of the disclosure described herein may be implemented in an order other than that illustrated or described herein.

To explore a next-generation digital video compression technology, a new-generation reference software model, i.e., an enhanced compression model (ECM), is developed based on a reference software test platform for the latest video coding standard H.266/versatile video coding (VVC) (also referred to as VVC test model (VTM)). Currently, video compression technologies are based on traditional block-based coding, which may include multiple modules for such as block partition, intra prediction, inter prediction, transformation, quantization, entropy coding, in-loop and post-processing filtering, etc. In embodiments of the disclosure, improvements mainly focus on the prediction, to improve the coding performance of the ECM.

Herein, there may be multiple technologies for the prediction, including a luma prediction mode and a chroma prediction mode. Taking the chroma prediction mode as an example, related syntax of the chroma prediction mode is illustrated in Table 1.

Table 1

| | |
|---|---|
| intra_chroma_pred_mode(){ | |
| if( getUseLMChroma() ){ | |
| **isLMCMode** | ae(v) |
| if( isLMCMode ) { /* LM chroma mode */ | |
| if( getUseCCMerge() ) { | |
| **cclmMrgFlag** | ae(v) |
| } | |
| if( cclmMrgFlag ) | |
| **cclmMrgIdx** | ae(v) |
| else { | |
| **cclmModeIdx** | ae(v) |
| if ( isCCCMEnabled ) { | |
| **cccmFlag** | ae(v) |
| if ( cccmFlag ) { | |

(continued)

| | |
|---|---|
| **cccmNoSubFlag** | ae(v) |
| if ( !cccmNoSubFlag ) | |
| **glCccmFlag** | ae(v) |
| } | |
| } | |
| if ( hasGlmFlag( ) ) { | |
| **glmFlag** | ae(v) |
| if ( glmFlag ) | |
| **glmIdc** | ae(v) |
| } | |
| if (!cccmFlag && hasCclmDeltaFlag() ) | |
| **cclmDeltaFlags** | ae(v) |
| if (cclmDeltaFlags) { | |
| **bothActiveCclmDelta** | ae(v) |
| if ( bothActiveCclmDelta ) { | |
| cclmOffsetsCbFlag = 1 | |
| cclmOffsetsCrFlag = 1 | |
| } else { | |
| **cclmOffsetsCbFlag** | ae(v) |
| if ( isMultiModeLM() && !cclmOffsetsCbFlag ) | |
| **cclmOffsetsCrFlag** | ae(v) |
| else | |
| cclmOffsetsCrFlag = !cclmOffsetsCbFlag | |
| } | |
| if (cclmOffsetsCbFlag) | |
| cclmDelta(cclmOffsetsCb) | |
| if (cclmOffsetsCrFlag) | |
| cclmDelta(cclmOffsetsCb) | |
| } | |
| } | |
| } else if ( hasChromaBvFlag() ){ | |
| **DBVFlag** | ae(v) |
| if ( hasChromaFusionFlag() ) | |
| **isChromaFusion** | ae(v) |
| } else if ( isDMEnable) { | |
| **DMFlag** | ae(v) |
| if ( hasChromaFusionFlag() ) | |
| intraChromaFusionMode() | |
| } else if ( getUseDimd() ) { | |
| **DimdChromaFlag** | ae(v) |

(continued)

| | |
|---|---|
| if ( hasChromaFusionFlag() ) | |
| intraChromaFusionMode() | |
| } else { | |
| **chromaModeIdx** | u(2) |
| if ( hasChromaFusionFlag() ) | |
| intraChromaFusionMode() | |
| } | |
| } | |

For a syntax element cclmModeIdx, a value of cclmModeIdx and a corresponding mode type are illustrated in Table 2.

Table 2

| Value | Binary data (bin) | Mode type |
|---|---|---|
| 0 | 0 | LM |
| 1 | 10 | MMLM |
| 2 | 110 | MDLM_L |
| 3 | 1110 | MDLM_T |
| 4 | 11110 | MMLM_L |
| 5 | 11111 | MMLM_T |

It may be understood that, for a cross-component linear model (CCLM) prediction mode, the main idea of the CCLM prediction mode is to reduce cross-component redundancy and perform cross-component prediction. In particular, a prediction value of a chroma sample is mainly constructed based on a reconstructed luma sample of the same coding block, and a linear relationship thereof is illustrated in the following formula (1).

$$\mathrm{pred}_C(i, j) = a \cdot \mathrm{rec}_L'(i, j) + b \qquad (1)$$

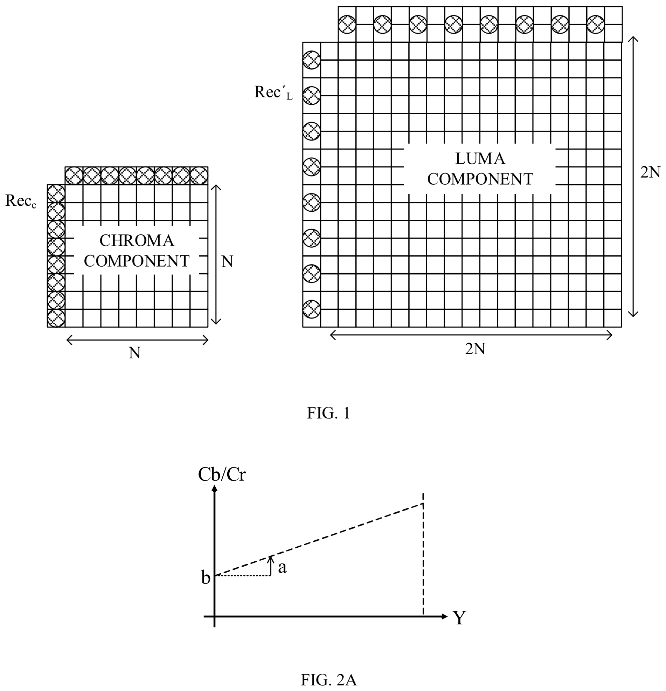

In the above, $\mathrm{pred}_C(i, j)$ represents a chroma prediction sample of a current block, and $\mathrm{rec}_L'(i, j)$ represents a down-sampled reconstructed luma sample of the current block. a and b are referred to as linear-model parameters (where a is a scaling parameter, and b is an offset parameter), and can be calculated from neighbouring chroma samples and neighbouring luma samples. Since the linear model herein can be obtained through calculation at both the encoding end and the decoding end, the linear model does not need to be signalled into a bitstream. Exemplarily, FIG. 1 is a schematic diagram of a current block, a neighbouring reconstructed chroma sample, and a neighbouring reconstructed luma sample in a CCLM mode. As illustrated in FIG. 1, grid-filled circles represent reference samples that neighbour to the current block and have been already reconstructed, which may include left reference samples and top/above/upper reference samples. In addition, N represents a side length of a chroma component of the current block, and 2N represents a side length of a luma component of the current block.

In addition to jointly calculating the linear-model parameters by using both top reference samples and left reference samples, there are two other calculation manners for a model parameter(s). That is, there are two other modes in CCLM, which are referred to as a cross-component linear model top (CCLM-T) mode and a cross-component linear model left (CCLM-L) mode. The details are as follows. In the CCLM-T mode, the linear-model parameters are calculated by using only the top reference samples. In the CCLM-L mode, the linear model parameters are calculated by using only the left reference samples.

To further improve the coding efficiency of the CCLM, many improvements have been made to the CCLM in the ECM, including a slope-based CCLM model (CCLM_SLOPE), a multi-model linear model (MMLM), a convolutional cross-component model (CCCM), a gradient linear model (GLM), etc. The following will give a brief introduction to some linear models.

In the CCLM_SLOPE, the calculated linear-model parameters can be adjusted in the following manner.

$$a' = a + u, b' = b - u * yr \qquad\qquad (2)$$

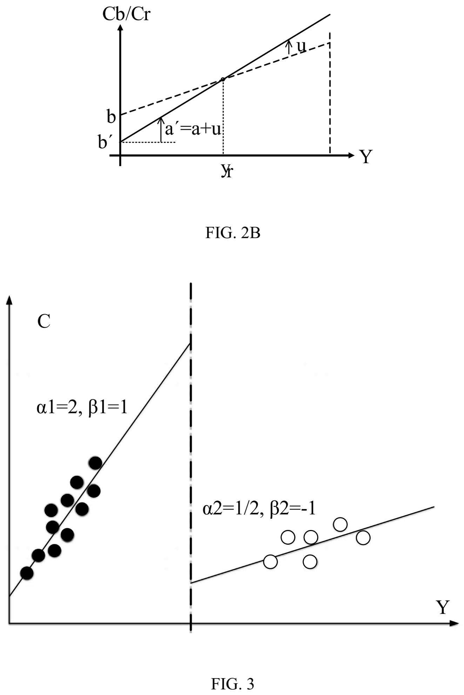

Herein, a prediction sample is calculated by using updated linear-model parameters a' and b'. Through this improvement, a mapping function is tilted or rotated around a point with luma value *yr*, where *yr* is generally an average of reference luma samples. Exemplarily, FIG. 2A is a schematic diagram of a linear model based on a CCLM mode, and FIG. 2B is a schematic diagram of a linear model based on a CCLM-SLOPE mode. The horizontal axis represents reconstructed luma information (Y), and the vertical axis represents chroma prediction information (Cb/Cr). Model parameters in FIG. 2A are a and b, and model parameters in FIG. 2B are a' and b'. The model parameters a' and b' in FIG. 2B may be obtained by adjusting the model parameters a and b.

In the CCLM, only one linear model exists between luma and chroma of the same coding block. In the MMLM, multiple models can be provided for the same coding block. Neighbouring luma and chroma samples are classified into different classes according to a classification threshold, and samples in each class are used for deriving different model parameters. Exemplarily, FIG. 3 is a schematic diagram of a multi-model based on an MMLM mode. As illustrated in FIG. 3, neighbouring reference samples are classified according to the classification threshold, and thus two linear models may be constructed, where model parameters α1 and β1 of the first linear model satisfy α1 = 2 and β1 = 1, and model parameters α2 and β2 of the second linear model satisfy α2 = 1/2 and β2 = -1.

It may be further understood that, for a cross-component merge (CCMerge) mode, in the above CCLM prediction modes, all cross-component model parameters (ccmParam) are calculated from neighbouring reconstructed luma samples and neighbouring reconstructed chroma samples. Based on this, a technology of the CCMerge mode is proposed herein as a new cross-component prediction mode. In this mode, ccmParam of a current block can be directly inherited from a reconstructed block instead of being calculated. A flag cclmMrgFlag may indicate whether the CCMerge mode is used for the current block. If the flag cclmMrgFlag is true, that is, the current block is in the CCMerge mode, then a ccmParam list ccmList[NUM_LMC_ MERGE_CANDS] may be created for the current block. This list is filled with existing ccmParam from spatial neighbouring candidate blocks and spatial non-neighbouring candidate blocks. By default, a value of the maximum number of candidates in this list, NUM_LMC_MERGE_CANDS, is 6. When the list is not full in the above process, the list may be filled according to preset default parameters, and a model parameter to be used is indicated by a candidate index cclmMrgIdx.

In some embodiments, a candidate list is filled in the following manner.

Step 1, spatial neighbouring candidates.

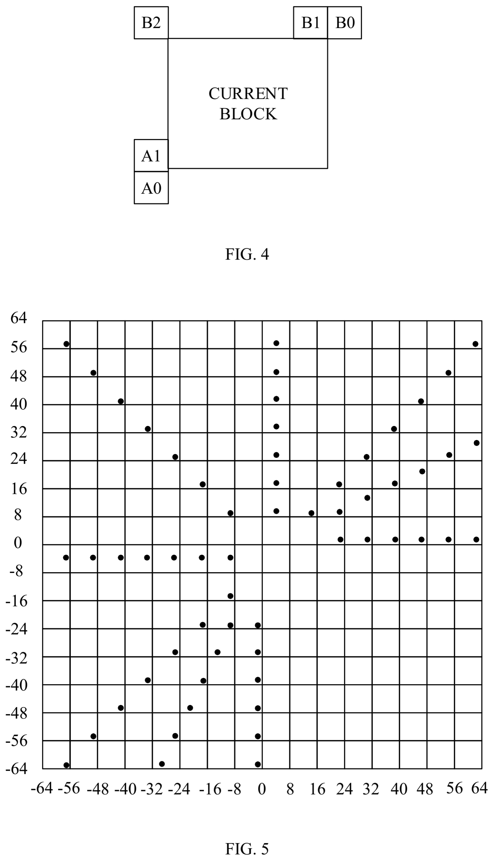

First, spatial neighbouring blocks are checked. Positions of the neighbouring blocks may be illustrated in FIG. 4, and a checking order is B1->A1->B0->A0 ->B2.

Step 2, spatial non-neighbouring candidates.

After all the spatial neighbouring blocks are checked, spatial non-neighbouring candidates are considered. A positional relationship thereof is illustrated in FIG. 5, where each point represents one non-neighbouring block, and each point indicates a top-left corner position of the one non-neighbouring block. It may be noted that, grids in FIG. 5 are merely taken as an example for illustration of sample coordinates rather than specific block partition.

Step 3, CCLM candidates with default parameters.

If the list is not full, CCLM candidates with default scaling parameters are considered after the spatial neighbouring candidates and the spatial non-neighbouring candidates are checked. The default scaling parameters are {0, 1/8, -1/8, 2/8, -2/8, 3/8}.

For a model parameter, an inheritance rule is as follows.

In terms of inheriting a CCLM candidate, only a scaling parameter is inherited, and an offset parameter is re-calculated.

In terms of inheriting an MMLM candidate, the scaling parameter and a classification threshold may be inherited, and the offset parameter is re-calculated. However, if no neighbouring reconstructed samples are available in a class, the offset parameter is directly inherited.

In terms of inheriting a CCCM candidate, all convolution parameters and the classification threshold are inherited.

In terms of inheriting a GLM candidate, if GLM is 3-parameter mode, all gradient indexes and model parameters are inherited. Otherwise, if GLM is 2-parameter mode, only the scaling parameter is inherited, and the offset parameter needs to be re-calculated.

In terms of inheriting a chroma fusion mode, MMLM parameters derived in the cross-component prediction are inherited and used as candidates.

In terms of inheriting a CCMerge candidate, an inheritance mode depends on an inherited candidate mode.

It may be further understood that, for the chroma fusion mode, chroma prediction modes may be generally classified into two types. One is a cross-component prediction mode, and the other is a non-cross-component prediction mode. The non-cross-component prediction mode generally includes a planar mode, a direct current (DC) mode, a horizontal mode, a vertical mode, a decoder side intra mode derivation (DIMD) mode, and the like. If the non-cross-component prediction mode is used for the current block, a flag of the chroma fusion mode needs to be further parsed. Related syntax of the chroma fusion mode is illustrated in Table 3.

Table 3

| intraChromaFusionMode() { | |
| --- | --- |
| **chromaFusionFlag** | ae(v) |
| if ( chromaFusionFlag) | |
| **chromaFusionType** | ae(v) |
| if ( chromaFusionType) | |
| **chromaFusionCclm** | ae(v) |
| isChromaFusion = chromaFusionFlag + chromaFusionType + chromaFusionCclm | |

The flag of the chroma fusion mode is isChromaFusion. Specific values of isChromaFusion correspond to different fusion modes, specifically as illustrated in Table 4.

Table 4

| Value | Name |
| --- | --- |
| 0 | Disable chroma fusion mode (Disable) |
| 1 | Weighted chroma fusion mode (Preset weights) |
| 2 | Single-linear-model chroma fusion mode (Single linear model) |
| 3 | Multiple-linear-model chroma fusion mode (Multiple linear model) |

Specifically, values of isChromaFusion will be described in detail below.

When a value of chromaFusionFlag is 0, a value of the flag isChromaFusion is 0, which indicates that the chroma fusion mode is disabled.

When a value of chromaFusionFlag is 1 and a value of chromaFusionType is 0, a value of the flag isChromaFusion is 1, which indicates that the weighted chroma fusion mode is used. An operating principle of this mode is to derive a final prediction result based on a current non-cross-component prediction mode and one cross-component prediction mode. A specific prediction process in this mode is as follows.

$$pred = (w0 * pred0 + w1 * pred1 + (1 \ll (shift - 1))) \gg shift \qquad (3)$$

In the above, pred0 represents a prediction value obtained by applying the current non-cross-component prediction mode, pred1 represents a prediction value obtained by applying the cross-component prediction mode (where the mode is MMLM by default), and pred is a final prediction result of a current chroma block. Weights w0 and w1 may be determined according to a prediction mode for a neighbouring block, and w0+w1=4 and shift=2. Exemplarily, when the cross-component prediction mode is used for both a left neighbouring block and a top neighbouring block, {w0, w1}={1, 3}. When the non-cross-component prediction mode is used for both the left neighbouring block and the top neighbouring block, {w0, w1}={3, 1}. In another case, {w0, w1}={2, 2}. Furthermore, parameters in the cross-component prediction mode may be inherited in such case.

When a value of chromaFusionFlag is 1, a value of chromaFusionType is 1, and a value of chromaFusionCclm is 0, a value of the flag isChromaFusion is 2, which indicates that the single-linear-model chroma fusion mode is used.

When the value of chromaFusionFlag is 1, the value of chromaFusionType is 1, and a value of chromaFusionCclm is 1, a value of the flag isChromaFusion is 3, which indicates that the multiple-linear-model chroma fusion mode is used.

Herein, an operating principle of a linear-model chroma fusion mode is to derive a final prediction result based on a current non-cross-component prediction mode and a reconstructed luma sample value. A specific prediction process in this mode is as follows.

$$\text{pred}_C = a \cdot \text{rec}_L' + b \cdot \text{pred}_C' + c \cdot \text{midValue} \qquad\qquad (4)$$

In the above, $\text{pred}_C$ represents the final prediction result, $\text{rec}_L'$ represents the reconstructed luma sample value, and $\text{pred}_C'$ represents a chroma prediction sample value obtained by applying the non-cross-component prediction mode. midValue is a default value and may be determined according to a bit depth. Generally, when the bit depth is 10, a value of midValue is 512. a, b, and c are model parameters. When the value of the flag isChromaFusion is 2, it indicates a single linear model, i.e., there is only one group of model parameters. When the value of the flag isChromaFusion is 3, it indicates a multiple linear model, i.e., there are multiple groups of model parameters. Reference samples are classified according to a threshold, and each group of model parameters is used for reference samples in a corresponding class.

Further, in the above chroma fusion mode, for the case where the flag of the chroma fusion mode is 1, there is also a CCMerge mode. In this mode, a cross-component model parameter(s) ccmParam for the cross-component prediction in the chroma fusion mode may be obtained through calculation or inherited from a cross-component model parameter(s) of a reconstructed block. Specifically, related syntax elements are illustrated in Table 5.

Table 5

| intraChromaFusionMode() { | |
|---|---|
| **chromaFusionFlag** | ae(v) |
| if ( chromaFusionFlag) | |
| **chromaFusionType** | ae(v) |
| if ( chromaFusionType) | |
| **chromaFusionCclm** | ae(v) |
| isChromaFusion = chromaFusionFlag + chromaFusionType + chromaFusionCclm | |
| if ( isChromaFusion == 1) { | |
| **chromaFusionMrgFlag** | ae(v) |
| if ( chromaFusionMrgFlag) | |
| **chromaFusionMrgIdx** | ae(v) |
| } | |
| } | |

When the value of the flag isChromaFusion is 1, a flag chromaFusionMrgFlag is additionally introduced to indicate whether a chroma fusion merge mode is used. If the flag chromaFusionMrgFlag is 1, a candidate index flag chromaFusionMrgIdx is further parsed to indicate a position of a referenced linear-model parameter in a candidate list, so that an inherited linear-model parameter ccmParam can be determined. A relationship between the value of chroma-FusionMrgIdx and a coded bin is illustrated in Table 6.

Table 6

| Value | Binary data (bin) |
|---|---|
| 0 | 0 |
| 1 | 10 |
| 2 | 110 |
| 3 | 1110 |
| 4 | 11110 |
| 5 | 11111 |

Each bin of the index flag chromaFusionMrgIdx may be context-coded with a separate context model.

It may be noted that, a candidate list in the chroma fusion merge mode is constructed in the same manner as the candidate list in the CCMerge mode, which will not be elaborated herein.

However, in a cross-component model merge mode, a flag needs to be encoded at a coding unit (CU) level by default in the related art, to determine whether the cross-component model merge mode is used for the current block. When a usage rate of the cross-component model merge mode is not high, additional bit overhead is usually incurred, and thus the coding efficiency is reduced.

Based on this, a coding method is provided in embodiments of the disclosure. At both the encoding end and the decoding end, when a weighted chroma fusion mode is used for a current block, whether a chroma fusion merge mode is enabled for the current block needs to be further determined. A value of first syntax flag information needs to be coded only when the chroma fusion merge mode is enabled for the current block. Then, when the first syntax flag information indicates that the chroma fusion merge mode is used for the current block, a parameter candidate list may be constructed, and a model parameter of the current block is obtained therefrom according to an index value. The model parameter is used for determining a first prediction value of the current block in a cross-component prediction mode. As such, when the weighted chroma fusion mode is used for the current block, considering a usage rate of the chroma fusion merge mode, the determination of whether the chroma fusion merge mode is enabled for the current block is added herein. The value of the first syntax flag information needs to be coded only when the chroma fusion merge mode is enabled for the current block. In this way, codewords can be effectively saved, the efficiency of chroma prediction can also be improved, and thus the coding efficiency can be further improved.

Embodiments of the disclosure will be elaborated below with reference to the accompanying drawings.

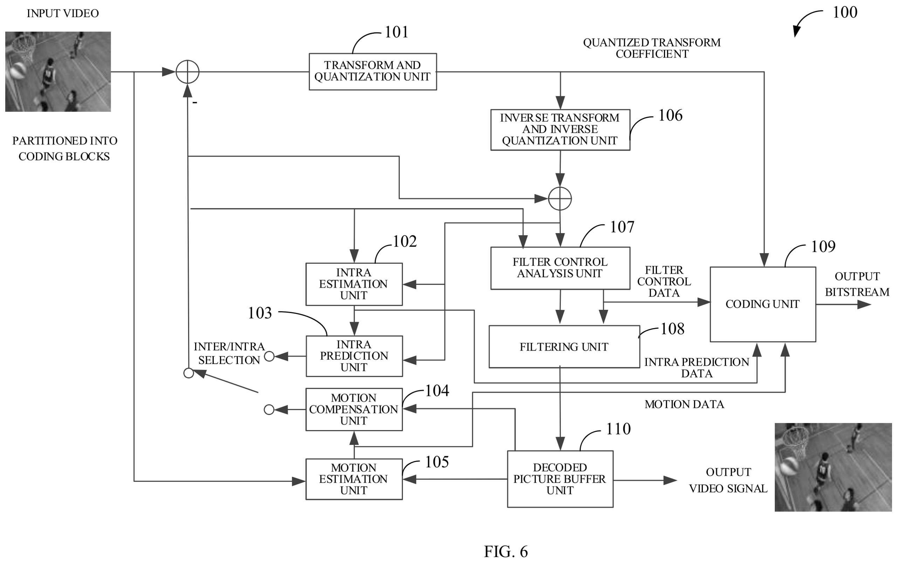

FIG. 6 is a schematic block diagram of an encoder provided in embodiments of the disclosure. As illustrated in FIG. 6, the encoder 100 includes units such as a transform and quantization unit 101, an intra estimation unit 102, an intra prediction unit 103, a motion compensation unit 104, a motion estimation unit 105, an inverse transform and inverse quantization unit 106, a filter control analysis unit 107, a filtering unit 108, an encoding unit 109, and a decoded picture buffer unit 110. The filtering unit 108 may implement deblocking filtering and sample adaptive offset (SAO) filtering, and the encoding unit 109 may implement header information coding and context-based adaptive binary arithmetic coding (CABAC). An input raw video signal may be partitioned by a coding tree unit (CTU) to obtain a video encoding block. The video encoding block is transformed by the transform and quantization unit 101 processing residual sample information obtained after intra or inter prediction, which includes transforming the residual information from the sample domain to the transform domain and quantizing the resulting transform coefficients to further reduce the bit rate. The intra estimation unit 102 and intra prediction unit 103 are configured to perform intra prediction on the video encoding block. Specifically, the intra estimation unit 102 and intra prediction unit 103 are configured to determine an intra prediction mode to be used for encoding the video encoding block. The motion compensation unit 104 and motion estimation unit 105 are configured to perform inter prediction coding of the received video encoding block relative to one or more reference blocks within one or more reference pictures, to provide temporal prediction information. The motion estimation performed by the motion estimation unit 105 involves generating a motion vector(s), which can estimate the motion of the video encoding block. Then the motion compensation unit 104 performs motion compensation based on the motion vector determined by the motion estimation unit 105. After determining the intra prediction mode, the intra prediction unit 103 is further configured to provide the selected intra prediction data to the encoding unit 109, and the motion estimation unit 105 also transmits the calculated motion vector data to the encoding unit 109. In addition, the inverse transform and inverse quantization unit 106 is configured to reconstruct the video encoding block by reconstructing a residual block in the sample domain. The reconstructed residual block is then filtered by the filter control analysis unit 107 and filtering unit 108 to remove blocking effect artifacts, and then the reconstructed residual block is added to a prediction block within a picture in the decoded picture buffer unit 110 to produce the reconstructed video encoding block. The encoding unit 109 is configured to encode various encoding parameters and quantized transform coefficients. In the CABAC-based encoding algorithm, context content may be based on neighbouring coding blocks and may be used to encode information indicating the determined intra prediction mode, outputting the bitstream of the video signal. The decoded picture buffer unit 110 is configured to store the reconstructed video encoding blocks for prediction reference. As the video picture encoding progresses, new reconstructed video encoding blocks are continuously generated and stored in the decoded picture buffer unit 110.

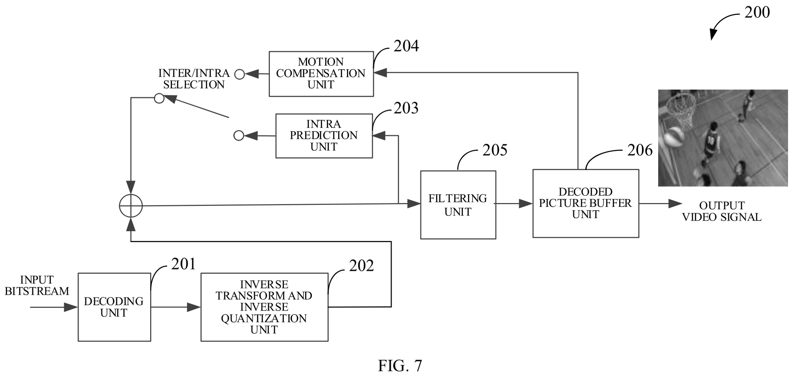

FIG. 7 is a schematic block diagram of a decoder provided in embodiments of the disclosure. As illustrated in FIG. 7, the decoder 200 includes a decoding unit 201, an inverse transform and inverse quantization unit 202, an intra prediction unit 203, a motion compensation unit 204, a filtering unit 205, a decoded picture buffer unit 206, etc. The decoding unit 201 may implement header information decoding and CABAC decoding, and the filtering unit 205 may implement deblocking filtering and SAO filtering. The input video signal is encoded as illustrated in FIG. 6 and output as a bitstream. The bitstream is then input to the decoder 200 and first passes through the decoding unit 201 to obtain the decoded transform coefficients. The inverse transform and inverse quantization unit 202 processes these transform coefficients to generate residual blocks in the sample domain. The intra prediction unit 203 may produce prediction data for the current video decoding block based on the determined intra prediction mode and data of previously decoded blocks from the current picture. The motion compensation unit 204 determines the prediction information for the video decoding block by parsing motion vectors and other related syntax elements, and uses this information to generate the prediction block for the video decoding block. The decoded video block is formed by summing the residual block from the inverse transform and inverse quantization unit 202 and the corresponding prediction block generated by the intra prediction unit 203 or motion compensation unit 204. The decoded video signal is then passed through the filtering unit 205 to remove blocking artifacts and thus improve video quality. The decoded video block is then stored in the decoded picture buffer unit 206, which stores reference pictures for subsequent intra prediction or motion compensation and is further configured to output the video signal, that is, the recovered original video signal is obtained.

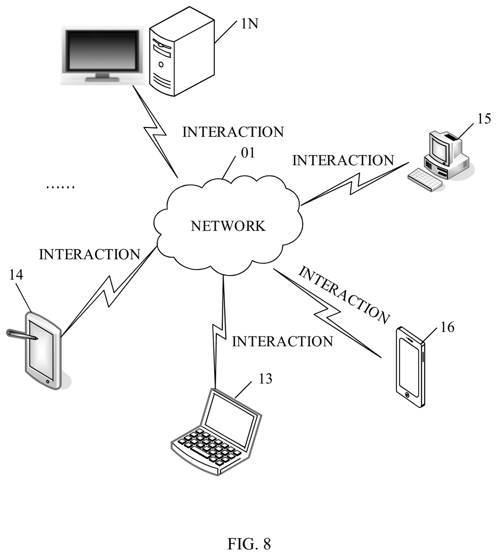

Further, a network architecture of a coding system including an encoder and a decoder is further provided in embodiments of the disclosure. FIG. 8 is a schematic diagram of a network architecture of a coding system provided in embodiments of the disclosure. As illustrated in FIG. 8, the network architecture includes one or more electronic devices 13 to 1N and a communication network 01, where the electronic devices 13 to 1N can perform video interaction through the communication network 01. The electronic device may be various types of devices having video coding functions during implementation. For example, the electronic device may include a mobile phone, a tablet computer, a personal computer, a personal digital assistant, a navigator, a digital phone, a video phone, a television, a sensing device, a server, etc., which is not limited in embodiments of the disclosure. Herein, the decoder or the encoder described in the embodiments of the disclosure may be the electronic device.

It may be noted that, the method disclosed in embodiments of disclosure is mainly applied in the prediction as illustrated in FIG. 6 and the prediction as illustrated in FIG. 7. In other words, embodiments of disclosure may be applied to the encoder, to the decoder, or even to both the encoder and decoder, which is not limited in embodiments of the disclosure. In addition, the prediction herein includes intra prediction and inter prediction.

It may be further noted that, at an encoding end, a "current block" refers to a current encoding block for which chroma prediction is to be performed, and at a decoding end, a "current block" refers to a current decoding block for which chroma prediction is to be performed. Herein, the current block may be a coding unit, a CTU, or even a prediction unit or a transform unit, which is not limited herein.

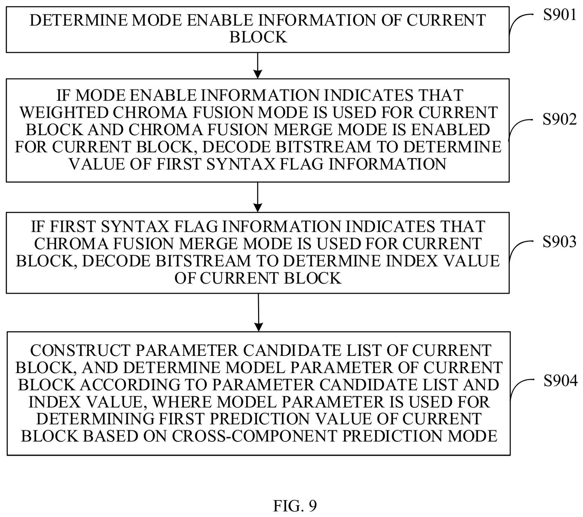

In an embodiment of the disclosure, reference is made to FIG. 9 which is a schematic flowchart of a decoding method provided in embodiments of the disclosure. As illustrated in FIG. 9, the method may include the following.

At S901, mode enable information of a current block is determined.

At S902, if the mode enable information indicates that a weighted chroma fusion mode is used for the current block and a chroma fusion merge mode is enabled for the current block, a bitstream is decoded to determine a value of first syntax flag information.

It may be noted that, the decoding method in embodiments of the disclosure is applied to a decoder. In addition, the decoding method may specifically refer to a chroma prediction method. In a chroma prediction mode, improvements mainly focus on the technology of a chroma fusion mode, and more specifically, a merge mode can be provided for cross-component prediction in the chroma fusion mode. Furthermore, in order to avoid bit overhead caused by a low usage rate of this technology, the determination of whether the chroma fusion merge mode is enabled for the current block is added herein.

It may be further noted that in embodiments of the disclosure, the mode enable information can be used for determining whether the weighted chroma fusion mode is used for the current block and whether the chroma fusion merge mode is enabled for the current block. The value of the first syntax flag information needs to be determined through decoding only when the mode enable information indicates that the weighted chroma fusion mode is used for the current block and the chroma fusion merge mode is enabled for the current block. That is, in this case, the chroma fusion merge mode needs to be enabled.

In some embodiments, the mode enable information of the current block may be determined as follows. The bitstream is decoded to determine a value of second syntax flag information. If the second syntax flag information indicates that the weighted chroma fusion mode is used for the current block, an enable signal of the current block is determined. The enable signal indicates whether the chroma fusion merge mode is enabled for the current block.

It may be noted that in embodiments of the disclosure, the second syntax flag information indicates whether the weighted chroma fusion mode is used for the current block, and the second syntax flag information may be represented by isChromaFusion. In addition, different values of the second syntax flag information correspond to different mode indications.

In some embodiments, the method may further include the following. If the value of the second syntax flag information is a first value, it is determined that the second syntax flag information indicates that a chroma fusion mode is not used for the current block. If the value of the second syntax flag information is a second value, it is determined that the second syntax flag information indicates that the weighted chroma fusion mode is used for the current block. If the value of the second syntax flag information is a third value, it is determined that the second syntax flag information indicates that a single-linear-model chroma fusion mode is used for the current block. If the value of the second syntax flag information is a fourth value, it is determined that the second syntax flag information indicates that a multiple-linear-model chroma fusion mode is used for the current block.

In embodiments of the disclosure, the first value, the second value, the third value, and the fourth value are different from each other. Herein, the first value, the second value, the third value, and the fourth value may be in parameter form or in numerical form. Specifically, the second syntax flag information herein may be parameters written in a profile, or may be a value of a flag, which is not limited herein. Exemplarily, in a specific implementation, the first value may be 0, the second value may be 1, the third value may be 2, and the fourth value may be 3.

That is to say, in embodiments of the disclosure, if the value of the second syntax flag information is 0, it may be determined that the chroma fusion mode is not used for the current block. If the value of the second syntax flag information is 1, it may be determined that the weighted chroma fusion mode is used for the current block. If the value of the second syntax flag information is 2 or 3, it may be determined that a linear-model chroma fusion mode is used for the current block. In particular, if the value of the second syntax flag information is 2, it may be determined that the single-linear-model chroma fusion mode is used for the current block, and if the value of the second syntax flag information is 3, it may be determined that the multiple-linear-model chroma fusion mode is used for the current block.

It may be further noted that in embodiments of the disclosure, for the mode enable information of the current block, if a value of isChroma Fusion is 1, the enable signal of the current block needs to be further determined, where the enable signal may be represented by hasChromaFusionFlag(). The first syntax flag information needs to be decoded only when the enable signal indicates that the chroma fusion merge mode is enabled for the current block. Otherwise, if the enable signal indicates that the chroma fusion merge mode is disabled for the current block, the first syntax flag information no longer needs to be decoded.

In some embodiments, the enable signal of the current block may be determined as follows. The enable signal of the current block is determined according to information of a neighbouring block of the current block.

In embodiments of the disclosure, the enable signal may be determined according to the information of the neighbouring block of the current block, or the enable signal may be determined according to some other information, so as to determine whether the chroma fusion merge mode is enabled for the current block, which is not limited herein.

Further, taking the information of the neighbouring block of the current block as an example, in some embodiments, the enable signal of the current block may be determined according to the information of the neighbouring block of the current block as follows. Mode information of the neighbouring block of the current block is determined. The enable signal of the current block is determined according to the mode information of the neighbouring block.

Herein, the neighbouring block may include at least one of: at least one left neighbouring block on the left of the current block, or at least one top neighbouring block on the top of the current block.

That is to say, in embodiments of the disclosure, the number (quantity) of neighbouring blocks may be 2, or may be 3, 4, 5, etc., which is not limited herein. In addition, among these neighbouring blocks, there may be two left neighbouring blocks and one top neighbouring block; or, there may be one left neighbouring block and two top neighbouring blocks; or, there may be two left neighbouring blocks and two top neighbouring blocks, etc., where the number of left neighbouring blocks may be the same as or different from the number of top neighbouring blocks, which is not limited herein.

In a specific implementation, there is one left neighbouring block and one right neighbouring block. Exemplarily, taking FIG. 5 as an example, the left neighbouring block is a block A1, and the top neighbouring block is a block B1. Therefore, the enable signal of the current block can be determined according to mode information of the block A1 and the block B1.

In some embodiments, the enable signal of the current block may be determined according to the mode information of the neighbouring block as follows. If at least one of the mode information of the neighbouring block is a non-cross-component prediction mode, it is determined that the enable signal is a first value. If each of the mode information of the neighbouring block is a cross-component prediction mode, it is determined that the enable signal is a second value.

In some embodiments, the enable signal of the current block may be determined according to the mode information of the neighbouring block as follows. If each of the mode information of the neighbouring block is a non-cross-component prediction mode, it is determined that the enable signal is a first value. If at least one of the mode information of the neighbouring block is a cross-component prediction mode, it is determined that the enable signal is a second value.

It may be noted that in embodiments of the disclosure, the mode information of the neighbouring block may be the cross-component prediction mode or the non-cross-component prediction mode. For example, if the neighbouring block includes a block A1 and a block B1, there may be the following four cases for the mode information of the neighbouring block.

(1) The block A1 is in the non-cross-component prediction mode, and the block B1 is in the non-cross-component prediction mode.
(2) The block A1 is in the non-cross-component prediction mode, and the block B1 is in the cross-component prediction mode.
(3) The block A1 is in the cross-component prediction mode, and the block B1 is in the non-cross-component prediction mode.

(4) The block A1 is in the cross-component prediction mode, and the block B1 is in the cross-component prediction mode.

As such, in embodiments of the disclosure, for the enable signal, in a specific implementation, if the at least one of the mode information of the neighbouring block is the non-cross-component prediction mode, that is, the above case (1), (2), or (3) is satisfied, then the enable signal may be the first value; or, if each of the mode information of the neighbouring block is the cross-component prediction mode, that is, the above case (4) is satisfied, then the enable signal may be the second value.

For the enable signal, in another specific implementation, if each of the mode information of the neighbouring block is the non-cross-component prediction mode, that is, the above case (1) is satisfied, then the enable signal may be the first value; or, if the at least one of the mode information of the neighbouring block is the cross-component prediction mode, that is, the above case (2), (3), or (4) is satisfied, then the enable signal may be the second value.

Further, in some embodiments, the method may further include the following. If the enable signal is a first value, it is determined that the chroma fusion merge mode is disabled for the current block. If the enable signal is a second value, it is determined that the chroma fusion merge mode is enabled for the current block.

It may be noted that in embodiments of the disclosure, the first value is different from the second value. Herein, the first value may be set to 1, and the second value may be set to 0; or, the first value may be set to 0, and the second value may be set to 1; or, the first value may be set to true, and the second value may be set to false; or, the first value may be set to false, and the second value may be set to true, which is not limited herein. Exemplarily, in a specific implementation, the first value may be 0, and the second value may be 1.

It may be further noted that in embodiments of the disclosure, the enable signal may be represented by hasChromaFusionFlag(). Herein, hasChromaFusionFlag() does not need to be signalled into a bitstream, and accordingly, the decoding end does not need to decode the bitstream to determine a value of hasChromaFusionFlag(). Exemplarily, if the mode information of the neighbouring block satisfies the above case (1), (2), or (3), that is, at least one of the mode information is the non-cross-component prediction mode, then the returned enable signal may be 0; or, if the mode information of the neighbouring block satisfies the above case (4), that is, each of the mode information is the cross-component prediction mode, then the returned enable signal may be 1. Alternatively, if the mode information of the neighbouring block satisfies the above case (1), that is, each of the mode information is the non-cross-component prediction mode, then the returned enable signal may be 0; or, if the mode information of the neighbouring block satisfies the above case (2), (3), or (4), that is, at least one of the mode information is the cross-component prediction mode, then the returned enable signal may be 1.

In some embodiments, the method may further include the following. If the mode enable information indicates that the weighted chroma fusion mode is used for the current block and the chroma fusion merge mode is disabled for the current block, a model parameter of the current block is determined according to a reference sample of the current block. The model parameter is used for determining a first prediction value of the current block based on a cross-component prediction mode.

Further, in some embodiments, the method may further include the following. If the value of the second syntax flag information is the second value and the enable signal is the first value, it is determined that that the mode enable information indicates that the weighted chroma fusion mode is used for the current block and the chroma fusion merge mode is disabled for the current block. If the value of the second syntax flag information is the second value and the enable signal is the second value, it is determined that the mode enable information indicates that the weighted chroma fusion mode is used for the current block and the chroma fusion merge mode is enabled for the current block.

That is to say, in embodiments of the disclosure, if a value of isChromaFusion is 1 and hasChromaFusion Flag() is 0, it may be determined that the mode enable information indicates that the weighted chroma fusion mode is used for the current block and the chroma fusion merge mode is disabled for the current block. In this case, the value of the first syntax flag information is no longer decoded, and the model parameter of the current block is directly determined according to the reference sample of the current block. Otherwise, if the value of isChromaFusion is 1 and hasChromaFusion Flag() is also 1, it may be determined that the mode enable information indicates that the weighted chroma fusion mode is used for the current block and the chroma fusion merge mode is enabled for the current block. In this case, the value of the first syntax flag information needs to be decoded, then an index value of the current block needs to be further decoded, and then the model parameter of the current block is determined.

As such, in the cross-component model merge technology, if a usage rate of the chroma fusion merge mode is not high, whether to enable the chroma fusion merge mode may be adaptively determined according to the information of the neighbouring block. The value of the first syntax flag information may be further decoded only when the chroma fusion merge mode is enabled for the current block, thereby effectively saving codewords and improving the coding efficiency.

At S903, if the first syntax flag information indicates that the chroma fusion merge mode is used for the current block, the bitstream is decoded to determine an index value of the current block.

It may be noted that in embodiments of the disclosure, the first syntax flag information indicates whether the chroma fusion merge mode is used for the current block. In some embodiments, the method may further include the following. If the value of the first syntax flag information is a first value, it is determined that the first syntax flag information indicates that the chroma fusion merge mode is not used for the current block. If the value of the first syntax flag information is a second value, it is determined that the first syntax flag information indicates that the chroma fusion merge mode is used for the current block.

In embodiments of the disclosure, the first value is different from the second value. Herein, the first value and the second value may be in parameter form or in numerical form. Specifically, the first syntax flag information herein may be parameters written in a profile, or may be a value of a flag, which is not limited herein.

In embodiments of the disclosure, the first syntax flag information may be represented by chromaFusionMrgFlag. The first value may be set to 1, and the second value may be set to 0; or, the first value may be set to 0, and the second value may be set to 1; or, the first value may be set to true, and the second value may be set to false; or, the first value may be set to false, and the second value may be set to true, which is not limited herein. Exemplarily, in a specific implementation, the first value may be 0, and the second value may be 1.

That is to say, in embodiments of the disclosure, for example, when the first syntax flag information is a flag, if the decoded value of chromaFusionMrgFlag is 0, then it may be determined that the chroma fusion merge mode is not used for the current block; or, if the decoded value of chromaFusionMrgFlag is 1, then it may be determined that the chroma fusion merge mode is used for the current block.

Further, in some embodiments, the bitstream may be decoded to determine the value of the first syntax flag information as follows. The bitstream is decoded based on a context model, to determine the value of the first syntax flag information.

In embodiments of the disclosure, for the first syntax flag information chromaFusionMrgFlag, a value of chromaFusionMrgFlag can be determined through context decoding. In a specific implementation, the method may further include the following. The context model is determined according to information of a neighbouring block of the current block.

In embodiments of the disclosure, the information of the neighbouring block of the current block may refer to information such as whether the neighbouring block is in a cross-component prediction mode. That is to say, in the weighted chroma fusion mode, according to the information such as whether the neighbouring block is in the cross-component prediction mode, different context models can be constructed for encoding/decoding the first syntax flag information chromaFusionMrgFlag.

It may be further noted that in embodiments of the disclosure, if the first syntax flag information chromaFusionMrgFlag indicates that the chroma fusion merge mode is used for the current block, the index value of the current block needs to be further decoded. The index value may indicate an index of a group of candidate model parameters referenced by the current block in a parameter candidate list, i.e., a position of the group of candidate model parameters referenced by the current block in the parameter candidate list, so that a corresponding model parameter can be further determined subsequently.

Further, in some embodiments, the bitstream may be decoded to determine the index value of the current block as follows. The bitstream is decoded based on truncated binary code, to determine the index value of the current block.

That is to say, in embodiments of the disclosure, the index value may be represented by chromaFusionMrgIdx. Herein, the index value chromaFusionMrgIdx can be decoded using the truncated binary code and shared by two chroma channels Cb/Cr. A correspondence between a value of the index value and binary code (binary data) is illustrated in Table 6 above.

It may be further noted that in embodiments of the disclosure, each bin of the index value chromaFusionMrgIdx is context-decoded using separate context information, to determine the index value of the current block.

At S904, a parameter candidate list of the current block is constructed, and a model parameter of the current block is determined according to the parameter candidate list and the index value, where the model parameter is used for determining a first prediction value of the current block based on a cross-component prediction mode.

It may be noted that in embodiments of the disclosure, if the first syntax flag information indicates that the chroma fusion merge mode is used for the current block, the index value of the current block needs to be decoded. Then, the model parameter of the current block is further determined according to the constructed parameter candidate list and the index value.

It may be further noted that in embodiments of the disclosure, if the first syntax flag information indicates that the chroma fusion merge mode is not used for the current block, then in some embodiments, the method may further include the following. If the first syntax flag information indicates that the chroma fusion merge mode is not used for the current block, the model parameter of the current block is determined according to a reference sample of the current block. The model parameter is used for determining the first prediction value of the current block based on the cross-component prediction mode.

That is to say, in embodiments of the disclosure, if the value of the first syntax flag information chromaFusionMrgFlag is 0, that is, the chroma fusion merge mode is not used for the current block, then the index value of the current block no longer needs to be decoded. In this case, the model parameter of the current block can be calculated according to the existing technical solution, and can be used for generating a chroma prediction value based on the cross-component prediction mode.

In some embodiments, the method may further include the following. The reference sample of the current block is determined according to a neighbouring region of the current block. The neighbouring region of the current block includes at least one of: a left neighbouring region of the current block or a top neighbouring region of the current block.

It may be noted that in embodiments of the disclosure, the reference sample of the current block may be obtained based on the left neighbouring region of the current block, i.e., a CCLM-L mode, and in this case, only the left neighbouring region of the current block is used for calculating the model parameter. Alternatively, the reference sample of the current block may be obtained based on the top neighbouring region of the current block, i.e., a CCLM-T mode, and in this case, only the top neighbouring region of the current block is used for calculating the model parameter. Alternatively, the reference sample of the current block may be obtained based on both the left neighbouring region and the top neighbouring region of the current block, i.e., a cross-component linear model left-top (CCLM-LT) mode, and in this case, the left neighbouring region and the top neighbouring region of the current block are used for jointly calculating the model parameter. There is no limitation in this regard herein.

It may be further noted that in embodiments of the disclosure, determining the reference sample of the current block according to the neighbouring region of the current block may refer to: determining the reference sample by filtering samples in the neighbouring region. In some embodiments, for filtering the samples in the neighbouring region, the filtering may be performed according to positions of the samples, or the filtering may be performed according to colour component intensities, so that the reference sample of the current block can be determined according to filtered samples.

Specifically, in embodiments of the disclosure, a first reference sample set is formed according to the samples in the neighbouring region of the current block, and then the reference sample can be determined by filtering the first reference sample set. Herein, the number of reference samples may be $N$, where $N$ is an integer greater than zero. In other words, $N$ reference samples can be selected from the samples in the neighbouring region. Generally, a value of $N$ may be 4, but is not limited thereto.

It may be further noted that in embodiments of the disclosure, among the samples in the neighbouring region of the current block, there may be some unimportant samples (for example, these samples are in weak correlation) or some abnormal samples. To ensure the accuracy of prediction, these samples need to be removed, so as to obtain valid reference samples.

In some embodiments, the model parameter of the current block may be determined according to the reference sample of the current block as follows. A reconstructed luma value and a reconstructed chroma value of the reference sample are determined. The model parameter of the current block is obtained by performing model parameter calculation according to the reconstructed luma value and the reconstructed chroma value.

Exemplarily, if the chroma fusion merge mode is not used for the current block, then for derivation of model parameters, a method for deriving model parameters constructed based on least squares regression is provided herein. Specifically, the model parameters can be derived by minimizing the regression error of reconstructed luma values and reconstructed chroma values of reference samples around the current block, for example, $a$ and $b$ illustrated in the following formula.

$$\begin{cases} a = \dfrac{2N \cdot \sum \left( L(n) \cdot C(n) \right) - \sum L(n) \cdot \sum C(n)}{2N \cdot \sum \left( L(n) \cdot L(n) \right) - \sum L(n) \cdot \sum L(n)} \\ b = \dfrac{\sum C(n) - a \cdot \sum L(n)}{2N} \end{cases} \tag{5}$$

$L(n)$ represents reconstructed luma values of reference samples corresponding to a left neighbouring region and a top neighbouring region after down-sampling, $C(n)$ represents reconstructed chroma values of the reference samples corresponding to the left neighbouring region and the top neighbouring region, and $N$ is the number of reference samples.

It may be understood that in embodiments of the disclosure, the parameter candidate list of the current block may be constructed as follows. Neighbouring blocks of the current block are determined. If the cross-component prediction mode is used for at least one block among the neighbouring blocks, a model parameter of each of the at least one block is determined to obtain at least one group of first candidate model parameters. The at least one group of first candidate model parameters is filled in the parameter candidate list.

It may be noted that in embodiments of the disclosure, the neighbouring block may include: a block spatially neighbouring to the current block and/or a block temporally neighbouring to the current block. That is to say, the neighbouring block herein may be a spatial neighbouring block, or may be a temporal neighbouring block. The spatial neighbouring block and the current block are located in the same picture, and the temporal neighbouring block and the current block are located in different pictures. Exemplarily, in case of inter prediction, the neighbouring block in this case may refer to a temporal neighbouring block located in a reference picture.

It may be further noted that, taking spatial neighbouring as an example, positions of the neighbouring blocks of the current block may be illustrated in FIG. 4, and a checking order may be B1->A1->B0->A0 ->B2. Then, the at least one group of first candidate model parameters is determined in this order.

Further, after the at least one group of first candidate model parameters is filled in the parameter candidate list, if the parameter candidate list is not full, then in some embodiments, the parameter candidate list of the current block may be further constructed as follows. Non-neighbouring blocks of the current block are determined. If the cross-component prediction mode is used for at least one block among the non-neighbouring blocks, a model parameter of each of the at least one block is determined to obtain at least one group of second candidate model parameters. The at least one group of second candidate model parameters is further filled in the parameter candidate list.

It may be further noted that in embodiments of the disclosure, the number of candidates in the parameter candidate list is represented by NUM_LMC_MERGE_CANDS. By default, a value of NUM_LMC_MERGE_CANDS is set to 6. If the number of first candidate model parameters is less than 6, it indicates that the parameter candidate list is not full. In this case, the at least one group of second candidate model parameters needs to be determined according to the non-neighbouring blocks of the current block, and then the at least one group of second candidate model parameters is filled in the parameter candidate list. Exemplarily, positions of spatial non-neighbouring blocks of the current block may be illustrated in FIG. 5.

Further, after the at least one group of second candidate model parameters is filled in the parameter candidate list, if the parameter candidate list is not full, then in some embodiments, the parameter candidate list of the current block may be further constructed as follows. At least one group of third candidate model parameters is determined according to preset parameter information. The at least one group of third candidate model parameters is further filled in the parameter candidate list.

It may be noted that in embodiments of the disclosure, the preset parameter information may at least include a preset value of a first model parameter, and the preset value of the first model parameter is at least one of: 0, 1/8, -1/8, 2/8, -2/8, or 3/8.

It may be further noted that in embodiments of the disclosure, the model parameter of the current block may include a first model parameter and a second model parameter. The first model parameter may indicate a scaling parameter when the cross-component prediction mode is used for the current block, and the second model parameter may indicate an offset parameter when the cross-component prediction mode is used for the current block.

That is to say, after the parameter candidate list is constructed according to the neighbouring blocks and non-neighbouring blocks of the current block, if the constructed parameter candidate list is not full, CCLM candidates with default scaling parameters may be considered. The default scaling parameters may be {0, 1/8, -1/8, 2/8, -2/8, 3/8}. It may be noted that, these default scaling parameters may be added to the parameter candidate list in an order of 0, 1/8, -1/8, 2/8, -2/8, and 3/8.

It may be further understood that in embodiments of the disclosure, the cross-component prediction mode may at least include one of: a CCLM mode, an MMLM mode, a CCCM mode, a GLM mode, a chroma fusion mode, or a CCMerge mode. In other words, an inheritance mode herein may be any cross-component prediction mode among the CCLM mode, the MMLM mode, the CCCM mode, the GLM mode, the chroma fusion mode, the CCMerge mode, and the like, which is not limited in this regard.

In some embodiments, the model parameter of the current block may be determined according to the parameter candidate list and the index value as follows. A group of candidate model parameters corresponding to the index value is determined in the parameter candidate list. A candidate model parameter corresponding to the current block and an inheritance mode of the current block are determined according to the group of candidate mode parameters. The model parameter of the current block is determined according to the candidate model parameter and the inheritance mode of the current block.

Further, in some embodiments, the model parameter of the current block may be determined according to the candidate model parameter and the inheritance mode of the current block as follows. If the inheritance mode of the current block is the CCLM mode, it is determined that a first model parameter in the candidate model parameter is inherited by the current block. If the inheritance mode of the current block is the MMLM mode, it is determined that a classification threshold and the first model parameter in the candidate model parameter are inherited by the current block. If the inheritance mode of the current block is the CCCM mode, it is determined that the classification threshold and a convolution parameter in the candidate model parameter are inherited by the current block. If the inheritance mode of the current block is the GLM mode, when the GLM mode is 3-parameter mode, it is determined that a gradient index, the first model parameter, and a second model parameter in the candidate model parameter are inherited by the current block; or when the GLM mode is 2-parameter mode, it is determined that the first model parameter in the candidate model parameter is inherited by the current block. If the inheritance mode of the current block is the chroma fusion mode, when the chroma fusion mode is the chroma fusion merge mode, a prediction mode inherited by the current block is determined, and the model parameter of the current block is determined according to the prediction mode inherited by the current block and the candidate model parameter; or when the chroma fusion mode is not the chroma fusion merge mode, it is determined that the MMLM mode is used for the current block, and it is determined that the classification threshold and the first model parameter in the candidate model parameter are inherited by the current block. If the inheritance mode of the current block is the CCMerge mode, a prediction mode inherited by the current block is determined, and the model parameter of the current block is determined according to the prediction mode inherited by the current block and the candidate model parameter.

Specifically, in embodiments of the disclosure, sources of cross-component model parameters are introduced herein, which can provide multiple choices for the cross-component prediction mode. An inheritance rule may be as follows.

1) In terms of inheriting the CCLM mode, only a scaling parameter is inherited, and an offset parameter is re-calculated.
2) In terms of inheriting the MMLM mode, the scaling parameter and a classification threshold may be inherited, and the offset parameter is re-calculated. However, if no neighbouring reconstructed samples are available in a class, the offset parameter is directly inherited.
3) In terms of inheriting the CCCM mode, all convolution parameters and the classification threshold are inherited.
4) In terms of inheriting the GLM mode, if GLM is 3-parameter mode, all gradient indexes and model parameters are inherited. Otherwise, if GLM is 2-parameter mode, only the scaling parameter is inherited, and the offset parameter needs to be re-calculated.
5) In terms of inheriting the chroma fusion mode, if the chroma fusion mode is not the chroma fusion merge mode, MMLM parameters derived in the cross-component prediction are inherited and used as candidates; or, if the chroma fusion mode is the chroma fusion merge mode, an inheritance mode depends on an inherited candidate mode.
6) In terms of inheriting the CCMerge mode, an inheritance mode depends on an inherited candidate mode.

It may be further understood that in embodiments of the disclosure, the size and construction of the parameter candidate list may share a rule of the CCMerge mode, or may use a separate set of rules rather than share the rule of the CCMerge mode, which is not limited herein. As such, after the model parameter of the current block is determined according to the above inheritance rule, a target prediction value of the current block can be further determined.

In embodiments of the disclosure, if the value of the second syntax flag information isChromaFusion is 1, that is, the weighted chroma fusion mode is used for the current block, then for the target prediction value of the current block, in some embodiments, the method further includes the following. The first prediction value of the current block based on the cross-component prediction mode is determined. A second prediction value of the current block based on a non-cross-component prediction mode is determined. The target prediction value of the current block is determined according to the first prediction value and the second prediction value.

It may be noted that in embodiments of the disclosure, the first prediction value may be obtained, according to the determined model parameter, by performing chroma prediction using the cross-component prediction mode. Exemplarily, the cross-component prediction mode herein may be a CCLM mode, an MMLM mode, a CCCM mode, etc., which is not limited herein.

It may be further noted that in embodiments of the disclosure, the second prediction value may be obtained by performing chroma prediction using the non-cross-component prediction mode. Exemplarily, the non-cross-component prediction mode herein may be a planar mode, a DC mode, a DIMD mode, etc., which is not limited herein.

It may be further noted that in embodiments of the disclosure, the processing for the first prediction value and the second prediction value may be performed in parallel or in sequence. In addition, when the processing for the first prediction value and the second prediction value is performed in sequence, first proceed to determining the first prediction value, and then proceed to determining the second prediction value; or, first proceed to determining the second prediction value, and then proceed to determining the first prediction value, which is not limited herein.

Further, in embodiments of the disclosure, if the weighted chroma fusion mode is used for the current block, a final target prediction value may be derived according to the first prediction value corresponding to the cross-component prediction mode and the second prediction value corresponding to the non-cross-component prediction mode. In some embodiments, the target prediction value of the current block may be determined according to the first prediction value and the second prediction value as follows. A first shift factor is determined. An offset value of the current block is determined according to the first shift factor. The target prediction value of the current block is determined according to the offset value, the first prediction value, and the second prediction value.

It may be noted that in embodiments of the disclosure, the first shift factor may be represented by "shift", and exemplarily, a value of "shift" is set to 2. In addition, the offset value of the current block may be set to 1 « (shift - 1).

In a specific implementation, the target prediction value of the current block may be determined according to the offset value, the first prediction value, and the second prediction value as follows. The target prediction value of the current block is determined by performing weighted calculation according to the offset value, the first prediction value, and the second prediction value.

In a more specific implementation, the target prediction value of the current block may be determined according to the offset value, the first prediction value, and the second prediction value as follows. A first weighting value and a second weighting value are determined. A third prediction value is determined by performing weighted calculation according to the first weighting value and the first prediction value as well as the second weighting value and the second prediction value, and a fourth prediction value is determined according to the offset value and the third prediction value. The target prediction value of the current block is determined by performing shift calculation on the fourth prediction value according to the first shift factor.

It may be noted that in embodiments of the disclosure, the first weighting value may be represented by w0, and the second weighting value may be represented by w1. Herein, w0 and w1 may be determined according to a prediction mode for a neighbouring block, and w0+w1=4 and shift=2. Exemplarily, when the cross-component prediction mode is used for both a left neighbouring block and a top neighbouring block, {w0, w1}={1, 3}. When the non-cross-component prediction mode is used for both the left neighbouring block and the top neighbouring block, {w0, w1}={3, 1}. In another case, {w0, w1}={2, 2}.

Exemplarily, pred0 represents the second prediction value of the current block based on the non-cross-component prediction mode, pred1 represents the first prediction value of the current block based on the cross-component prediction mode, and pred represents the final target prediction value of the current block. A specific prediction process in this mode is as follows.

$$pred = (w0 * pred0 + w1 * pred1 + (1 \ll (shift - 1))) \gg shift \qquad (6)$$

It may be further understood that in embodiments of the disclosure, the value of the second syntax flag information may also be determined according to third syntax flag information, fourth syntax flag information, and fifth syntax flag information. The third syntax flag information may be represented by chromaFusionFlag, the fourth syntax flag information may be represented by chromaFusionType, and the fifth syntax flag information may be represented by chromaFusionCclm.

In some embodiments, the bitstream may be decoded to determine the value of the second syntax flag information as follows. The bitstream is decoded to determine a value of third syntax flag information. If the third syntax flag information indicates that a chroma fusion mode is used for the current block, the bitstream is decoded to determine a value of fourth syntax flag information. If the fourth syntax flag information indicates that a linear-model chroma fusion mode is not used for the current block, the value of the second syntax flag information is determined according to the value of the third syntax flag information and the value of the fourth syntax flag information.

In a possible embodiment, if the third syntax flag information indicates that the chroma fusion mode is not used for the current block, the method may further include the following. The value of the second syntax flag information is set to the value of the third syntax flag information.

In a possible embodiment, if the fourth syntax flag information indicates that the linear-model chroma fusion mode is not used for the current block, the method may further include the following. The value of the second syntax flag information is set to a sum of the value of the third syntax flag information and the value of the fourth syntax flag information.

In a possible embodiment, if the fourth syntax flag information indicates that the linear-model chroma fusion mode is used for the current block, the method may further include the following. The bitstream is decoded to determine a value of fifth syntax flag information. The value of the second syntax flag information is determined according to the value of the third syntax flag information, the value of the fourth syntax flag information, and the value of the fifth syntax flag information.

It may be noted that in embodiments of the disclosure, for decoding of the second syntax flag information, specific syntax elements may be illustrated in Table 3. The value of the second syntax flag information isChromaFusion may be equal to a sum of the third syntax flag information chromaFusionFlag, the fourth syntax flag information chromaFusionType, and the fifth syntax flag information chromaFusionCclm, as illustrated in the following formula.

$$isChromaFusion = chromaFusionFlag + chromaFusionType + chromaFusionCclm \quad (7)$$

It may be further noted that in embodiments of the disclosure, for determining the third syntax flag information, the fourth syntax flag information, and the fifth syntax flag information, in a specific implementation, the method may further include the following. If the value of the third syntax flag information is a first value, it is determined that the third syntax flag information indicates that the chroma fusion mode is not used for the current block. If the value of the third syntax flag information is a second value, it is determined that the third syntax flag information indicates that the chroma fusion mode is used for the current block.

In another specific implementation, the method may further include the following. If the value of the fourth syntax flag information is a first value, it is determined that the fourth syntax flag information indicates that the linear-model chroma fusion mode is not used for the current block. If the value of the fourth syntax flag information is a second value, it is determined that the fourth syntax flag information indicates that the linear-model chroma fusion mode is used for the current block.

In yet another specific implementation, the method may further include the following. If the value of the fifth syntax flag information is a first value, it is determined that the fifth syntax flag information indicates that a single-linear-model chroma fusion mode is used for the current block. If the value of the fifth syntax flag information is a second value, it is determined that the fifth syntax flag information indicates that a multiple-linear-model chroma fusion mode is used for the current block.

In embodiments of the disclosure, the first value is different from the second value. Herein, the first value and the second value may be in parameter form or in numerical form. Specifically, the third syntax flag information, the fourth syntax flag information, and the fifth syntax flag information each may be parameters written in a profile, or may be a value of a flag, which is not limited herein.

In embodiment of the disclosure, the first value may be set to 1, and the second value may be set to 0; or, the first value may be set to 0, and the second value may be set to 1; or, the first value may be set to true, and the second value may be set to false; or, the first value may be set to false, and the second value may be set to true, which is not limited herein. Exemplarily, in a specific implementation, the first value may be 0, and the second value may be 1.

Exemplarily, if the value of the third syntax flag information chromaFusionFlag is 0, the value of the second syntax flag information isChromaFusion is equal to the value of the third syntax flag information chromaFusionFlag. That is, the value of the second syntax flag information isChromaFusion is 0, which indicates that the chroma fusion mode is not used for the current block.

Exemplarily, if the value of the third syntax flag information chromaFusionFlag is 1, and the value of the fourth syntax flag information chromaFusionType is 0, then the value of the second syntax flag information isChromaFusion is equal to the sum of the third syntax flag information chromaFusionFlag and the fourth syntax flag information chroma-FusionType. That is, the value of the second syntax flag information isChromaFusion is 1, which indicates that the weighted chroma fusion mode is used for the current block.

Exemplarily, if the value of the third syntax flag information chromaFusionFlag is 1, and the value of the fourth syntax flag information chromaFusionType is 1, then the value of the second syntax flag information isChromaFusion is equal to the sum of the third syntax flag information chromaFusionFlag, the fourth syntax flag information chromaFusionType, and the fifth syntax flag information chromaFusionCclm. If the value of the fifth syntax flag information chromaFusionCclm is 0, the value of the second syntax flag information isChromaFusion is 2, which indicates that the single-linear-model chroma fusion mode is used for the current block. If the value of the fifth syntax flag information chromaFusionCclm is 1, the value of the second syntax flag information isChromaFusion is 3, which indicates that the multiple-linear-model chroma fusion mode is used for the current block.

Further, in some embodiments, the method may further include the following. The bitstream is decoded to determine a value of sixth syntax flag information. If the sixth syntax flag information indicates that a non-cross-component prediction mode is used for the current block, proceed to determining the mode enable information of the current block.

It may be noted that in embodiments of the disclosure, the chroma fusion mode is used as a supplementary solution to the non-cross-component prediction mode. If the non-cross-component prediction mode is used for the current block, whether the chroma fusion mode is used for the current block and whether the chroma fusion merge mode is enabled for the current block need to be further determined, and then whether the cross-component prediction mode needs to be fused with the non-cross-component prediction mode is determined.

Further, in some embodiments, the method may further include the following. The bitstream is decoded to determine a value of seventh syntax flag information. If the seventh syntax flag information indicates that the cross-component prediction mode is used for the current block, proceed to determining the mode enable information of the current block.

It may be noted that in embodiments of the disclosure, the chroma fusion mode may also be used as a supplementary solution to the cross-component prediction mode. If the cross-component prediction mode is used for the current block, whether the chroma fusion mode is used for the current block and whether the chroma fusion merge mode is enabled for the current block need to be further determined, and then whether the cross-component prediction mode needs to be fused with the non-cross-component prediction mode is determined.

Further, for the sixth syntax flag information, the method may further include the following. If the value of the sixth syntax flag information is a first value, it is determined that the sixth syntax flag information indicates that the non-cross-component prediction mode is not used for the current block. If the value of the sixth syntax flag information is a second value, it is determined that the sixth syntax flag information indicates that the non-cross-component prediction mode is used for the current block.

Further, for the seventh syntax flag information, the method may further include the following. If the value of the seventh syntax flag information is a first value, it is determined that the seventh syntax flag information indicates that the cross-component prediction mode is not used for the current block. If the value of the seventh syntax flag information is a second value, it is determined that the seventh syntax flag information indicates that the cross-component prediction mode is used for the current block.

It may be noted that in embodiments of the disclosure, the first value is different from the second value. Herein, the first value and the second value may be in parameter form or in numerical form. Specifically, the sixth syntax flag information and the seventh syntax flag information each may be parameters written in a profile, or may be a value of a flag, which is not limited herein.

It may be further noted that in embodiments of the disclosure, the first value may be set to 1, and the second value may be set to 0; or, the first value may be set to 0, and the second value may be set to 1; or, the first value may be set to true, and the second value may be set to false; or, the first value may be set to false, and the second value may be set to true, which is not limited herein.

In a specific implementation, the first value may be 0, and the second value may be 1. That is to say, when the chroma fusion mode is used as a supplementary solution to the non-cross-component prediction mode, if the decoded value of the sixth syntax flag information is 1, then it may be determined that the non-cross-component prediction mode is used for the current block, and in this case, proceed to determining the mode enable information of the current block, i.e., determining whether the chroma fusion mode is used for the current block and whether the chroma fusion merge mode is enabled for the current block. Alternatively, when the chroma fusion mode is used as a supplementary solution to the cross-component prediction mode, if the decoded value of the seventh syntax flag information is 1, then it may be determined that the cross-component prediction mode is used for the current block, and in this case, proceed to determining the mode enable information of the current block, i.e., determining whether the chroma fusion mode is used for the current block and whether the chroma fusion merge mode is enabled for the current block.

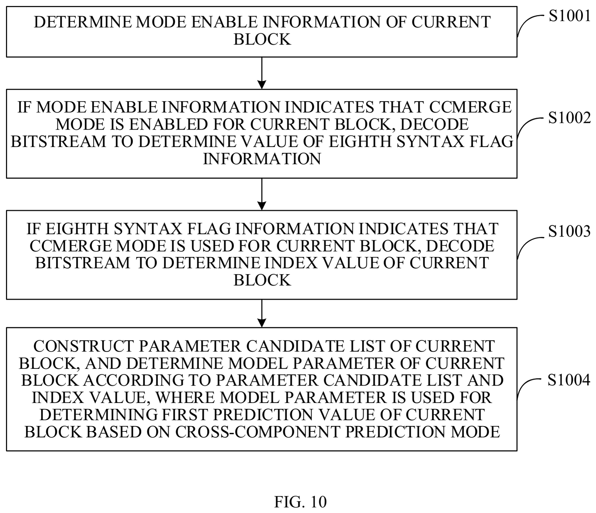

In addition, in embodiments of the disclosure, the technical solution can be applied not only to the chroma fusion merge mode, but also to a CCMerge mode. In some embodiments, as illustrated in FIG. 10, the method may include the following.

At S1001, the mode enable information of the current block is determined.

At S1002, if the mode enable information indicates that a CCMerge mode is enabled for the current block, the bitstream is decoded to determine a value of eighth syntax flag information.

At S1003, if the eighth syntax flag information indicates that the CCMerge mode is used for the current block, the bitstream is decoded to determine the index value of the current block.

At S1004, the parameter candidate list of the current block is constructed, and the model parameter of the current block is determined according to the parameter candidate list and the index value, where the model parameter is used for determining the first prediction value of the current block based on the cross-component prediction mode.

It may be noted that in embodiments of the disclosure, the mode enable information of the current block may be determined as follows. An enable signal of the current block is determined according to information of a neighbouring block of the current block. The enable signal herein is the mode enable information of the current block. Herein, the enable signal can be determined not only according to the information of the neighbouring block, but also according to some other information, so that whether the CCMerge mode is enabled for the current block can be determined.

It may be further noted that in embodiments of the disclosure, the information of the neighbouring block may include mode information of the neighbouring block. For determining the enable signal according to the mode information of the neighbouring block, reference can be made to the above content. In addition, for the construction of the parameter candidate list and the inheritance rule, reference can also be made to the above content, which will not be elaborated herein.

It may be further noted that in embodiments of the disclosure, the enable signal herein does not need to be signalled into a bitstream. When the current block is in the cross-component prediction mode, whether the CCMerge mode is enabled for the current block may be adaptively determined according to the mode information of the neighbouring block. The value of the eighth syntax flag information needs to be decoded only when the CCMerge mode is enabled for the current block. By using the adaptive determination solution, additional bit overhead can be effectively avoided, and thus the coding efficiency can be improved.

In some embodiments, for the eighth syntax flag information, the method may further include the following. If the value of the eighth syntax flag information is a first value, it is determined that the eighth syntax flag information indicates that the CCMerge mode is not used for the current block. If the value of the eighth syntax flag information is a second value, it is determined that the eighth syntax flag information indicates that the CCMerge mode is used for the current block.

It may be noted that in embodiments of the disclosure, the first value is different from the second value. Herein, the first value and the second value may be in parameter form or in numerical form. Specifically, the eighth syntax flag information may be parameters written in a profile, or may be a value of a flag, which is not limited herein.

In a specific implementation, the first value may be 0, and the second value may be 1. That is to say, when the mode enable information indicates that the CCMerge mode is not enabled for the current block, the value of the eighth syntax flag information is no longer decoded, and the model parameter of the current block is directly calculated according to the existing technical solution. Specifically, the model parameter of the current block is determined according to a reference sample of the current block. When the mode enable information indicates that the CCMerge mode is enabled for the current block, the value of the eighth syntax flag information needs to be decoded. When the value of the eighth syntax flag information is 1, the index value of the current block is further decoded, and then the model parameter of the current block is determined.

A decoding method is provided in this embodiment. First, the mode enable information of the current block is determined. If the mode enable information indicates that the weighted chroma fusion mode is used for the current block and the chroma fusion merge mode is enabled for the current block, the bitstream is decoded to determine the value of the first syntax flag information. If the first syntax flag information indicates that the chroma fusion merge mode is used for the current block, the bitstream is decoded to determine the index value of the current block. Then, the parameter candidate list of the current block is constructed, and the model parameter of the current block is determined according to the parameter candidate list and the index value. The model parameter is used for determining the first prediction value of the current block based on the cross-component prediction mode. As such, when the weighted chroma fusion mode is used for the current block, considering a usage rate of the chroma fusion merge mode, the determination of whether the chroma fusion merge mode is enabled for the current block is added herein. The value of the first syntax flag information needs to be decoded only when the chroma fusion merge mode is enabled for the current block. In this way, codewords can be effectively saved, additional bit overhead caused by the first syntax flag information can be avoided, and thus the coding efficiency can be improved.

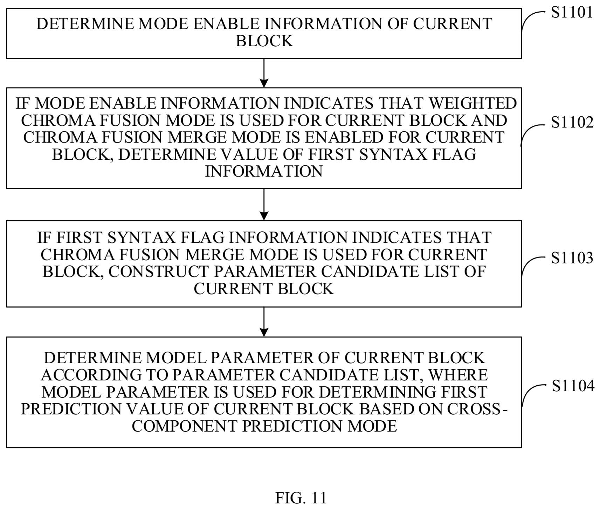

In another embodiment of the disclosure, reference is made to FIG. 11 which is a schematic flowchart of an encoding method provided in embodiments of the disclosure. As illustrated in FIG. 11, the method may include the following.

At S1101, mode enable information of a current block is determined.

At S1102, if the mode enable information indicates that a weighted chroma fusion mode is used for the current block and a chroma fusion merge mode is enabled for the current block, a value of first syntax flag information is determined.

It may be noted that, the encoding method in embodiments of the disclosure is applied to an encoder. In addition, the encoding method may specifically refer to a chroma prediction method. In a chroma prediction mode, improvements mainly focus on the technology of a chroma fusion mode, and more specifically, a merge mode can be provided for cross-component prediction in the chroma fusion mode. Furthermore, in order to avoid bit overhead caused by a low usage rate of this technology, the determination of whether the chroma fusion merge mode is enabled for the current block is added herein.

It may be further noted that in embodiments of the disclosure, the mode enable information can be used for determining whether the weighted chroma fusion mode is used for the current block and whether the chroma fusion merge mode is enabled for the current block. The value of the first syntax flag information needs to be determined only when the mode enable information indicates that the weighted chroma fusion mode is used for the current block and the chroma fusion merge mode is enabled for the current block. The first syntax flag information indicates whether the chroma fusion merge mode is used for the current block. That is to say, if the chroma fusion merge mode needs to be enabled in this case, then whether the chroma fusion merge mode is used for the current block needs to be further determined.

In some embodiments, the mode enable information of the current block may be determined as follows. A value of second syntax flag information is determined. If the second syntax flag information indicates that the weighted chroma fusion mode is used for the current block, an enable signal of the current block is determined. The enable signal indicates whether the chroma fusion merge mode is enabled for the current block.

It may be noted that in embodiments of the disclosure, the second syntax flag information indicates whether the weighted chroma fusion mode is used for the current block, and the second syntax flag information may be represented by isChromaFusion. In addition, different values of the second syntax flag information correspond to different mode indications.

In some embodiments, the value of the second syntax flag information may be determined as follows. If a chroma fusion mode is not used for the current block, it is determined that the value of the second syntax flag information is a first value. If the weighted chroma fusion mode is used for the current block, it is determined that the value of the second syntax flag information is a second value. If a single-linear-model chroma fusion mode is used for the current block, it is determined that the value of the second syntax flag information is a third value. If a multiple-linear-model chroma fusion mode is used for the current block, it is determined that the value of the second syntax flag information is a fourth value.

In embodiments of the disclosure, the first value, the second value, the third value, and the fourth value are different from each other. Herein, the first value, the second value, the third value, and the fourth value may be in parameter form or in numerical form. Specifically, the second syntax flag information herein may be parameters written in a profile, or may be a value of a flag, which is not limited herein. Exemplarily, in a specific implementation, the first value may be 0, the second value may be 1, the third value may be 2, and the fourth value may be 3.

That is to say, in embodiments of the disclosure, if the chroma fusion mode is not used for the current block, it may be determined that the value of the second syntax flag information is 0. If the weighted chroma fusion mode is used for the current block, it may be determined that the value of the second syntax flag information is 1. If a linear-model chroma fusion mode is used for the current block, it may be determined that the value of the second syntax flag information is 2 or 3. In particular, if the single-linear-model chroma fusion mode is used for the current block, it may be determined that the value of the second syntax flag information is 2, and if the multiple-linear-model chroma fusion mode is used for the current block, it may be determined that the value of the second syntax flag information is 3.

Further, in some embodiments, the method may further include the following. The value of the second syntax flag information is encoded, and obtained encoded bits are signalled into a bitstream.

It may be noted that in embodiments of the disclosure, the encoding end signals the value of the second syntax flag information into a bitstream, so that the decoding end can directly determine the value of the second syntax flag information by decoding the bitstream, and then determine whether the weighted chroma fusion mode is used for the current block.

It may be further noted that in embodiments of the disclosure, for the mode enable information of the current block, if a value of isChroma Fusion is 1, that is, the weighted chroma fusion mode is used for the current block, then the enable signal of the current block needs to be further determined, where the enable signal may be represented by hasChromaFusionFlag(). The value of the first syntax flag information needs to be determined only when the enable signal indicates that the chroma fusion merge mode is enabled for the current block. Otherwise, if the enable signal indicates that the chroma fusion merge mode is disabled for the current block, the value of the first syntax flag information no longer needs to be determined.

In some embodiments, the enable signal of the current block may be determined as follows. The enable signal of the current block is determined according to information of a neighbouring block of the current block.

In embodiments of the disclosure, the enable signal may be determined according to the information of the neighbouring block of the current block, or the enable signal may be determined according to some other information, so as to determine whether the chroma fusion merge mode is enabled for the current block, which is not limited herein.

Further, taking the information of the neighbouring block of the current block as an example, in some embodiments, the enable signal of the current block may be determined according to the information of the neighbouring block of the current block as follows. Mode information of the neighbouring block of the current block is determined. The enable signal of the current block is determined according to the mode information of the neighbouring block.

Herein, the neighbouring block may include at least one of: at least one left neighbouring block on the left of the current block, or at least one top neighbouring block on the top of the current block.

That is to say, in embodiments of the disclosure, the number of neighbouring blocks may be 2, or may be 3, 4, 5, etc., which is not limited herein. In addition, among these neighbouring blocks, there may be two left neighbouring blocks and one top neighbouring block; or, there may be one left neighbouring block and two top neighbouring blocks; or, there may be two left neighbouring blocks and two top neighbouring blocks, etc., where the number of left neighbouring blocks may be the same as or different from the number of top neighbouring blocks, which is not limited herein.

In a specific implementation, there is one left neighbouring block and one right neighbouring block. Exemplarily, taking FIG. 5 as an example, the left neighbouring block is a block A1, and the top neighbouring block is a block B1. Therefore, the enable signal of the current block can be determined according to mode information of the block A1 and the block B1.

In some embodiments, the enable signal of the current block may be determined according to the mode information of the neighbouring block as follows. If at least one of the mode information of the neighbouring block is a non-cross-component prediction mode, it is determined that the enable signal is a first value. If each of the mode information of the neighbouring block is a cross-component prediction mode, it is determined that the enable signal is a second value.

In some embodiments, the enable signal of the current block may be determined according to the mode information of the neighbouring block as follows. If each of the mode information of the neighbouring block is a non-cross-component prediction mode, it is determined that the enable signal is a first value. If at least one of the mode information of the neighbouring block is a cross-component prediction mode, it is determined that the enable signal is a second value.

It may be noted that in embodiments of the disclosure, the mode information of the neighbouring block may be the cross-component prediction mode or the non-cross-component prediction mode. For example, if the neighbouring block includes a block A1 and a block B1, there may be the following four cases for the mode information of the neighbouring block.

(1) The block A1 is in the non-cross-component prediction mode, and the block B1 is in the non-cross-component prediction mode.
(2) The block A1 is in the non-cross-component prediction mode, and the block B1 is in the cross-component prediction mode.
(3) The block A1 is in the cross-component prediction mode, and the block B1 is in the non-cross-component prediction mode.

(4) The block A1 is in the cross-component prediction mode, and the block B1 is in the cross-component prediction mode.

As such, in embodiments of the disclosure, for the enable signal, in a specific implementation, if the at least one of the mode information of the neighbouring block is the non-cross-component prediction mode, that is, the above case (1), (2), or (3) is satisfied, then the enable signal may be the first value; or, if each of the mode information of the neighbouring block is the cross-component prediction mode, that is, the above case (4) is satisfied, then the enable signal may be the second value.

For the enable signal, in another specific implementation, if each of the mode information of the neighbouring block is the non-cross-component prediction mode, that is, the above case (1) is satisfied, then the enable signal may be the first value; or, if the at least one of the mode information of the neighbouring block is the cross-component prediction mode, that is, the above case (2), (3), or (4) is satisfied, then the enable signal may be the second value.

Further, in some embodiments, the method may further include the following. If the enable signal is a first value, it is determined that the chroma fusion merge mode is disabled for the current block. If the enable signal is a second value, it is determined that the chroma fusion merge mode is enabled for the current block.

It may be noted that in embodiments of the disclosure, the first value is different from the second value. Herein, the first value may be set to 1, and the second value may be set to 0; or, the first value may be set to 0, and the second value may be set to 1; or, the first value may be set to true, and the second value may be set to false; or, the first value may be set to false, and the second value may be set to true, which is not limited herein. Exemplarily, in a specific implementation, the first value may be 0, and the second value may be 1.

It may be further noted that in embodiments of the disclosure, the enable signal may be represented by hasChromaFusionFlag(). Herein, hasChromaFusionFlag() does not need to be signalled into a bitstream, and accordingly, the decoding end does not need to decode the bitstream to determine a value of hasChromaFusionFlag(). Exemplarily, if the mode information of the neighbouring block satisfies the above case (1), (2), or (3), that is, at least one of the mode information is the non-cross-component prediction mode, then the returned enable signal may be 0; or, if the mode information of the neighbouring block satisfies the above case (4), that is, each of the mode information is the cross-component prediction mode, then the returned enable signal may be 1. Alternatively, if the mode information of the neighbouring block satisfies the above case (1), that is, each of the mode information is the non-cross-component prediction mode, then the returned enable signal may be 0; or, if the mode information of the neighbouring block satisfies the above case (2), (3), or (4), that is, at least one of the mode information is the cross-component prediction mode, then the returned enable signal may be 1.

In some embodiments, the method may further include the following. If the mode enable information indicates that the weighted chroma fusion mode is used for the current block and the chroma fusion merge mode is disabled for the current block, a model parameter of the current block is determined according to a reference sample of the current block. The model parameter is used for determining a first prediction value of the current block based on a cross-component prediction mode.

Further, in some embodiments, the method may further include the following. If the value of the second syntax flag information is the second value and the enable signal is the first value, it is determined that that the mode enable information indicates that the weighted chroma fusion mode is used for the current block and the chroma fusion merge mode is disabled for the current block. If the value of the second syntax flag information is the second value and the enable signal is the second value, it is determined that the mode enable information indicates that the weighted chroma fusion mode is used for the current block and the chroma fusion merge mode is enabled for the current block.

That is to say, in embodiments of the disclosure, if a value of isChromaFusion is 1 and hasChromaFusion Flag() is 0, it may be determined that the mode enable information indicates that the weighted chroma fusion mode is used for the current block and the chroma fusion merge mode is disabled for the current block. In this case, the value of the first syntax flag information does not need to be determined, and the model parameter of the current block is directly determined according to the reference sample of the current block. Otherwise, if the value of isChromaFusion is 1 and hasChromaFusion Flag() is also 1, it may be determined that the mode enable information indicates that the weighted chroma fusion mode is used for the current block and the chroma fusion merge mode is enabled for the current block. In this case, the value of the first syntax flag information needs to be further determined, then a parameter candidate list needs to be further constructed, and then the model parameter of the current block is determined.

Further, in some embodiments, for the value of the first syntax flag information, the method may further include the following. If the chroma fusion merge mode is not used for the current block, it is determined that the value of the first syntax flag information is a first value. If the chroma fusion merge mode is used for the current block, it is determined that the value of the first syntax flag information is a second value.

In embodiments of the disclosure, the first value is different from the second value. Herein, the first value and the second value may be in parameter form or in numerical form. Specifically, the first syntax flag information herein may be parameters written in a profile, or may be a value of a flag, which is not limited herein.

In embodiments of the disclosure, the first syntax flag information may be represented by chromaFusionMrgFlag. The first value may be set to 1, and the second value may be set to 0; or, the first value may be set to 0, and the second value may be set to 1; or, the first value may be set to true, and the second value may be set to false; or, the first value may be set to false, and the second value may be set to true, which is not limited herein. Exemplarily, in a specific implementation, the first value may be 0, and the second value may be 1.

That is to say, in embodiments of the disclosure, for example, when the first syntax flag information is a flag, if the chroma fusion merge mode is not used for the current block, then it may be determined that a value of chromaFusionMrg-Flag is 0; or, if the chroma fusion merge mode is used for the current block, then it may be determined that the value of chromaFusionMrgFlag is 1.

In some embodiments, the method may further include the following. The value of the first syntax flag information is encoded, and obtained encoded bits are signalled into a bitstream.

Further, in some embodiments, the method may further include the following. The value of the first syntax flag information is encoded based on a context model, and obtained encoded bits are signalled into a bitstream.

In embodiments of the disclosure, the first syntax flag information chromaFusionMrgFlag can be signalled into the bitstream through context model encoding. In a specific implementation, the method may further include the following. The context model is determined according to information of a neighbouring block of the current block.

In embodiments of the disclosure, the information of the neighbouring block of the current block may refer to information such as whether the neighbouring block is in a cross-component prediction mode. That is to say, in the weighted chroma fusion mode, according to the information such as whether the neighbouring block is in the cross-component prediction mode, different context models can be constructed for encoding the first syntax flag information chromaFusionMrgFlag.

As such, in the cross-component model merge technology, if a usage rate of the chroma fusion merge mode is not high, whether to enable the chroma fusion merge mode can be adaptively determined according to the information of the neighbouring block. The value of the first syntax flag information may be further determined and signalled into the bitstream only when the chroma fusion merge mode is enabled for the current block. In this way, subsequently, at the decoding end, the value of the first syntax flag information needs to be decoded only if the chroma fusion merge mode is enabled for the current block. Therefore, codewords can be effectively saved, and the coding efficiency can be improved.

At S1103, if the first syntax flag information indicates that the chroma fusion merge mode is used for the current block, a parameter candidate list of the current block is constructed.

It may be noted that in embodiments of the disclosure, if the value of the first syntax flag information is 1, that is, the first syntax flag information indicates that the chroma fusion merge mode is used for the current block, then the parameter candidate list of the current block needs to be constructed. Otherwise, if the value of the first syntax flag information is 0, that is, the first syntax flag information indicates that the chroma fusion merge mode is not used for the current block, then the parameter candidate list of the current block no longer needs to be constructed.

In some embodiments, the parameter candidate list of the current block may be constructed as follows. Neighbouring blocks of the current block are determined. If the cross-component prediction mode is used for at least one block among the neighbouring blocks, a model parameter of each of the at least one block is determined to obtain at least one group of first candidate model parameters. The at least one group of first candidate model parameters is filled in the parameter candidate list.

It may be noted that in embodiments of the disclosure, the neighbouring block may include: a block spatially neighbouring to the current block and/or a block temporally neighbouring to the current block. That is to say, the neighbouring block herein may be a spatial neighbouring block, or may be a temporal neighbouring block. The spatial neighbouring block and the current block are located in the same picture, and the temporal neighbouring block and the current block are located in different pictures. Exemplarily, in case of inter prediction, the neighbouring block in this case may refer to a temporal neighbouring block located in a reference picture.

It may be further noted that, taking spatial neighbouring as an example, positions of the neighbouring blocks of the current block may be illustrated in FIG. 4, and a checking order may be B1->A1->B0->A0 ->B2. Then, the at least one group of first candidate model parameters is determined in this order.

Further, after the at least one group of first candidate model parameters is filled in the parameter candidate list, if the parameter candidate list is not full, then in some embodiments, the parameter candidate list of the current block may be further constructed as follows. Non-neighbouring blocks of the current block are determined. If the cross-component prediction mode is used for at least one block among the non-neighbouring blocks, a model parameter of each of the at least one block is determined to obtain at least one group of second candidate model parameters. The at least one group of second candidate model parameters is further filled in the parameter candidate list.

It may be further noted that in embodiments of the disclosure, the number of candidates in the parameter candidate list is represented by NUM_LMC_MERGE_CANDS. By default, a value of NUM_LMC_ MERGE_CANDS is set to 6. If the number of first candidate model parameters is less than 6, it indicates that the parameter candidate list is not full.

In this case, the at least one group of second candidate model parameters needs to be determined according to the non-neighbouring blocks of the current block, and then the at least one group of second candidate model parameters is filled in the parameter candidate list. Exemplarily, positions of spatial non-neighbouring blocks of the current block may be illustrated in FIG. 5.

Further, after the at least one group of second candidate model parameters is filled in the parameter candidate list, if the parameter candidate list is not full, then in some embodiments, the parameter candidate list of the current block may be further constructed as follows. At least one group of third candidate model parameters is determined according to preset parameter information. The at least one group of third candidate model parameters is further filled in the parameter candidate list.

It may be noted that in embodiments of the disclosure, the preset parameter information may at least include a preset value of a first model parameter, and the preset value of the first model parameter is at least one of: 0, 1/8, -1/8, 2/8, -2/8, or 3/8.

It may be further noted that in embodiments of the disclosure, the first model parameter may indicate a scaling parameter when the cross-component prediction mode is used for the current block. That is to say, after the parameter candidate list is constructed according to the neighbouring blocks and non-neighbouring blocks of the current block, if the constructed parameter candidate list is not full, CCLM candidates with default scaling parameters may be considered. The default scaling parameters may be {0, 1/8, -1/8, 2/8, -2/8, 3/8}. It may be noted that, these default scaling parameters may be added to the parameter candidate list in an order of 0, 1/8, -1/8, 2/8, -2/8, and 3/8.

As such, the construction of the parameter candidate list can be completed, and the parameter candidate list includes NUM_LMC_ MERGE_CANDS groups of candidate model parameters. NUM_LMC_MERGE_CANDS represents the number of candidates included in the parameter candidate list.

At S1104, a model parameter of the current block is determined according to the parameter candidate list, where the model parameter is used for determining a first prediction value of the current block based on a cross-component prediction mode.

It may be noted that in embodiments of the disclosure, after the construction of the parameter candidate list, the model parameter of the current block can be determined according to the parameter candidate list. Herein, the model parameter of the current block may include a first model parameter and a second model parameter. The first model parameter indicates a scaling parameter when the cross-component prediction mode is used for the current block, and the second model parameter indicates an offset parameter when the cross-component prediction mode is used for the current block.

In some embodiments, the model parameter of the current block may be determined according to the parameter candidate list as follows. Cost values of each of at least two groups of candidate model parameters in the parameter candidate list are determined by performing cost calculation on the at least two groups of candidate model parameters. A minimum cost value is determined from the cost values of each of the at least two groups of candidate model parameters, and the model parameter of the current block is determined according to a group of candidate model parameters corresponding to the minimum cost value.

It may be further noted that in embodiments of the disclosure, cost calculation is performed on each of the at least two groups of candidate model parameters in the parameter candidate list. The cost herein may refer to a distortion value, a rate-distortion cost value, or another cost value, which is not limited herein.

Exemplarily, taking rate-distortion cost as an example, after cost values of each of the at least two groups of candidate model parameters are determined, a minimum cost value can be selected from the cost values, and then the model parameter of the current block can be further determined according to a group of candidate model parameters corresponding to the minimum cost value.

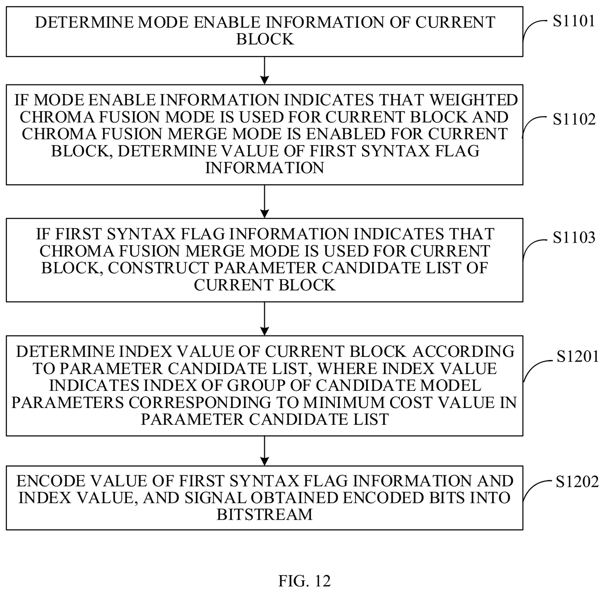

Further, in some embodiments, as illustrated in FIG. 12, after operations at S1103, the method may further include the following.

At S1201, an index value of the current block is determined according to the parameter candidate list, where the index value indicates an index of the group of candidate model parameters corresponding to the minimum cost value in the parameter candidate list.

At S 1202, the value of the first syntax flag information and the index value are encoded, and obtained encoded bits are signalled into a bitstream.

It may be noted that in embodiments of the disclosure, when the model parameter of the current block is determined according to the group of candidate model parameters corresponding to the minimum cost value, the index value of the current block needs to be further determined. The index value indicates the index of the group of candidate model parameters corresponding to the minimum cost value in the parameter candidate list, i.e., a position of the group of candidate model parameters corresponding to the minimum cost value in the parameter candidate list. Furthermore, the index value is encoded, and obtained encoded bits are signalled into the bitstream.

Further, in some embodiments, for the index value of the current block, the method may further include the following. The index value is encoded based on truncated binary code, and obtained encoded bits are signalled into a bitstream.

That is to say, in embodiments of the disclosure, the index value may be represented by chromaFusionMrgIdx. Herein, the index value chromaFusionMrgIdx can be encoded using the truncated binary code and shared by two chroma channels Cb/Cr. A correspondence between a value of the index value and binary code (binary data) is illustrated in Table 6 above. In addition, during encoding, each bin of the index value chromaFusionMrgIdx is context-encoded using separate context information.

As such, after the encoding end determines the index value of the current block and signals the index value into a bitstream, the decoding end can directly determine the index value of the current block by decoding the bitstream, and then determine a corresponding model parameter according to the constructed parameter candidate list.

It may be understood that in embodiments of the disclosure, for the model parameter of the current block, in some embodiments, the model parameter of the current block may be determined according to the group of candidate model parameters corresponding to the minimum cost value as follows. A candidate model parameter corresponding to the current block and an inheritance mode of the current block are determined according to the group of candidate mode parameters corresponding to the minimum cost value. The model parameter of the current block is determined according to the candidate model parameter and the inheritance mode of the current block.

It may be noted that in embodiments of the disclosure, the cross-component prediction mode may at least include one of: a CCLM mode, an MMLM mode, a CCCM mode, a GLM mode, a chroma fusion mode, or a CCMerge mode. In other words, an inheritance mode herein may be any cross-component prediction mode among the CCLM mode, the MMLM mode, the CCCM mode, the GLM mode, the chroma fusion mode, the CCMerge mode, and the like, which is not limited in this regard.

Further, in some embodiments, the model parameter of the current block may be determined according to the candidate model parameter and the inheritance mode of the current block as follows. If the inheritance mode of the current block is the CCLM mode, it is determined that a first model parameter in the candidate model parameter is inherited by the current block. If the inheritance mode of the current block is the MMLM mode, it is determined that a classification threshold and the first model parameter in the candidate model parameter are inherited by the current block. If the inheritance mode of the current block is the CCCM mode, it is determined that the classification threshold and a convolution parameter in the candidate model parameter are inherited by the current block. If the inheritance mode of the current block is the GLM mode, when the GLM mode is 3-parameter mode, it is determined that a gradient index, the first model parameter, and a second model parameter in the candidate model parameter are inherited by the current block; or when the GLM mode is 2-parameter mode, it is determined that the first model parameter in the candidate model parameter is inherited by the current block. If the inheritance mode of the current block is the chroma fusion mode, when the chroma fusion mode is the chroma fusion merge mode, a prediction mode inherited by the current block is determined, and the model parameter of the current block is determined according to the prediction mode inherited by the current block and the candidate model parameter; or when the chroma fusion mode is not the chroma fusion merge mode, it is determined that the MMLM mode is used for the current block, and it is determined that the classification threshold and the first model parameter in the candidate model parameter are inherited by the current block. If the inheritance mode of the current block is the CCMerge mode, a prediction mode inherited by the current block is determined, and the model parameter of the current block is determined according to the prediction mode inherited by the current block and the candidate model parameter.

Specifically, in embodiments of the disclosure, sources of cross-component model parameters are introduced herein, which can provide multiple choices for the cross-component prediction mode. An inheritance rule may be as follows.

1) In terms of inheriting the CCLM mode, only a scaling parameter is inherited, and an offset parameter is re-calculated.

2) In terms of inheriting the MMLM mode, the scaling parameter and a classification threshold may be inherited, and the offset parameter is re-calculated. However, if no neighbouring reconstructed samples are available in a class, the offset parameter is directly inherited.

3) In terms of inheriting the CCCM mode, all convolution parameters and the classification threshold are inherited.

4) In terms of inheriting the GLM mode, if GLM is 3-parameter mode, all gradient indexes and model parameters are inherited. Otherwise, if GLM is 2-parameter mode, only the scaling parameter is inherited, and the offset parameter needs to be re-calculated.

5) In terms of inheriting the chroma fusion mode, if the chroma fusion mode is not the chroma fusion merge mode, MMLM parameters derived in the cross-component prediction are inherited and used as candidates; or, if the chroma fusion mode is the chroma fusion merge mode, an inheritance mode depends on an inherited candidate mode.

6) In terms of inheriting the CCMerge mode, an inheritance mode depends on an inherited candidate mode.

It may be further noted that in embodiments of the disclosure, the size and construction of the parameter candidate list may share a rule of the CCMerge mode, or may use a separate set of rules rather than share the rule of the CCMerge mode, which is not limited herein. As such, if the first syntax flag information indicates that the chroma fusion merge mode is used for the current block, the model parameter of the current block may be determined according to the constructed parameter candidate list and the above inheritance rule.

It may be further understood that in embodiments of the disclosure, if the first syntax flag information indicates that the chroma fusion merge mode is not used for the current block, then in some embodiments, the method may further include the following. If the first syntax flag information indicates that the chroma fusion merge mode is not used for the current block, the model parameter of the current block is determined according to a reference sample of the current block. The model parameter is used for determining the first prediction value of the current block based on the cross-component prediction mode.

That is to say, in an embodiment of the disclosure, if the value of the first syntax flag information chromaFusionMrgFlag is 0, that is, the chroma fusion merge mode is not used for the current block, then the parameter candidate list no longer needs to be constructed, and the index value of the current block no longer needs to be determined. In this case, the model parameter of the current block can be calculated according to the existing technical solution, and can be used for generating a chroma prediction value based on the cross-component prediction mode.

In some embodiments, the method may further include the following. The reference sample of the current block is determined according to a neighbouring region of the current block. The neighbouring region of the current block includes at least one of: a left neighbouring region of the current block or a top neighbouring region of the current block.

It may be noted that in embodiments of the disclosure, the reference sample of the current block may be obtained based on the left neighbouring region of the current block, i.e., a CCLM-L mode, and in this case, only the left neighbouring region of the current block is used for calculating the model parameter. Alternatively, the reference sample of the current block may be obtained based on the top neighbouring region of the current block, i.e., a CCLM-T mode, and in this case, only the top neighbouring region of the current block is used for calculating the model parameter. Alternatively, the reference sample of the current block may be obtained based on both the left neighbouring region and the top neighbouring region of the current block, i.e., a CCLM-LT mode, and in this case, the left neighbouring region and the top neighbouring region of the current block are used for jointly calculating the model parameter. There is no limitation in this regard herein.

It may be further noted that in embodiments of the disclosure, determining the reference sample of the current block according to the neighbouring region of the current block may refer to: determining the reference sample by filtering samples in the neighbouring region. In some embodiments, for filtering the samples in the neighbouring region, the filtering may be performed according to positions of the samples, or the filtering may be performed according to colour component intensities, so that the reference sample of the current block can be determined according to filtered samples.

Specifically, in embodiments of the disclosure, a first reference sample set is formed according to the samples in the neighbouring region of the current block, and then the reference sample can be determined by filtering the first reference sample set. Herein, the number of reference samples may be N, where N is an integer greater than zero. In other words, N reference samples can be selected from the samples in the neighbouring region. Generally, a value of N may be 4, but is not limited thereto.

It may be further noted that in embodiments of the disclosure, among the samples in the neighbouring region of the current block, there may be some unimportant samples (for example, these samples are in weak correlation) or some abnormal samples. To ensure the accuracy of prediction, these samples need to be removed, so as to obtain valid reference samples.

In some embodiments, the model parameter of the current block may be determined according to the reference sample of the current block as follows. A reconstructed luma value and a reconstructed chroma value of the reference sample are determined. The model parameter of the current block is obtained by performing model parameter calculation according to the reconstructed luma value and the reconstructed chroma value.

Exemplarily, if the chroma fusion merge mode is not used for the current block, then for derivation of model parameters, a method for deriving model parameters constructed based on least squares regression is provided herein. Specifically, the model parameters can be derived by minimizing the regression error of reconstructed luma values and reconstructed chroma values of reference samples around the current block, for example, $a$ and $b$ illustrated in the following formula.

$$\begin{cases} a = \dfrac{2N \cdot \sum\left(L(n) \cdot C(n)\right) - \sum L(n) \cdot \sum C(n)}{2N \cdot \sum\left(L(n) \cdot L(n)\right) - \sum L(n) \cdot \sum L(n)} \\ b = \dfrac{\sum C(n) - a \cdot \sum L(n)}{2N} \end{cases} \qquad (8)$$

In the above, $L(n)$ represents reconstructed luma values of reference samples corresponding to a left neighbouring region and a top neighbouring region after down-sampling, $C(n)$ represents reconstructed chroma values of the reference samples corresponding to the left neighbouring region and the top neighbouring region, and $N$ is the number of reference samples.

Further, in embodiments of the disclosure, after the model parameter of the current block is determined according to the above implementation, a target prediction value of the current block can be further determined.

In embodiments of the disclosure, if the value of the second syntax flag information isChromaFusion is 1, that is, the second syntax flag information indicates that the weighted chroma fusion mode is used for the current block, then the target prediction value of the current block needs to be determined based on the cross-component prediction mode and a non-cross-component prediction mode. In some embodiments, the method may further include the following. The first prediction value of the current block based on the cross-component prediction mode is determined. A second prediction value of the current block based on the non-cross-component prediction mode is determined. The target prediction value of the current block is determined according to the first prediction value and the second prediction value.

It may be noted that in embodiments of the disclosure, the first prediction value may be obtained, according to the determined model parameter, by performing chroma prediction using the cross-component prediction mode. Exemplarily, the cross-component prediction mode herein may be a CCLM mode, an MMLM mode, a CCCM mode, etc., which is not limited herein.

It may be further noted that in embodiments of the disclosure, the second prediction value may be obtained by performing chroma prediction using the non-cross-component prediction mode. Exemplarily, the non-cross-component prediction mode herein may be a planar mode, a DC mode, a DIMD mode, etc., which is not limited herein.

Further, in embodiments of the disclosure, if the weighted chroma fusion mode is used for the current block, a final target prediction value may be derived according to the first prediction value corresponding to the cross-component prediction mode and the second prediction value corresponding to the non-cross-component prediction mode. Specifically, in some embodiments, the target prediction value of the current block may be determined according to the first prediction value and the second prediction value as follows. A first shift factor is determined. An offset value of the current block is determined according to the first shift factor. The target prediction value of the current block is determined according to the offset value, the first prediction value, and the second prediction value.

It may be noted that in embodiments of the disclosure, the first shift factor may be represented by "shift", and exemplarily, a value of "shift" is set to 2. In addition, the offset value of the current block may be set to $1 \ll$ (shift - 1).

In a specific implementation, the target prediction value of the current block may be determined according to the offset value, the first prediction value, and the second prediction value as follows. The target prediction value of the current block is determined by performing weighted calculation according to the offset value, the first prediction value, and the second prediction value.

In a more specific implementation, the target prediction value of the current block may be determined according to the offset value, the first prediction value, and the second prediction value as follows. A first weighting value and a second weighting value are determined. A third prediction value is determined by performing weighted calculation according to the first weighting value and the first prediction value as well as the second weighting value and the second prediction value, and a fourth prediction value is determined according to the offset value and the third prediction value. The target prediction value of the current block is determined by performing shift calculation on the fourth prediction value according to the first shift factor.

It may be noted that in embodiments of the disclosure, the first weighting value may be represented by w0, and the second weighting value may be represented by w1. Herein, w0 and w1 may be determined according to a prediction mode for a neighbouring block, and w0+w1=4 and shift=2. Exemplarily, when the cross-component prediction mode is used for both a left neighbouring block and a top neighbouring block, {w0, w1}={1, 3}. When the non-cross-component prediction mode is used for both the left neighbouring block and the top neighbouring block, {w0, w1}={3, 1}. In another case, {w0, w1} ={2, 2}.

Exemplarily, pred0 represents the second prediction value of the current block based on the non-cross-component prediction mode, pred1 represents the first prediction value of the current block based on the cross-component prediction mode, and pred represents the final target prediction value of the current block. A specific prediction process in this mode is as follows.

$$\text{pred} = (\text{w0} * \text{pred0} + \text{w1} * \text{pred1} + (1 \ll (\text{shift - 1}))) \gg \text{shift} \qquad (9)$$

It may be further understood that in embodiments of the disclosure, the value of the second syntax flag information may also be determined according to third syntax flag information, fourth syntax flag information, and fifth syntax flag information. The third syntax flag information may be represented by chromaFusionFlag, the fourth syntax flag information may be represented by chromaFusionType, and the fifth syntax flag information may be represented by chromaFusionCclm.

In some embodiments, the value of the second syntax flag information may be determined as follows. A value of third syntax flag information is determined. If the third syntax flag information indicates that a chroma fusion mode is used for the current block, a value of fourth syntax flag information is determined. If the fourth syntax flag information indicates that a linear-model chroma fusion mode is not used for the current block, the value of the second syntax flag information is determined according to the value of the third syntax flag information and the value of the fourth syntax flag information.

In a possible embodiment, if the third syntax flag information indicates that the chroma fusion mode is not used for the current block, the method may further include the following. The value of the second syntax flag information is set to the value of the third syntax flag information.

In a possible embodiment, if the fourth syntax flag information indicates that the linear-model chroma fusion mode is not used for the current block, the method may further include the following. The value of the second syntax flag information is set to a sum of the value of the third syntax flag information and the value of the fourth syntax flag information.

In a possible embodiment, if the fourth syntax flag information indicates that the linear-model chroma fusion mode is used for the current block, the method may further include the following. A value of fifth syntax flag information is determined. The value of the second syntax flag information is determined according to the value of the third syntax flag information, the value of the fourth syntax flag information, and the value of the fifth syntax flag information.

It may be noted that in embodiments of the disclosure, the value of the second syntax flag information isChromaFusion may be equal to a sum of the third syntax flag information chromaFusionFlag, the fourth syntax flag information chromaFusionType, and the fifth syntax flag information chromaFusionCclm, as illustrated in the following formula.

$$isChromaFusion = chromaFusionFlag + chromaFusionType + chromaFusionCclm \quad (10)$$

It may be further noted that in embodiments of the disclosure, for determining the third syntax flag information, the fourth syntax flag information, and the fifth syntax flag information, in a specific implementation, the method may further include the following. If the chroma fusion mode is not used for the current block, it is determined that the value of the third syntax flag information is a first value. If the chroma fusion mode is used for the current block, it is determined that the value of the third syntax flag information is a second value.

Further, in some embodiments, the method may further include the following. The value of the third syntax flag information is encoded, and obtained encoded bits are signalled into a bitstream.

In another specific implementation, the method may further include the following. If the linear-model chroma fusion mode is not used for the current block, it is determined that the value of the fourth syntax flag information is a first value. If the linear-model chroma fusion mode is used for the current block, it is determined that the value of the fourth syntax flag information is a second value.

Further, in some embodiments, the method may further include the following. The value of the fourth syntax flag information is encoded, and obtained encoded bits are signalled into a bitstream.

In yet another specific implementation, the method may further include the following. If a single-linear-model chroma fusion mode is used for the current block, it is determined that the value of the fifth syntax flag information is a first value. If a multiple-linear-model chroma fusion mode is used for the current block, it is determined that the value of the fifth syntax flag information is a second value.

Further, in some embodiments, the method may further include the following. The value of the fifth syntax flag information is encoded, and obtained encoded bits are signalled into a bitstream.

In embodiments of the disclosure, the first value is different from the second value. Herein, the first value and the second value may be in parameter form or in numerical form. Specifically, the third syntax flag information, the fourth syntax flag information, and the fifth syntax flag information each may be parameters written in a profile, or may be a value of a flag, which is not limited herein.

In embodiments of the disclosure, the first value may be set to 1, and the second value may be set to 0; or, the first value may be set to 0, and the second value may be set to 1; or, the first value may be set to true, and the second value may be set to false; or, the first value may be set to false, and the second value may be set to true, which is not limited herein. Exemplarily, in a specific implementation, the first value may be 0, and the second value may be 1.

Exemplarily, if the chroma fusion mode is not used for the current block, the value of the third syntax flag information chromaFusion Flag is 0. In this case, the value of the second syntax flag information isChromaFusion is equal to the value of the third syntax flag information chromaFusionFlag, that is, the value of the second syntax flag information isChromaFusion is 0.

Exemplarily, if the weighted chroma fusion mode is used for the current block, the value of the third syntax flag information chroma FusionFlag is 1, and the value of the fourth syntax flag information chromaFusionType is 0. In this case, the value of the second syntax flag information isChromaFusion is equal to the sum of the third syntax flag information chromaFusionFlag and the fourth syntax flag information chromaFusionType, that is, the value of the second syntax flag information isChromaFusion is 1.

Exemplarily, if the single-linear-model chroma fusion mode is used for the current block, the value of the third syntax flag information chromaFusionFlag is 1, the value of the fourth syntax flag information chromaFusionType is 1, and the value of the fifth syntax flag information chromaFusionCclm is 0. In this case, the value of the second syntax flag information isChromaFusion is equal to the sum of the third syntax flag information chromaFusionFlag, the fourth syntax flag information chromaFusionType, and the fifth syntax flag information chromaFusionCclm, that is, the value of the second syntax flag information isChromaFusion is 2.

Exemplarily, if the multiple-linear-model chroma fusion mode is used for the current block, the value of the third syntax flag information chromaFusionFlag is 1, the value of the fourth syntax flag information chromaFusionType is 1, and the value of the fifth syntax flag information chromaFusionCclm is 1. In this case, the value of the second syntax flag information isChromaFusion is equal to the sum of the third syntax flag information chromaFusionFlag, the fourth syntax flag information chromaFusionType, and the fifth syntax flag information chromaFusionCclm, that is, the value of the second syntax flag information isChromaFusion is 3.

Further, in some embodiments, the method may further include the following. A value of sixth syntax flag information is determined. If the sixth syntax flag information indicates that a non-cross-component prediction mode is used for the current block, proceed to determining the mode enable information of the current block.

It may be noted that in embodiments of the disclosure, the chroma fusion mode is used as a supplementary solution to the non-cross-component prediction mode. If the non-cross-component prediction mode is used for the current block, whether the chroma fusion mode is used for the current block and whether the chroma fusion merge mode is used for the current block need to be further determined, and then whether the cross-component prediction mode needs to be fused with the non-cross-component prediction mode is determined.

Further, in some embodiments, the method may further include the following. A value of seventh syntax flag information is determined. If the seventh syntax flag information indicates that the cross-component prediction mode is used for the current block, proceed to determining the mode enable information of the current block.

It may be noted that in embodiments of the disclosure, the chroma fusion mode may also be used as a supplementary solution to the cross-component prediction mode. If the cross-component prediction mode is used for the current block, whether the chroma fusion mode is used for the current block and whether the chroma fusion merge mode is used for the current block need to be further determined, and then whether the cross-component prediction mode needs to be fused with the non-cross-component prediction mode is determined.

Further, for the sixth syntax flag information, the method may further include the following. If the non-cross-component prediction mode is not used for the current block, it is determined that the value of the sixth syntax flag information is a first value. If the non-cross-component prediction mode is used for the current block, it is determined that the value of the sixth syntax flag information is a second value.

In some embodiments, the method may further include the following. The value of the sixth syntax flag information is encoded, and obtained encoded bits are signalled into a bitstream.

Further, for the seventh syntax flag information, the method may further include the following. If the cross-component prediction mode is not used for the current block, it is determined that the value of the seventh syntax flag information is a first value. If the cross-component prediction mode is used for the current block, it is determined that the value of the seventh syntax flag information is a second value.

In some embodiments, the method may further include the following. The value of the seventh syntax flag information is encoded, and obtained encoded bits are signalled into a bitstream.

It may be noted that in embodiments of the disclosure, the first value is different from the second value. Herein, the first value and the second value may be in parameter form or in numerical form. Specifically, the sixth syntax flag information and the seventh syntax flag information each may be parameters written in a profile, or may be a value of a flag, which is not limited herein.

It may be further noted that in embodiments of the disclosure, the first value may be set to 1, and the second value may be set to 0; or, the first value may be set to 0, and the second value may be set to 1; or, the first value may be set to true, and the second value may be set to false; or, the first value may be set to false, and the second value may be set to true, which is not limited herein.

In a specific implementation, the first value may be 0, and the second value may be 1. That is to say, when the chroma fusion mode is used as a supplementary solution to the non-cross-component prediction mode, the value of the sixth syntax flag information may be signalled into a bitstream, so that subsequently the decoding end can decode the bitstream to determine whether the non-cross-component prediction mode is used for the current block. If the value of the sixth syntax flag information is 1, it may indicate that the non-cross-component prediction mode is used for the current block, and in this case, proceed to determining the mode enable information of the current block, i.e., determining whether the chroma fusion mode is used for the current block and whether the chroma fusion merge mode is enabled for the current block. Alternatively, when the chroma fusion mode is used as a supplementary solution to the cross-component prediction mode, the value of the seventh syntax flag information may be signalled into a bitstream, so that subsequently the decoding end can decode the bitstream to determine whether the cross-component prediction mode is used for the current block. If the value of the seventh syntax flag information is 1, it may indicate that the cross-component prediction mode is used for the current block, and in this case, proceed to determining the mode enable information of the current block, i.e., determining whether the chroma fusion mode is used for the current block and whether the chroma fusion merge mode is enabled for the current block.

In addition, in embodiments of the disclosure, the technical solution can be applied not only to the chroma fusion merge mode, but also to a CCMerge mode. In some embodiments, the method may further include the following. The mode enable information of the current block is determined. If the mode enable information indicates that a CCMerge mode is enabled for the current block, a value of eighth syntax flag information is determined. If the eighth syntax flag information indicates that the CCMerge mode is used for the current block, the bitstream is decoded to determine the index value of the current block. The parameter candidate list of the current block is constructed, and the model parameter of the current block is determined according to the parameter candidate list and the index value, where the model parameter is used for determining the first prediction value of the current block based on the cross-component prediction mode.

It may be noted that in embodiments of the disclosure, the mode enable information of the current block may be determined as follows. An enable signal of the current block is determined according to information of a neighbouring block of the current block. The enable signal herein is the mode enable information of the current block. Herein, the enable signal can be determined not only according to the information of the neighbouring block, but also according to some other information, so that whether the CCMerge mode is enabled for the current block can be determined.

It may be further noted that in embodiments of the disclosure, the information of the neighbouring block may include mode information of the neighbouring block. For determining the enable signal according to the mode information of the neighbouring block, reference can be made to the above content. In addition, for the construction of the parameter candidate list and the inheritance rule, reference can also be made to the above content, which will not be elaborated herein.

It may be further noted that in embodiments of the disclosure, the enable signal herein does not need to be signalled into a bitstream. When the current block is in the cross-component prediction mode, whether the CCMerge mode is enabled for the current block may be adaptively determined according to the mode information of the neighbouring block. The value of the eighth syntax flag information needs to be determined and encoded only when the CCMerge mode is enabled for the current block. As such, at the encoding end, by using the adaptive determination solution, additional bit overhead can be effectively avoided, codewords can be saved, and thus the coding efficiency can be improved.

Further, for the eighth syntax flag information, the method may further include the following. If the CCMerge mode is not used for the current block, it is determined that the value of the eighth syntax flag information is a first value. If the CCMerge mode is used for the current block, it is determined that the value of the eighth syntax flag information is a second value.

In some embodiments, the method may further include the following. The value of the eighth syntax flag information is encoded, and obtained encoded bits are signalled into a bitstream.

It may be noted that in embodiments of the disclosure, the first value is different from the second value. Herein, the first value and the second value may be in parameter form or in numerical form. Specifically, the eighth syntax flag information may be parameters written in a profile, or may be a value of a flag, which is not limited herein.

In a specific implementation, the first value may be 0, and the second value may be 1. That is to say, when the mode enable information indicates that the CCMerge mode is not enabled for the current block, the value of the eighth syntax flag information is no longer encoded, and the model parameter of the current block is directly calculated according to the existing technical solution. Specifically, the model parameter of the current block is determined according to a reference sample of the current block. When the mode enable information indicates that the CCMerge mode is enabled for the current block, the value of the eighth syntax flag information needs to be encoded, so that when the decoding end decodes the value of the eighth syntax flag information as 1, the decoding end needs to further decode the index value of the current block, and then determine the model parameter of the current block.

A bitstream is further provided in embodiments of the disclosure. The bitstream is generated by performing bit encoding according to to-be-encoded information. The to-be-encoded information includes at least one of: an index value of a current block, a value of first syntax flag information, a value of second syntax flag information, a value of third syntax flag information, a value of fourth syntax flag information, a value of fifth syntax flag information, a value of sixth syntax flag information, a value of seventh syntax flag information, or a value of eighth syntax flag information.

In embodiments of the disclosure, the first syntax flag information indicates whether a chroma fusion merge mode is used for the current block, the second syntax flag information indicates whether a weighted chroma fusion mode is used for the current block, the third syntax flag information indicates whether a chroma fusion mode is used for the current block, the fourth syntax flag information indicates whether a linear-model chroma fusion mode is used for the current block, the fifth syntax flag information indicates whether a single-linear-model chroma fusion mode or a bilinear-model chroma fusion mode is used for the current block, the sixth syntax flag information indicates whether a non-cross-component prediction mode is used for the current block, the seventh syntax flag information indicates whether a cross-component prediction mode is used for the current block, and the eighth syntax flag information indicates whether a CCMerge mode is used for the current block.

As such, after the encoding end signals the to-be-encoded information into a bitstream, the decoding end first determines mode enable information according to information of a neighbouring block. The decoding end may decode the bitstream to determine the value of the first syntax flag information only when the mode enable information indicates that the weighted chroma fusion mode is used for the current block and the chroma fusion merge mode is enabled for the current block. Then, when the first syntax flag information indicates that the chroma fusion merge mode is used for the current block, the decoding end further decodes the bitstream to determine the index value of the current block, and then determine a model parameter of the current block according to the constructed parameter candidate list.

An encoding method is provided in this embodiment. First, the mode enable information of the current block is determined. If the mode enable information indicates that the weighted chroma fusion mode is used for the current block and the chroma fusion merge mode is enabled for the current block, the value of the first syntax flag information is determined. If the first syntax flag information indicates that the chroma fusion merge mode is used for the current block, the parameter candidate list of the current block is constructed, and then the model parameter of the current block is determined according to the parameter candidate list. The model parameter is used for determining the first prediction value of the current block based on the cross-component prediction mode. As such, when the weighted chroma fusion mode is used for the current block, considering a usage rate of the chroma fusion merge mode, the determination of whether the chroma fusion merge mode is enabled for the current block is added herein. The value of the first syntax flag information needs to be decoded only when the chroma fusion merge mode is enabled for the current block. In this way, codewords can be effectively saved, additional bit overhead caused by the first syntax flag information can be avoided, and thus the coding efficiency can be improved.

In yet another embodiment of the disclosure, based on the coding method described in the foregoing embodiments, embodiments of the disclosure propose an adaptive cross-component merge technology for a merge mode in a chroma fusion mode. In the merge mode of the chroma fusion mode in the related art, a flag chromaFusionMrgFlag needs to be encoded at a CU level to indicate whether a chroma fusion merge mode is used for a current block. In contrast, in embodiment of the disclosure, whether to encode a flag of the chroma fusion merge mode may be determined according to information of neighbouring blocks, and thus whether to enable or disable the chroma fusion merge mode can be selected during coding.

Specifically, when a value of a flag isChromaFusion of the chroma fusion mode is 1, a weighted chroma fusion mode is used in the chroma fusion mode, and then in embodiments of the disclosure, whether the chroma fusion merge mode needs to be further used in the weighted chroma fusion mode is determined according to a mode(s) for the neighbouring blocks. There may be the following four cases for the neighbouring blocks.

(1) A left neighbouring block is in a non-cross-component mode, and a top neighbouring block is in the non-cross-component mode.
(2) The left neighbouring block is in the non-cross-component mode, and a right neighbouring block is in a cross-component mode.
(3) The left neighbouring block is in the cross-component mode, and the right neighbouring block is in the non-cross-component mode.
(4) The left neighbouring block is in the cross-component mode, and the right neighbouring block is in the cross-component mode.

A cross-component prediction mode may be referred to as "cross-component mode" for short, and a non-cross-component prediction mode may be referred to as "non-cross-component mode" for short.

Exemplarily, in reference software ECM, the left neighbouring block generally refers to a block A1 in FIG. 4, and the top neighbouring block generally refers to a block B1 in FIG. 4. Hereinafter, only the terms "left neighbouring block" and "top neighbouring block" are used for simplicity, which is not limited in this regard.

In an implementation, related syntax is illustrated in Table 7.

Table 7

| intraChromaFusionMode() { | |
|---|---|
| **chromaFusionFlag** | ae(v) |
| if ( chromaFusionFlag) | |
| **chromaFusionType** | ae(v) |
| if ( chromaFusionType) | |
| **chromaFusionCclm** | ae(v) |

(continued)

| isChromaFusion = chromaFusionFlag + chromaFusionType + chromaFusionCclm | |
|---|---|
| if (hasChromaFusionFlag() && isChromaFusion == 1) { | |
| **chromaFusionMrgFlag** | ae(v) |
| if ( chromaFusionMrgFlag) | |
| **chromaFusionMrgIdx** | ae(v) |
| } | |
| } | |

In the above, hasChromaFusionFlag() may be used to return, according to the information of the neighbouring blocks, a signal indicating whether to enable the chroma fusion merge mode (where the signal is not signalled into a bitstream). When the signal is 1, the flag of the chroma fusion merge mode is further parsed, and when the signal is 0, parsing of the chroma fusion merge mode is skipped. Two solutions for setting a value of the signal are provided in this solution.

In the first solution, if the neighbouring blocks satisfy the above case (1), (2), or (3), that is, at least one of the neighbouring blocks is not in the cross-component mode, then hasChromaFusionFlag() returns a signal of 0. In this case, the flag chromaFusionMrgFlag does not need to be parsed, that is, the chroma fusion merge mode is disabled in this case. If the neighbouring blocks satisfy the above case (4), that is, each of the neighbouring blocks is in the cross-component mode, then hasChromaFusionFlag() returns a signal of 1. In this case, the flag chromaFusionMrgFlag needs to be parsed, that is, the chroma fusion merge mode is enabled in this case, and an index of the chroma fusion merge mode is further parsed, to determine an inherited parameter model.

In the second solution, if the neighbouring blocks satisfy the above case (1), that is, each of the neighbouring blocks is in the non-cross-component mode, then hasChromaFusionFlag() returns a signal of 0. In this case, the flag chromaFusionMrgFlag does not need to be parsed, that is, the chroma fusion merge mode is disabled in this case. If the neighbouring blocks satisfy the above case (2), (3), or (4), that is, at least one of the neighbouring blocks is in the cross-component mode, then hasChromaFusionFlag() returns a signal of 1. In this case, the flag chromaFusionMrgFlag needs to be parsed, that is, the chroma fusion merge mode is enabled in this case, and an index of the chroma fusion merge mode is further parsed, to determine an inherited parameter model.

In a specific embodiment, according to the above content, an embodiment at a decoding end in the first solution is as follows. The decoding end parses out that the chroma fusion mode isChromaFusion is 1, which indicates that the weighted chroma fusion mode is used for the current block. Whether the cross-component mode is used for the neighbouring block(s) is determined. When at least one of the left neighbouring block or the top neighbouring block of the current block is not in the cross-component mode, parsing of the chroma fusion merge mode is skipped. The subsequent decoding process proceeds.

In another specific embodiment, according to the above content, another embodiment at the decoding end in the first solution is as follows. The decoding end parses out that the chroma fusion mode isChromaFusion is 1, which indicates that the weighted chroma fusion mode is used for the current block. Whether the cross-component mode is used for the neighbouring block(s) is determined. When each of the left neighbouring block and the top neighbouring block of the current block is in the cross-component mode, the flag of the chroma fusion merge mode is further parsed, and whether to further parse the index of the chroma fusion merge mode is determined according to a value of the flag. Then, the subsequent decoding process proceeds.

In yet another specific embodiment, according to the above content, an embodiment at a decoding end in the second solution is as follows. The decoding end parses out that the chroma fusion mode isChromaFusion is 1, which indicates that the weighted chroma fusion mode is used for the current block. Whether the cross-component mode is used for the neighbouring block(s) is determined. When each of the left neighbouring block and the top neighbouring block of the current block is not in the cross-component mode, parsing of the chroma fusion merge mode is skipped. The subsequent decoding process proceeds.

In yet another specific embodiment, according to the above content, another embodiment at the decoding end in the second solution is as follows. The decoding end parses out that the chroma fusion mode isChromaFusion is 1, which indicates that the weighted chroma fusion mode is used for the current block. Whether the cross-component mode is used for the neighbouring block(s) is determined. When at least one of the left neighbouring block or the top neighbouring block of the current block is in the cross-component mode, the flag of the chroma fusion merge mode is further parsed, and whether to further parse the index of the chroma fusion merge mode is determined according to a value of the flag. Then, the subsequent decoding process proceeds.

It may be noted that, the neighbouring blocks in the foregoing embodiments refer in particular to the block A1 and the block B1 in FIG. 4 but are not limited thereto, or may refer in particular to other neighbouring blocks, for example, a block A0 and a block B0. In addition, the neighbouring blocks may not be two neighbouring blocks, and may be three or more neighbouring blocks, which is not limited herein.

Further, in embodiments of the disclosure, whether to enable the chroma fusion merge mode is determined according to some other information. For example, in the weighted chroma fusion mode, according to information such as whether the neighbouring block is in the cross-component mode, different context models are constructed for encoding the chroma fusion merge mode. Alternatively, in embodiments of the disclosure, solutions of embodiments of the disclosure may also be applied to a flag of a CCMerge mode.

That is to say, in embodiments of the disclosure, an adaptive enable solution is mainly provided for the chroma fusion mode. In this solution, when the current block is in the weighted chroma fusion mode, whether to enable the chroma fusion merge mode may be selected according to the information such as whether the neighbouring block is in the cross-component mode. By using this adaptive determination solution, additional bit overhead can be effectively avoided, and thus the efficiency of intra prediction can be improved. Exemplarily, Table 8 illustrates test results of the embodiments of the disclosure. As can be seen from this, in the technical solution, the prediction efficiency can be improved, and then the coding performance can be improved.

Table 8

| | All Intra Main 10 | | | | |
| --- | --- | --- | --- | --- | --- |
| | Over anchor | | | | |
| | Y | U | V | EncT | DecT |
| Class A1 | 0.02% | -0.67% | -0.56% | 103% | 101% |
| Class A2 | 0.02% | -0.38% | -0.34% | 103% | 101% |
| Class B | 0.00% | -0.28% | -0.52% | 102% | 100% |
| Class C | 0.01% | -0.28% | -0.24% | 103% | 99% |
| Class E | 0.00% | -0.26% | -0.17% | 102% | 101% |
| **Overall** | 0.01% | -0.36% | -0.38% | 103% | 100% |

In embodiments of the disclosure, the specific implementations are elaborated through the foregoing embodiments. As can be seen from the technical solution of the foregoing embodiments, since in the cross-component model merge technology in the related art, a flag needs to be encoded by default at a CU level to determine whether this technology is used for a current chroma block, when a usage rate of this technology is not high, additional bit overhead is usually incurred. Therefore, by adaptively determining, according to the information of the neighbouring block, whether to enable this function, codewords can be effectively saved, and thus the coding efficiency can be improved.

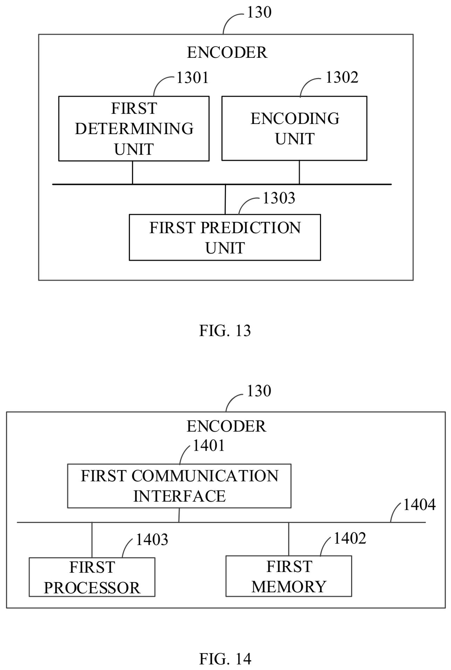

In still another embodiment of the disclosure, based on the same inventive concept of the foregoing embodiments, reference is made to FIG. 13 which is a schematic structural diagram of an encoder provided in embodiments of the disclosure. As illustrated in FIG. 13, the encoder 130 may include a first determining unit 1301. The first determining unit 1301 is configured to determine mode enable information of a current block; and determine a value of first syntax flag information, if the mode enable information indicates that a weighted chroma fusion mode is used for the current block and a chroma fusion merge mode is enabled for the current block. The first determining unit 1301 is further configured to construct a parameter candidate list of the current block, if the first syntax flag information indicates that the chroma fusion merge mode is used for the current block; and determine a model parameter of the current block according to the parameter candidate list. The model parameter is used for determining a first prediction value of the current block based on a cross-component prediction mode.

In some embodiments, the first determining unit 1301 is further configured to determine the model parameter of the current block according to a reference sample of the current block, if the mode enable information indicates that the weighted chroma fusion mode is used for the current block and the chroma fusion merge mode is disabled for the current block. The model parameter is used for determining the first prediction value of the current block based on the cross-component prediction mode.

In some embodiments, the first determining unit 1301 is further configured to determine a value of second syntax flag information; and determine an enable signal of the current block, if the second syntax flag information indicates that the weighted chroma fusion mode is used for the current block. The enable signal indicates whether the chroma fusion merge mode is enabled for the current block.

In some embodiments, the first determining unit 1301 is further configured to determine the enable signal of the current block according to information of a neighbouring block of the current block.

In some embodiments, the first determining unit 1301 is further configured to determine mode information of the neighbouring block of the current block; and determine the enable signal of the current block according to the mode information of the neighbouring block. The neighbouring block includes at least one of: at least one left neighbouring block on the left of the current block, or at least one top neighbouring block on the top of the current block.

In some embodiments, the first determining unit 1301 is further configured to determine that the enable signal is a first value, if at least one of the mode information of the neighbouring block is a non-cross-component prediction mode; and determine that the enable signal is a second value, if each of the mode information of the neighbouring block is the cross-component prediction mode.

In some embodiments, the first determining unit 1301 is further configured to determine that the enable signal is a first value, if each of the mode information of the neighbouring block is a non-cross-component prediction mode; and determine that the enable signal is a second value, if at least one of the mode information of the neighbouring block is the cross-component prediction mode.

In some embodiments, the first determining unit 1301 is further configured to determine that the chroma fusion merge mode is disabled for the current block, if the enable signal is a first value; and determine that the chroma fusion merge mode is enabled for the current block, if the enable signal is a second value.

In some embodiments, the first determining unit 1301 is further configured to determine that the mode enable information indicates that the weighted chroma fusion mode is used for the current block and the chroma fusion merge mode is disabled for the current block, if the value of the second syntax flag information is the second value and the enable signal is the first value. The first determining unit 1301 is further configured to determine that the mode enable information indicates that the weighted chroma fusion mode is used for the current block and the chroma fusion merge mode is enabled for the current block, if the value of the second syntax flag information is the second value and the enable signal is the second value.

In some embodiments, the first determining unit 1301 is further configured to determine the model parameter of the current block according to a reference sample of the current block, if the first syntax flag information indicates that the chroma fusion merge mode is not used for the current block. The model parameter is used for determining the first prediction value of the current block based on the cross-component prediction mode.

In some embodiments, the first determining unit 1301 is further configured to determine the reference sample of the current block according to a neighbouring region of the current block. The neighbouring region of the current block includes at least one of: a left neighbouring region of the current block or a top neighbouring region of the current block.

In some embodiments, the first determining unit 1301 is further configured to determine a reconstructed luma value and a reconstructed chroma value of the reference sample; and obtain the model parameter of the current block by performing model parameter calculation according to the reconstructed luma value and the reconstructed chroma value.

In some embodiments, the first determining unit 1301 is further configured to determine neighbouring blocks of the current block; determine a model parameter of each of the at least one block to obtain at least one group of first candidate model parameters, if the cross-component prediction mode is used for at least one block among the neighbouring blocks; and fill the at least one group of first candidate model parameters in the parameter candidate list.

In some embodiments, the neighbouring block includes: a block spatially neighbouring to the current block and/or a block temporally neighbouring to the current block.

In some embodiments, the first determining unit 1301 is further configured to, when the parameter candidate list is not full, determine non-neighbouring blocks of the current block; determine a model parameter of each of the at least one block to obtain at least one group of second candidate model parameters, if the cross-component prediction mode is used for at least one block among the non-neighbouring blocks; and fill the at least one group of second candidate model parameters in the parameter candidate list.

In some embodiments, the first determining unit 1301 is further configured to: when the parameter candidate list is not full, determine at least one group of third candidate model parameters according to preset parameter information; and fill the at least one group of third candidate model parameters in the parameter candidate list.

In some embodiments, the preset parameter information at least includes a preset value of a first model parameter, and the preset value of the first model parameter is at least one of: 0, 1/8, -1/8, 2/8, -2/8, or 3/8.

In some embodiments, the cross-component prediction mode at least includes one of: a CCLM mode, an MMLM mode, a CCCM mode, a GLM mode, a chroma fusion mode, or a CCMerge mode.

In some embodiments, the first determining unit 1301 is further configured to determine cost values of each of at least two groups of candidate model parameters in the parameter candidate list by performing cost calculation on the at least two groups of candidate model parameters; and determine a minimum cost value from the cost values of each of the at least two groups of candidate model parameters, and determine the model parameter of the current block according to a group of candidate model parameters corresponding to the minimum cost value.

In some embodiments, as illustrated in FIG. 13, the encoder 130 further includes an encoding unit 1302. The first determining unit 1301 is further configured to determine an index value of the current block, where the index value indicates an index of the group of candidate model parameters corresponding to the minimum cost value in the parameter candidate list. The encoding unit 1302 is configured to encode the index value, and signal obtained encoded bits into a bitstream.

In some embodiments, the first determining unit 1301 is further configured to determine a candidate model parameter corresponding to the current block and an inheritance mode of the current block according to the group of candidate mode parameters corresponding to the minimum cost value; and determine the model parameter of the current block according to the candidate model parameter and the inheritance mode of the current block.

In some embodiments, the first determining unit 1301 is further configured to determine that a first model parameter in the candidate model parameter is inherited by the current block, if the inheritance mode of the current block is a CCLM mode. The first determining unit 1301 is further configured to determine that a classification threshold and the first model parameter in the candidate model parameter are inherited by the current block, if the inheritance mode of the current block is an MMLM mode. The first determining unit 1301 is further configured to determine that the classification threshold and a convolution parameter in the candidate model parameter are inherited by the current block, if the inheritance mode of the current block is a CCCM mode. The first determining unit 1301 is further configured to, if the inheritance mode of the current block is a GLM mode, determine that a gradient index, the first model parameter, and a second model parameter in the candidate model parameter are inherited by the current block, when the GLM mode is 3-parameter mode; or determine that the first model parameter in the candidate model parameter is inherited by the current block, when the GLM mode is 2-parameter mode. The first determining unit 1301 is further configured to, if the inheritance mode of the current block is a chroma fusion mode, determine a prediction mode inherited by the current block, and determine the model parameter of the current block according to the prediction mode inherited by the current block and the candidate model parameter, when the chroma fusion mode is the chroma fusion merge mode; or determine that the MMLM mode is used for the current block, and determine that the classification threshold and the first model parameter in the candidate model parameter are inherited by the current block, when the chroma fusion mode is not the chroma fusion merge mode. The first determining unit 1301 is further configured to determine a prediction mode inherited by the current block, and determine the model parameter of the current block according to the prediction mode inherited by the current block and the candidate model parameter, if the inheritance mode of the current block is a CCMerge mode.

In some embodiments, the model parameter of the current block includes a first model parameter and a second model parameter. The first model parameter indicates a scaling parameter when the cross-component prediction mode is used for the current block, and the second model parameter indicates an offset parameter when the cross-component prediction mode is used for the current block.

In some embodiments, as illustrated in FIG. 13, the encoder 130 further includes a first prediction unit 1303. The first prediction unit 1303 is configured to determine the first prediction value of the current block based on the cross-component prediction mode; determine a second prediction value of the current block based on a non-cross-component prediction mode; and determine a target prediction value of the current block according to the first prediction value and the second prediction value.

In some embodiments, the encoding unit 1302 is further configured to encode the value of the first syntax flag information, and signal obtained encoded bits into a bitstream.

In some embodiments, the encoding unit 1302 is further configured to encode the value of the first syntax flag information based on a context model, and signal obtained encoded bits into a bitstream.

In some embodiments, the first determining unit 1301 is further configured to determine the context model according to information of a neighbouring block of the current block.

In some embodiments, the first determining unit 1301 is further configured to determine a value of third syntax flag information; determine a value of fourth syntax flag information, if the third syntax flag information indicates that a chroma fusion mode is used for the current block; and determine the value of the second syntax flag information according to the value of the third syntax flag information and the value of the fourth syntax flag information, if the fourth syntax flag information indicates that a linear-model chroma fusion mode is not used for the current block

In some embodiments, the first determining unit 1301 is further configured to set the value of the second syntax flag information to a sum of the value of the third syntax flag information and the value of the fourth syntax flag information.

In some embodiments, the first determining unit 1301 is further configured to set the value of the second syntax flag information to the value of the third syntax flag information, if the third syntax flag information indicates that the chroma fusion mode is not used for the current block.

In some embodiments, the first determining unit 1301 is further configured to determine a value of fifth syntax flag information, if the fourth syntax flag information indicates that the linear-model chroma fusion mode is used for the current block; and determine the value of the second syntax flag information according to the value of the third syntax flag information, the value of the fourth syntax flag information, and the value of the fifth syntax flag information.

In some embodiments, the first determining unit 1301 is further configured to determine that the value of the fifth syntax flag information is a first value, if a single-linear-model chroma fusion mode is used for the current block; and determine that the value of the fifth syntax flag information is a second value, if a multiple-linear-model chroma fusion mode is used for the current block.

In some embodiments, the encoding unit 1302 is further configured to encode the value of the fifth syntax flag information, and signal obtained encoded bits into a bitstream.

In some embodiments, the first determining unit 1301 is further configured to determine that the value of the third syntax flag information is a first value, if the chroma fusion mode is not used for the current block; and determine that the value of the third syntax flag information is a second value, if the chroma fusion mode is used for the current block.

In some embodiments, the encoding unit 1302 is further configured to encode the value of the third syntax flag information, and signal obtained encoded bits into a bitstream.

In some embodiments, the first determining unit 1301 is further configured to determine that the value of the fourth syntax flag information is a first value, if the linear-model chroma fusion mode is not used for the current block; and determine that the value of the fourth syntax flag information is a second value, if the linear-model chroma fusion mode is used for the current block.

In some embodiments, the encoding unit 1302 is further configured to encode the value of the fourth syntax flag information, and signal obtained encoded bits into a bitstream.

In some embodiments, the first determining unit 1301 is further configured to determine that the value of the second syntax flag information is a first value, if a chroma fusion mode is not used for the current block; determine that the value of the second syntax flag information is a second value, if the weighted chroma fusion mode is used for the current block; determine that the value of the second syntax flag information is a third value, if a single-linear-model chroma fusion mode is used for the current block; and determine that the value of the second syntax flag information is a fourth value, if a multiple-linear-model chroma fusion mode is used for the current block.

In some embodiments, the first value is 0, the second value is 1, the third value is 2, and the fourth value is 3.

In some embodiments, the encoding unit 1302 is further configured to encode the value of the second syntax flag information, and signal obtained encoded bits into a bitstream.

In some embodiments, the first determining unit 1301 is further configured to determine a value of sixth syntax flag information; and proceed to determining the mode enable information of the current block, if the sixth syntax flag information indicates that a non-cross-component prediction mode is used for the current block.

In some embodiments, the encoding unit 1302 is further configured to encode the value of the sixth syntax flag information, and signal obtained encoded bits into a bitstream.

In some embodiments, the first determining unit 1301 is further configured to determine a value of seventh syntax flag information; and proceed to determining the mode enable information of the current block, if the seventh syntax flag information indicates that the cross-component prediction mode is used for the current block.

In some embodiments, the encoding unit 1302 is further configured to encode the value of the seventh syntax flag information, and signal obtained encoded bits into a bitstream.

In some embodiments, the first determining unit 1301 is further configured to determine the mode enable information of the current block; determine a value of eighth syntax flag information, if the mode enable information indicates that a CCMerge mode is enabled for the current block; decode the bitstream to determine the index value of the current block, if the eighth syntax flag information indicates that the CCMerge mode is used for the current block; and construct the parameter candidate list of the current block, and determine the model parameter of the current block according to the parameter candidate list and the index value. The model parameter is used for determining the first prediction value of the current block based on the cross-component prediction mode.

In some embodiments, the encoding unit 1302 is further configured to encode the value of the eighth syntax flag information, and signal obtained encoded bits into a bitstream.

It may be understood that in embodiments of the disclosure, the "unit" may be part of the circuitry, part of the processor, part of the program or software, etc., and of course may also be a module, or may be non-modular. In addition, various components described in embodiments of the disclosure may be integrated into one processing unit or may be present as a number of physically separated units, or two or more units may be integrated into one. The integrated unit may take the form of hardware or a software functional module.

If the integrated unit is implemented as a software function module and not sold or used as a stand-alone product, the integrated unit may be stored in a computer-readable storage medium. Based on such understanding, the technical solution of the embodiments in essential, or a part that contributes to the prior art, or all or part of the technical solution, may be embodied in the form of a software product. The computer software product is stored in a storage medium and includes a number of instructions to enable a computer device (which may be a personal computer, a server, or a network device, etc.) or processor to perform all or part of the operations of the method described in the embodiments. The aforementioned storage medium includes a USB stick, a removable hard disk, a read only memory (ROM), a random access memory (RAM), a diskette or a CD-ROM, and other media that may store program codes.

Thus, embodiments of the disclosure provide a computer-readable storage medium, which is applied to the encoder 130 and stores a computer program, the computer program implementing the method described in any one of the foregoing embodiments when executed by the first processor.

Based on the above structure of the encoder 130 and the computer-readable storage medium, reference is made to FIG. 14 which is a schematic diagram of a specific hardware structure of the encoder 130 provided in embodiments of the disclosure. As illustrated in FIG. 14, the encoder 130 may include a first communication interface 1401, a first memory 1402, and a first processor 1403. The components are coupled together via a first bus system 1404. It may be understood that the first bus system 1404 is configured to enable connection and communication between these components. The first bus system 1404 includes a power bus, a control bus, and a status signal bus in addition to a data bus. For the sake of clarity, however, the various buses are labelled as the first bus system 1404 in FIG. 14.

The first communication interface 1401 is configured to receive and transmit signals during information transmission with other external network elements.

The first memory 1402 is configured to store a computer program executable by the first processor 1403.

The first processor 1403 is configured to, when executing the computer program, determine mode enable information of a current block; and determine a value of first syntax flag information, if the mode enable information indicates that a weighted chroma fusion mode is used for the current block and a chroma fusion merge mode is enabled for the current block; construct a parameter candidate list of the current block, if the first syntax flag information indicates that the chroma fusion merge mode is used for the current block; and determine a model parameter of the current block according to the parameter candidate list. The model parameter is used for determining a first prediction value of the current block based on a cross-component prediction mode.

It will be appreciated that the first memory 1402 in embodiments of the disclosure may be a transitory memory or non-transitory memory, or may include both transitory and non-transitory memory. In particular, the non-transitory memory may be an ROM, a programmable ROM (PROM), an erasable PROM (EPROM), an electrically EPROM (EEPROM), or a flash memory. The transitory memory may be an RAM, which is used as an external cache. By way of illustration, but not limitation, many forms of RAM are available, such as a static RAM (SRAM), a dynamic RAM (DRAM), a synchronous DRAM (SDRAM), a double data rate synchronous random access memory (DDRSDRAM), an enhanced SDRAM (ESDRAM), a synchlink DRAM (SLDRAM), and a direct Rambus RAM (DRRAM). The first memory 1402 of the system and method described in this disclosure is intended to include, but is not limited to, these and any other suitable types of memory.

The first processor 1403 may be an integrated circuit chip with signal processing capabilities. During implementation, the operations in the above method may be accomplished by integrated logic circuitry in the hardware of the first processor 1403 or by instructions in the form of software. The first processor 1403 described above may be a general-purpose processor, a digital signal processor (DSP), an application specific integrated circuit (ASIC), a field programmable gate array (FPGA), or other programmable logic device, discrete gate or transistor logic device, discrete hardware component. The various methods, steps and logic block diagrams disclosed in embodiments of the disclosure may be implemented or performed. The general-purpose processor may be a microprocessor or the processor may also be any conventional processor, etc. The operations in the method disclosed in conjunction with embodiments of the disclosure may be performed directly by the hardware decoder processor or by a combination of hardware and software modules in the decoder processor. The software module may be located in a random memory, flash memory, read-only memory, programmable read-only memory or electrically erasable programmable memory, registers and other storage media mature in the art. The storage medium is located in the first memory 1402, and the first processor 1403 reads the information in the first memory 1402 and completes the operations of the above method in combination with its hardware.

It will be appreciated that these embodiments described in this disclosure may be implemented in hardware, software, firmware, middleware, microcode, or combinations thereof. For hardware implementations, the processing unit may be implemented in one or more ASIC, DSP, DSP Device (DSPD), programmable logic device (PLD), FPGA, general-purpose processor, controller, microcontroller, microprocessor, other electronic unit for performing the functions described in this disclosure, or a combination thereof. For software implementations, the technology described in this disclosure may be implemented by means of modules (e.g. procedures, functions, etc.) that perform the functions described in this disclosure. The software code may be stored in a memory and executed by a processor. The memory may be implemented in the processor or outside the processor.

Optionally, as another embodiment, the first processor 1403 is further configured to perform the method described in any one of the foregoing embodiments when executing the computer program.

An encoder is provided in this embodiment. For the encoder, when the weighted chroma fusion mode is used for the current block, considering a usage rate of the chroma fusion merge mode, the determination of whether the chroma fusion merge mode is enabled for the current block is added herein. The value of the first syntax flag information needs to be encoded only when the chroma fusion merge mode is enabled for the current block. In this way, codewords can be effectively saved, additional bit overhead caused by the first syntax flag information can be avoided, and thus the coding efficiency can be improved.

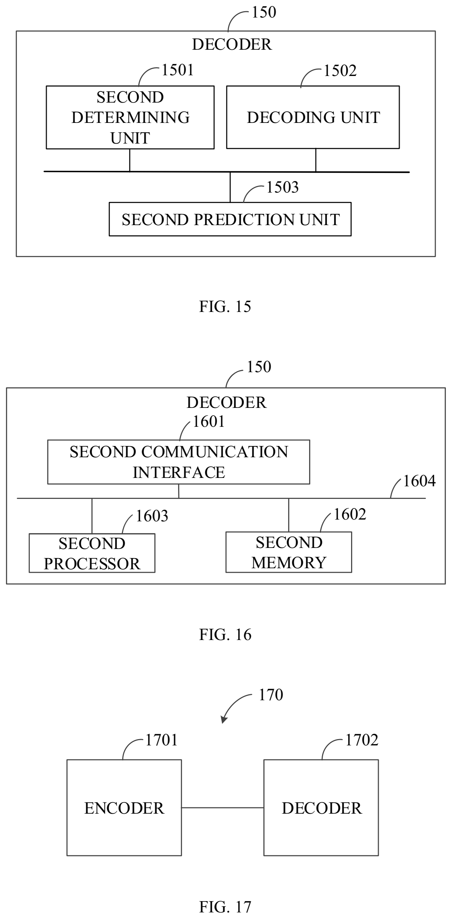

In still another embodiment of the disclosure, based on the same inventive concept of the foregoing embodiments, reference is made to FIG. 15 which is a schematic structural diagram of a decoder provided in embodiments of the disclosure. As illustrated in FIG. 15, the decoder 150 may include a second determining unit 1501 and a decoding unit 1502. The second determining unit 1501 is configured to determine mode enable information of a current block. The decoding unit 1502 is configured to decode a bitstream to determine a value of first syntax flag information, if the mode enable information indicates that a weighted chroma fusion mode is used for the current block and a chroma fusion merge mode is enabled for the current block; and decode the bitstream to determine an index value of the current block, if the first syntax flag information indicates that the chroma fusion merge mode is used for the current block. The second determining unit 1501 is further configured to construct a parameter candidate list of the current block, and determine a model parameter of the current block according to the parameter candidate list and the index value. The model parameter is used for determining a first prediction value of the current block based on a cross-component prediction mode.

In some embodiments, the second determining unit 1501 is further configured to determine the model parameter of the current block according to a reference sample of the current block, if the mode enable information indicates that the weighted chroma fusion mode is used for the current block and the chroma fusion merge mode is disabled for the current block. The model parameter is used for determining the first prediction value of the current block based on the cross-component prediction mode.

In some embodiments, the decoding unit 1502 is further configured to decode the bitstream to determine a value of second syntax flag information. The second determining unit 1501 is further configured to determine an enable signal of the current block, if the second syntax flag information indicates that the weighted chroma fusion mode is used for the current block. The enable signal indicates whether the chroma fusion merge mode is enabled for the current block.

In some embodiments, the second determining unit 1501 is further configured to determine the enable signal of the current block according to information of a neighbouring block of the current block.

In some embodiments, the second determining unit 1501 is further configured to determine mode information of the neighbouring block of the current block; and determine the enable signal of the current block according to the mode information of the neighbouring block. The neighbouring block includes at least one of: at least one left neighbouring block on the left of the current block, or at least one top neighbouring block on the top of the current block.

In some embodiments, the second determining unit 1501 is further configured to determine that the enable signal is a first value, if at least one of the mode information of the neighbouring block is a non-cross-component prediction mode; and determine that the enable signal is a second value, if each of the mode information of the neighbouring block is the cross-component prediction mode.

In some embodiments, the second determining unit 1501 is further configured to determine that the enable signal is a first value, if each of the mode information of the neighbouring block is a non-cross-component prediction mode; and determine that the enable signal is a second value. if at least one of the mode information of the neighbouring block is the cross-component prediction mode.

In some embodiments, the second determining unit 1501 is further configured to determine that the chroma fusion merge mode is disabled for the current block, if the enable signal is a first value; and determine that the chroma fusion merge mode is enabled for the current block, if the enable signal is a second value.

In some embodiments, the second determining unit 1501 is further configured to determine that the mode enable information indicates that the weighted chroma fusion mode is used for the current block and the chroma fusion merge mode is disabled for the current block, if the value of the second syntax flag information is the second value and the enable signal is the first value; and determine that the mode enable information indicates that the weighted chroma fusion mode is used for the current block and the chroma fusion merge mode is enabled for the current block, if the value of the second syntax flag information is the second value and the enable signal is the second value.

In some embodiments, the second determining unit 1501 is further configured to determine the model parameter of the current block according to a reference sample of the current block, if the first syntax flag information indicates that the chroma fusion merge mode is not used for the current block. The model parameter is used for determining the first prediction value of the current block based on the cross-component prediction mode

In some embodiments, the second determining unit 1501 is further configured to determine the reference sample of the current block according to a neighbouring region of the current block. The neighbouring region of the current block includes at least one of: a left neighbouring region of the current block or a top neighbouring region of the current block.

In some embodiments, the second determining unit 1501 is further configured to determine a reconstructed luma value and a reconstructed chroma value of the reference sample; and obtain the model parameter of the current block by performing model parameter calculation according to the reconstructed luma value and the reconstructed chroma value.

In some embodiments, the second determining unit 1501 is further configured to determine neighbouring blocks of the current block; determine a model parameter of each of the at least one block to obtain at least one group of first candidate model parameters, if the cross-component prediction mode is used for at least one block among the neighbouring blocks; and fill the at least one group of first candidate model parameters in the parameter candidate list.

In some embodiments, the neighbouring block includes: a block spatially neighbouring to the current block and/or a block temporally neighbouring to the current block.

In some embodiments, the second determining unit 1501 is further configured to, when the parameter candidate list is not full, determine non-neighbouring blocks of the current block; determine a model parameter of each of the at least one block to obtain at least one group of second candidate model parameters, if the cross-component prediction mode is used for at least one block among the non-neighbouring blocks; and fill the at least one group of second candidate model parameters in the parameter candidate list.

In some embodiments, the second determining unit 1501 is further configured to, when the parameter candidate list is not full, determine at least one group of third candidate model parameters according to preset parameter information; and fill the at least one group of third candidate model parameters in the parameter candidate list.

In some embodiments, the preset parameter information at least includes a preset value of a first model parameter, and the preset value of the first model parameter is at least one of: 0, 1/8, -1/8, 2/8, -2/8, or 3/8.

In some embodiments, the cross-component prediction mode at least includes one of: a CCLM mode, an MMLM mode, a CCCM mode, a GLM mode, a chroma fusion mode, or a CCMerge mode.

In some embodiments, the second determining unit 1501 is further configured to determine a group of candidate model parameters corresponding to the index value in the parameter candidate list; determine a candidate model parameter corresponding to the current block and an inheritance mode of the current block according to the group of candidate mode parameters; and determine the model parameter of the current block according to the candidate model parameter and the inheritance mode of the current block.

In some embodiments, the second determining unit 1501 is further configured to determine that a first model parameter in the candidate model parameter is inherited by the current block, if the inheritance mode of the current block is the CCLM mode. The second determining unit 1501 is further configured to determine that a classification threshold and the first model parameter in the candidate model parameter are inherited by the current block, if the inheritance mode of the current block is the MMLM mode. The second determining unit 1501 is further configured to determine that the classification threshold and a convolution parameter in the candidate model parameter are inherited by the current block, if the inheritance mode of the current block is the CCCM mode. The second determining unit 1501 is further configured to, if inheritance mode of the current block is the GLM mode, determine that a gradient index, the first model parameter, and a second model parameter in the candidate model parameter are inherited by the current block, when the GLM mode is 3-parameter mode; or determine that the first model parameter in the candidate model parameter is inherited by the current block, when the GLM mode is 2-parameter mode. The second determining unit 1501 is further configured to, if the inheritance mode of the current block is the chroma fusion mode, determine a prediction mode inherited by the current block, and determine the model parameter of the current block according to the prediction mode inherited by the current block and the candidate model parameter, when the chroma fusion mode is the chroma fusion merge mode; or determine that the MMLM mode is used for the current block, and determine that the classification threshold and the first model parameter in the candidate model parameter are inherited by the current block, when the chroma fusion mode is not the chroma fusion merge mode. The second determining unit 1501 is further configured to determine a prediction mode inherited by the current block, and determine the model parameter of the current block according to the prediction mode inherited by the current block and the candidate model parameter, if the inheritance mode of the current block is the CCMerge mode.

In some embodiments, the model parameter of the current block includes a first model parameter and a second model parameter. The first model parameter indicates a scaling parameter when the cross-component prediction mode is used for the current block, and the second model parameter indicates an offset parameter when the cross-component prediction mode is used for the current block.

In some embodiments, as illustrated in FIG. 15, the decoder 150 further includes a second prediction unit 1503. The second prediction unit 1503 is configured to determine the first prediction value of the current block based on the cross-component prediction mode; determine a second prediction value of the current block based on a non-cross-component prediction mode; and determine a target prediction value of the current block according to the first prediction value and the second prediction value.

In some embodiments, the decoding unit 1502 is further configured to decode the bitstream based on a context model, to determine the value of the first syntax flag information.

In some embodiments, the second determining unit 1501 is further configured to determine the context model according to information of a neighbouring block of the current block.

In some embodiments, the decoding unit 1502 is further configured to decode the bitstream to determine a value of third syntax flag information; decode the bitstream to determine a value of fourth syntax flag information, if the third syntax flag information indicates that a chroma fusion mode is used for the current block; and determine the value of the second syntax flag information according to the value of the third syntax flag information and the value of the fourth syntax flag information, if the fourth syntax flag information indicates that a linear-model chroma fusion mode is not used for the current block.

In some embodiments, the second determining unit 1501 is further configured to set the value of the second syntax flag information to a sum of the value of the third syntax flag information and the value of the fourth syntax flag information.

In some embodiments, the second determining unit 1501 is further configured to set the value of the second syntax flag information to the value of the third syntax flag information, if the third syntax flag information indicates that the chroma fusion mode is not used for the current block.

In some embodiments, the decoding unit 1502 is further configured to decode the bitstream to determine a value of fifth syntax flag information, if the fourth syntax flag information indicates that the linear-model chroma fusion mode is used for the current block. The second determining unit 1501 is further configured to determine the value of the second syntax flag information according to the value of the third syntax flag information, the value of the fourth syntax flag information, and the value of the fifth syntax flag information.

In some embodiments, the second determining unit 1501 is further configured to determine that the fifth syntax flag information indicates that a single-linear-model chroma fusion mode is used for the current block, if the value of the fifth syntax flag information is a first value; and determine that the fifth syntax flag information indicates that a multiple-linear-model chroma fusion mode is used for the current block, if the value of the fifth syntax flag information is a second value.

In some embodiments, the second determining unit 1501 is further configured to determine that the third syntax flag information indicates that the chroma fusion mode is not used for the current block, if the value of the third syntax flag information is a first value; and determine that the third syntax flag information indicates that the chroma fusion mode is used for the current block, if the value of the third syntax flag information is a second value.

In some embodiments, the second determining unit 1501 is further configured to determine that the fourth syntax flag information indicates that the linear-model chroma fusion mode is not used for the current block, if the value of the fourth syntax flag information is a first value; and determine that the fourth syntax flag information indicates that the linear-model chroma fusion mode is used for the current block, if the value of the fourth syntax flag information is a second value.

In some embodiments, the second determining unit 1501 is further configured to determine that the second syntax flag information indicates that a chroma fusion mode is not used for the current block, if the value of the second syntax flag information is a first value; determine that the second syntax flag information indicates that the weighted chroma fusion mode is used for the current block, if the value of the second syntax flag information is a second value; determine that the second syntax flag information indicates that a single-linear-model chroma fusion mode is used for the current block, if the value of the second syntax flag information is a third value; and determine that the second syntax flag information indicates that a multiple-linear-model chroma fusion mode is used for the current block, if the value of the second syntax flag information is a fourth value.

In some embodiments, the first value is 0, the second value is 1, the third value is 2, and the fourth value is 3.

In some embodiments, the decoding unit 1502 is further configured to decode the bitstream to determine a value of sixth syntax flag information; and proceed to determining the mode enable information of the current block, if the sixth syntax flag information indicates that a non-cross-component prediction mode is used for the current block.

In some embodiments, the decoding unit 1502 is further configured to decode the bitstream to determine a value of seventh syntax flag information; and proceed to determining the mode enable information of the current block, if the seventh syntax flag information indicates that the cross-component prediction mode is used for the current block.

In some embodiments, the second determining unit 1501 is further configured to determine the mode enable information of the current block. The decoding unit 1502 is further configured to decode the bitstream to determine a value of eighth syntax flag information, if the mode enable information indicates that a CCMerge mode is enabled for the current block; and decode the bitstream to determine the index value of the current block, if the eighth syntax flag information indicates that the CCMerge mode is used for the current block. The second determining unit 1501 is further configured to construct the parameter candidate list of the current block, and determine the model parameter of the current block according to the parameter candidate list and the index value. The model parameter is used for determining the first prediction value of the current block based on the cross-component prediction mode.

It may be understood that in the embodiments, the "unit" may be part of the circuitry, part of the processor, part of the program or software, etc., and of course may also be a module, or may be non-modular. In addition, various components described in the embodiments may be integrated into one processing unit or may be present as a number of physically separated units, or two or more units may be integrated into one. The integrated units may be implemented either in the form of hardware or in the form of software function modules.

If the integrated unit is implemented as a software function module and not sold or used as a stand-alone product, the integrated unit may be stored in a computer-readable storage medium. Based on such understanding, the embodiments provide a computer-readable storage medium, which is applied to the decoder 150 and stores a computer program, the computer program implementing the method described in any one of the foregoing embodiments when executed by the second processor.

Based on the above structure of the decoder 150 and the computer-readable storage medium, reference is made to FIG. 16 which is a schematic diagram of a specific hardware structure of the decoder 150 provided in embodiments of the disclosure. As illustrated in FIG. 16, the decoder 150 may include a second communication interface 1601, a second memory 1602, and a second processor 1603. The components are coupled together via a second bus system 1604. It may be understood that the second bus system 1604 is configured to enable connection and communication between these components. The second bus system 1604 includes a power bus, a control bus, and a status signal bus in addition to a data bus. For the sake of clarity, however, the various buses are labelled as second bus system 1604 in FIG. 16.

The second communication interface 1601 is configured to receive and transmit signals during information transmission with other external network elements.

The second memory 1602 is configured to store a computer program executable by the second processor 1603.

The second processor 1603 is configured to, when executing the computer program, determine mode enable information of a current block; decode a bitstream to determine a value of first syntax flag information, if the mode enable information indicates that a weighted chroma fusion mode is used for the current block and a chroma fusion merge mode is enabled for the current block; decode the bitstream to determine an index value of the current block, if the first syntax flag information indicates that the chroma fusion merge mode is used for the current block; and construct a parameter candidate list of the current block, and determine a model parameter of the current block according to the parameter candidate list and the index value. The model parameter is used for determining a first prediction value of the current block based on a cross-component prediction mode.

Optionally, as another embodiment, the second processor 1603 is further configured to perform the method described in any one of the foregoing embodiments when executing the computer program.

It may be understood that, in terms of hardware function, the second memory 1602 is similar to the first memory 1402, and the second processor 1603 is similar to the first processor 1403, which will not be elaborated herein.

A decoder is provided in this embodiment. For the decoder, when the weighted chroma fusion mode is used for the current block, considering a usage rate of the chroma fusion merge mode, the determination of whether the chroma fusion merge mode is enabled for the current block is added herein. The value of the first syntax flag information needs to be decoded only when the chroma fusion merge mode is enabled for the current block. In this way, codewords can be effectively saved, additional bit overhead caused by the first syntax flag information can be avoided, and thus the coding efficiency can be improved.

In still another embodiment of the disclosure, reference is made to FIG. 17 which is a schematic structural diagram of a coding system provided in embodiments of the disclosure. As illustrated in FIG. 17, the coding system 170 may include an encoder 1701 and a decoder 1702.

In embodiments of the disclosure, the encoder 1701 may be an encoder described in any one of the foregoing embodiments, and the decoder 1702 may be a decoder described in any one of the foregoing embodiments.

It may be noted that in this disclosure the terms "include", "comprise" or any other variant thereof are intended to cover non-exclusive inclusion, such that a process, method, article, or apparatus including a range of elements includes not only those elements, but also includes other elements that are not explicitly listed or are also inherent to such a process, method, article, or apparatus. Without further limitation, an element qualified by the statement "including a..." does not preclude the existence of another identical element in the process, method, article, or apparatus including that element.

The above serial numbers of the embodiments of the disclosure are for descriptive purposes only and do not represent the merits of the embodiments.

The methods disclosed in the several method embodiments provided in this disclosure may be combined in any way to obtain new method embodiments without conflict.

The features disclosed in the several product embodiments provided in this disclosure may be combined in any way to obtain new product embodiments without conflict.

The features disclosed in several method or apparatus embodiments provided in this disclosure may be combined in any way to obtain new method embodiments or apparatus embodiments without conflict.

The foregoing is only a specific implementation of the present disclosure, but the scope of protection of the present disclosure is not limited thereto, and any variation or substitution readily conceivable by any person skilled in the art within the technical scope disclosed in the present disclosure shall be covered by the scope of protection of the present disclosure. Accordingly, the scope of protection of this disclosure shall be governed by the scope of protection of the stated claims.

INDUSTRIAL APPLICABILITY

In embodiments of the disclosure, at both the encoding end and the decoding end, when a weighted chroma fusion mode is used for a current block, whether a chroma fusion merge mode is enabled for the current block needs to be further determined. A value of first syntax flag information needs to be coded only when the chroma fusion merge mode is enabled for the current block. Then, when the first syntax flag information indicates that the chroma fusion merge mode is used for the current block, a parameter candidate list may be constructed, and a model parameter of the current block is obtained therefrom according to an index value. The model parameter is used for determining a first prediction value of the current block based on a cross-component prediction mode. As such, when the weighted chroma fusion mode is used for the current block, considering a usage rate of the chroma fusion merge mode, the determination of whether the chroma fusion merge mode is enabled for the current block is added herein. The value of the first syntax flag information needs to be coded only when the chroma fusion merge mode is enabled for the current block. In this way, codewords can be effectively saved, the efficiency of chroma prediction can also be improved, and thus the coding efficiency can be further improved.

**Claims**

1. A decoding method, applied to a decoder and comprising:

   determining mode enable information of a current block;
   in response to the mode enable information indicating that a weighted chroma fusion mode is used for the current block and a chroma fusion merge mode is enabled for the current block, decoding a bitstream to determine a value of first syntax flag information;
   in response to the first syntax flag information indicating that the chroma fusion merge mode is used for the current block, decoding the bitstream to determine an index value of the current block; and
   constructing a parameter candidate list of the current block, and determining a model parameter of the current block according to the parameter candidate list and the index value, wherein the model parameter is used for determining a first prediction value of the current block based on a cross-component prediction mode.

2. The method of claim 1, further comprising:
   in response to the mode enable information indicating that the weighted chroma fusion mode is used for the current block and the chroma fusion merge mode is disabled for the current block, determining the model parameter of the current block according to a reference sample of the current block, wherein the model parameter is used for determining the first prediction value of the current block based on the cross-component prediction mode.

3. The method of claim 1, wherein determining the mode enable information of the current block comprises:

   decoding the bitstream to determine a value of second syntax flag information; and
   in response to the second syntax flag information indicating that the weighted chroma fusion mode is used for the current block, determining an enable signal of the current block, wherein the enable signal indicates whether the chroma fusion merge mode is enabled for the current block.

4. The method of claim 3, wherein determining the enable signal of the current block comprises:
   determining the enable signal of the current block according to information of a neighbouring block of the current block.

5. The method of claim 4, wherein determining the enable signal of the current block according to the information of the neighbouring block of the current block comprises:

   determining mode information of the neighbouring block of the current block; and
   determining the enable signal of the current block according to the mode information of the neighbouring block, wherein
   the neighbouring block comprises at least one of: at least one left neighbouring block on the left of the current block, or at least one top neighbouring block on the top of the current block.

6. The method of claim 5, wherein determining the enable signal of the current block according to the mode information of the neighbouring block comprises:

   in response to at least one of the mode information of the neighbouring block being a non-cross-component prediction mode, determining that the enable signal is a first value; and
   in response to each of the mode information of the neighbouring block being the cross-component prediction mode, determining that the enable signal is a second value.

7. The method of claim 5, wherein determining the enable signal of the current block according to the mode information of the neighbouring block comprises:

   in response to each of the mode information of the neighbouring block being a non-cross-component prediction mode, determining that the enable signal is a first value; and
   in response to at least one of the mode information of the neighbouring block being the cross-component prediction mode, determining that the enable signal is a second value.

8. The method of claim 3, further comprising:

in response to the enable signal being a first value, determining that the chroma fusion merge mode is disabled for the current block; and
in response to the enable signal being a second value, determining that the chroma fusion merge mode is enabled for the current block.

9. The method of claim 8, further comprising:

in response to the value of the second syntax flag information being the second value and the enable signal being the first value, determining that the mode enable information indicates that the weighted chroma fusion mode is used for the current block and the chroma fusion merge mode is disabled for the current block; and
in response to the value of the second syntax flag information being the second value and the enable signal being the second value, determining that the mode enable information indicates that the weighted chroma fusion mode is used for the current block and the chroma fusion merge mode is enabled for the current block.

10. The method of claim 1, further comprising:
in response to the first syntax flag information indicating that the chroma fusion merge mode is not used for the current block, determining the model parameter of the current block according to a reference sample of the current block, wherein the model parameter is used for determining the first prediction value of the current block based on the cross-component prediction mode.

11. The method of claim 2 or 10, further comprising:

determining the reference sample of the current block according to a neighbouring region of the current block, wherein
the neighbouring region of the current block comprises at least one of: a left neighbouring region of the current block or a top neighbouring region of the current block.

12. The method of claim 11, wherein determining the model parameter of the current block according to the reference sample of the current block comprises:

determining a reconstructed luma value and a reconstructed chroma value of the reference sample; and
obtaining the model parameter of the current block by performing model parameter calculation according to the reconstructed luma value and the reconstructed chroma value.

13. The method of claim 1, wherein constructing the parameter candidate list of the current block comprises:

determining neighbouring blocks of the current block;
in response to the cross-component prediction mode being used for at least one block among the neighbouring blocks, determining a model parameter of each of the at least one block to obtain at least one group of first candidate model parameters; and
filling the at least one group of first candidate model parameters in the parameter candidate list.

14. The method of claim 13, wherein the neighbouring block comprises: a block spatially neighbouring to the current block and/or a block temporally neighbouring to the current block.

15. The method of claim 13, wherein in response to the parameter candidate list being not full, constructing the parameter candidate list of the current block further comprises:

determining non-neighbouring blocks of the current block;
in response to the cross-component prediction mode being used for at least one block among the non-neighbouring blocks, determining a model parameter of each of the at least one block to obtain at least one group of second candidate model parameters; and
filling the at least one group of second candidate model parameters in the parameter candidate list.

16. The method of claim 15, wherein in response to the parameter candidate list being not full, constructing the parameter candidate list of the current block further comprises:

determining at least one group of third candidate model parameters according to preset parameter information; and

filling the at least one group of third candidate model parameters in the parameter candidate list.

17. The method of claim 16, wherein the preset parameter information at least comprises a preset value of a first model parameter, and the preset value of the first model parameter is at least one of:
0, 1/8, -1/8, 2/8, -2/8, or 3/8.

18. The method of any one of claims 1 to 17, wherein the cross-component prediction mode at least comprises one of: a cross-component linear model (CCLM) mode, a multi-model linear model (MMLM) mode, a convolutional cross-component model (CCCM) mode, a gradient linear model (GLM) mode, a chroma fusion mode, or a cross-component merge (CCMerge) mode.

19. The method of claim 18, wherein determining the model parameter of the current block according to the parameter candidate list and the index value comprises:

determining a group of candidate model parameters corresponding to the index value in the parameter candidate list;

determining a candidate model parameter corresponding to the current block and an inheritance mode of the current block according to the group of candidate mode parameters; and

determining the model parameter of the current block according to the candidate model parameter and the inheritance mode of the current block.

20. The method of claim 19, wherein determining the model parameter of the current block according to the candidate model parameter and the inheritance mode of the current block comprises:

in response to the inheritance mode of the current block being the CCLM mode, determining that a first model parameter in the candidate model parameter is inherited by the current block;

in response to the inheritance mode of the current block being the MMLM mode, determining that a classification threshold and the first model parameter in the candidate model parameter are inherited by the current block;

in response to the inheritance mode of the current block being the CCCM mode, determining that the classification threshold and a convolution parameter in the candidate model parameter are inherited by the current block;

in response to the inheritance mode of the current block being the GLM mode, when the GLM mode is 3-parameter mode, determining that a gradient index, the first model parameter, and a second model parameter in the candidate model parameter are inherited by the current block; or when the GLM mode is 2-parameter mode, determining that the first model parameter in the candidate model parameter is inherited by the current block;

in response to the inheritance mode of the current block being the chroma fusion mode, when the chroma fusion mode is the chroma fusion merge mode, determining a prediction mode inherited by the current block, and determining the model parameter of the current block according to the prediction mode inherited by the current block and the candidate model parameter; or when the chroma fusion mode is not the chroma fusion merge mode, determining that the MMLM mode is used for the current block, and determining that the classification threshold and the first model parameter in the candidate model parameter are inherited by the current block; and

in response to the inheritance mode of the current block being the CCMerge mode, determining a prediction mode inherited by the current block, and determining the model parameter of the current block according to the prediction mode inherited by the current block and the candidate model parameter.

21. The method of claim 1, wherein the model parameter of the current block comprises a first model parameter and a second model parameter, wherein

the first model parameter indicates a scaling parameter when the cross-component prediction mode is used for the current block; and

the second model parameter indicates an offset parameter when the cross-component prediction mode is used for the current block.

22. The method of claim 1, further comprising:

determining the first prediction value of the current block based on the cross-component prediction mode;

determining a second prediction value of the current block based on a non-cross-component prediction mode;

and
determining a target prediction value of the current block according to the first prediction value and the second prediction value.

23. The method of any one of claims 1 to 22, wherein decoding the bitstream to determine the value of the first syntax flag information comprises:
decoding the bitstream based on a context model, to determine the value of the first syntax flag information.

24. The method of claim 23, further comprising:
determining the context model according to information of a neighbouring block of the current block.

25. The method of claim 3, wherein decoding the bitstream to determine the value of the second syntax flag information comprises:

decoding the bitstream to determine a value of third syntax flag information;
in response to the third syntax flag information indicating that a chroma fusion mode is used for the current block, decoding the bitstream to determine a value of fourth syntax flag information; and
in response to the fourth syntax flag information indicating that a linear-model chroma fusion mode is not used for the current block, determining the value of the second syntax flag information according to the value of the third syntax flag information and the value of the fourth syntax flag information.

26. The method of claim 25, wherein determining the value of the second syntax flag information according to the value of the third syntax flag information and the value of the fourth syntax flag information comprises:
setting the value of the second syntax flag information to a sum of the value of the third syntax flag information and the value of the fourth syntax flag information.

27. The method of claim 25, further comprising:
in response to the third syntax flag information indicating that the chroma fusion mode is not used for the current block, setting the value of the second syntax flag information to the value of the third syntax flag information.

28. The method of claim 25, further comprising:

in response to the fourth syntax flag information indicating that the linear-model chroma fusion mode is used for the current block, decoding the bitstream to determine a value of fifth syntax flag information; and
determining the value of the second syntax flag information according to the value of the third syntax flag information, the value of the fourth syntax flag information, and the value of the fifth syntax flag information.

29. The method of claim 28, further comprising:

in response to the value of the fifth syntax flag information being a first value, determining that the fifth syntax flag information indicates that a single-linear-model chroma fusion mode is used for the current block; and
in response to the value of the fifth syntax flag information being a second value, determining that the fifth syntax flag information indicates that a multiple-linear-model chroma fusion mode is used for the current block.

30. The method of claim 25, further comprising:

in response to the value of the third syntax flag information being a first value, determining that the third syntax flag information indicates that the chroma fusion mode is not used for the current block; and
in response to the value of the third syntax flag information being a second value, determining that the third syntax flag information indicates that the chroma fusion mode is used for the current block.

31. The method of claim 25, further comprising:

in response to the value of the fourth syntax flag information being a first value, determining that the fourth syntax flag information indicates that the linear-model chroma fusion mode is not used for the current block; and
in response to the value of the fourth syntax flag information being a second value, determining that the fourth syntax flag information indicates that the linear-model chroma fusion mode is used for the current block.

**32.** The method of claim 3, further comprising:

in response to the value of the second syntax flag information being a first value, determining that the second syntax flag information indicates that a chroma fusion mode is not used for the current block;
in response to the value of the second syntax flag information being a second value, determining that the second syntax flag information indicates that the weighted chroma fusion mode is used for the current block;
in response to the value of the second syntax flag information being a third value, determining that the second syntax flag information indicates that a single-linear-model chroma fusion mode is used for the current block; and
in response to the value of the second syntax flag information being a fourth value, determining that the second syntax flag information indicates that a multiple-linear-model chroma fusion mode is used for the current block.

**33.** The method of claim 32, wherein the first value is 0, the second value is 1, the third value is 2, and the fourth value is 3.

**34.** The method of any one of claims 1 to 33, further comprising:

decoding the bitstream to determine a value of sixth syntax flag information; and
in response to the sixth syntax flag information indicating that a non-cross-component prediction mode is used for the current block, proceeding to determining the mode enable information of the current block.

**35.** The method of any one of claims 1 to 33, further comprising:

decoding the bitstream to determine a value of seventh syntax flag information; and
in response to the seventh syntax flag information indicating that the cross-component prediction mode is used for the current block, proceeding to determining the mode enable information of the current block.

**36.** The method of claim 1, further comprising:

determining the mode enable information of the current block;
in response to the mode enable information indicating that a CCMerge mode is enabled for the current block, decoding the bitstream to determine a value of eighth syntax flag information;
in response to the eighth syntax flag information indicating that the CCMerge mode is used for the current block, decoding the bitstream to determine the index value of the current block; and
constructing the parameter candidate list of the current block, and determining the model parameter of the current block according to the parameter candidate list and the index value, wherein the model parameter is used for determining the first prediction value of the current block based on the cross-component prediction mode.

**37.** An encoding method, applied to an encoder and comprising:

determining mode enable information of a current block;
in response to the mode enable information indicating that a weighted chroma fusion mode is used for the current block and a chroma fusion merge mode is enabled for the current block, determining a value of first syntax flag information;
in response to the first syntax flag information indicating that the chroma fusion merge mode is used for the current block, constructing a parameter candidate list of the current block;
determining a model parameter of the current block according to the parameter candidate list, wherein the model parameter is used for determining a first prediction value of the current block based on a cross-component prediction mode.

**38.** The method of claim 37, further comprising:
in response to the mode enable information indicating that the weighted chroma fusion mode is used for the current block and the chroma fusion merge mode is disabled for the current block, determining the model parameter of the current block according to a reference sample of the current block, wherein the model parameter is used for determining the first prediction value of the current block based on the cross-component prediction mode.

**39.** The method of claim 37, wherein determining the mode enable information of the current block comprises:

determining a value of second syntax flag information; and
in response to the second syntax flag information indicating that the weighted chroma fusion mode is used for the current block, determining an enable signal of the current block, wherein the enable signal indicates whether the chroma fusion merge mode is enabled for the current block.

40. The method of claim 39, wherein determining the enable signal of the current block comprises:
    determining the enable signal of the current block according to information of a neighbouring block of the current block.

41. The method of claim 40, wherein determining the enable signal of the current block according to the information of the neighbouring block of the current block comprises:

    determining mode information of the neighbouring block of the current block; and
    determining the enable signal of the current block according to the mode information of the neighbouring block, wherein
    the neighbouring block comprises at least one of: at least one left neighbouring block on the left of the current block, or at least one top neighbouring block on the top of the current block.

42. The method of claim 41, wherein determining the enable signal of the current block according to the mode information of the neighbouring block comprises:

    in response to at least one of the mode information of the neighbouring block being a non-cross-component prediction mode, determining that the enable signal is a first value; and
    in response to each of the mode information of the neighbouring block being the cross-component prediction mode, determining that the enable signal is a second value.

43. The method of claim 41, wherein determining the enable signal of the current block according to the mode information of the neighbouring block comprises:

    in response to each of the mode information of the neighbouring block being a non-cross-component prediction mode, determining that the enable signal is a first value; and
    in response to at least one of the mode information of the neighbouring block being the cross-component prediction mode, determining that the enable signal is a second value.

44. The method of claim 39, further comprising:

    in response to the enable signal being a first value, determining that the chroma fusion merge mode is disabled for the current block; and
    in response to the enable signal being a second value, determining that the chroma fusion merge mode is enabled for the current block.

45. The method of claim 44, further comprising:

    in response to the value of the second syntax flag information being the second value and the enable signal being the first value, determining that the mode enable information indicates that the weighted chroma fusion mode is used for the current block and the chroma fusion merge mode is disabled for the current block; and
    in response to the value of the second syntax flag information being the second value and the enable signal being the second value, determining that the mode enable information indicates that the weighted chroma fusion mode is used for the current block and the chroma fusion merge mode is enabled for the current block.

46. The method of claim 37, further comprising:
    in response to the first syntax flag information indicating that the chroma fusion merge mode is not used for the current block, determining the model parameter of the current block according to a reference sample of the current block, wherein the model parameter is used for determining the first prediction value of the current block based on the cross-component prediction mode.

47. The method of claim 38 or 46, further comprising:

    determining the reference sample of the current block according to a neighbouring region of the current block, wherein
    the neighbouring region of the current block comprises at least one of: a left neighbouring region of the current block or a top neighbouring region of the current block.

48. The method of claim 47, wherein determining the model parameter of the current block according to the reference sample of the current block comprises:

determining a reconstructed luma value and a reconstructed chroma value of the reference sample; and obtaining the model parameter of the current block by performing model parameter calculation according to the reconstructed luma value and the reconstructed chroma value.

49. The method of claim 37, wherein constructing the parameter candidate list of the current block comprises:

determining neighbouring blocks of the current block;
in response to the cross-component prediction mode being used for at least one block among the neighbouring blocks, determining a model parameter of each of the at least one block to obtain at least one group of first candidate model parameters; and
filling the at least one group of first candidate model parameters in the parameter candidate list.

50. The method of claim 49, wherein the neighbouring block comprises: a block spatially neighbouring to the current block and/or a block temporally neighbouring to the current block.

51. The method of claim 49, wherein in response to the parameter candidate list being not full, constructing the parameter candidate list of the current block further comprises:

determining non-neighbouring blocks of the current block;
in response to the cross-component prediction mode being used for at least one block among the non-neighbouring blocks, determining a model parameter of each of the at least one block to obtain at least one group of second candidate model parameters; and
filling the at least one group of second candidate model parameters in the parameter candidate list.

52. The method of claim 51, wherein in response to the parameter candidate list being not full, constructing the parameter candidate list of the current block further comprises:

determining at least one group of third candidate model parameters according to preset parameter information; and
filling the at least one group of third candidate model parameters in the parameter candidate list.

53. The method of claim 52, wherein the preset parameter information at least comprises a preset value of a first model parameter, and the preset value of the first model parameter is at least one of:
0, 1/8, -1/8, 2/8, -2/8, or 3/8.

54. The method of any one of claims 37 to 53, wherein the cross-component prediction mode at least comprises one of: a cross-component linear model (CCLM) mode, a multi-model linear model (MMLM) mode, a convolutional cross-component model (CCCM) mode, a gradient linear model (GLM) mode, a chroma fusion mode, or a cross-component merge (CCMerge) mode.

55. The method of claim 37, wherein determining the model parameter of the current block according to the parameter candidate list comprises:

determining cost values of each of at least two groups of candidate model parameters in the parameter candidate list by performing cost calculation on the at least two groups of candidate model parameters; and
determining a minimum cost value from the cost values of each of the at least two groups of candidate model parameters, and determining the model parameter of the current block according to a group of candidate model parameters corresponding to the minimum cost value.

56. The method of claim 55, further comprising:

determining an index value of the current block, wherein the index value indicates an index of the group of candidate model parameters corresponding to the minimum cost value in the parameter candidate list; and

encoding the index value, and signalling obtained encoded bits into a bitstream.

57. The method of claim 55, wherein determining the model parameter of the current block according to the group of candidate model parameters corresponding to the minimum cost value comprises:

determining a candidate model parameter corresponding to the current block and an inheritance mode of the current block according to the group of candidate mode parameters corresponding to the minimum cost value; and
determining the model parameter of the current block according to the candidate model parameter and the inheritance mode of the current block.

58. The method of claim 57, wherein determining the model parameter of the current block according to the candidate model parameter and the inheritance mode of the current block comprises:

in response to the inheritance mode of the current block being a CCLM mode, determining that a first model parameter in the candidate model parameter is inherited by the current block;
in response to the inheritance mode of the current block being an MMLM mode, determining that a classification threshold and the first model parameter in the candidate model parameter are inherited by the current block;
in response to the inheritance mode of the current block being a CCCM mode, determining that the classification threshold and a convolution parameter in the candidate model parameter are inherited by the current block;
in response to the inheritance mode of the current block being a GLM mode, when the GLM mode is 3-parameter mode, determining that a gradient index, the first model parameter, and a second model parameter in the candidate model parameter are inherited by the current block; or when the GLM mode is 2-parameter mode, determining that the first model parameter in the candidate model parameter is inherited by the current block;
in response to the inheritance mode of the current block being a chroma fusion mode, when the chroma fusion mode is the chroma fusion merge mode, determining a prediction mode inherited by the current block, and determining the model parameter of the current block according to the prediction mode inherited by the current block and the candidate model parameter; or when the chroma fusion mode is not the chroma fusion merge mode, determining that the MMLM mode is used for the current block, and determining that the classification threshold and the first model parameter in the candidate model parameter are inherited by the current block; and
in response to the inheritance mode of the current block being a CCMerge mode, determining a prediction mode inherited by the current block, and determining the model parameter of the current block according to the prediction mode inherited by the current block and the candidate model parameter.

59. The method of claim 37, wherein the model parameter of the current block comprises a first model parameter and a second model parameter, wherein

the first model parameter indicates a scaling parameter when the cross-component prediction mode is used for the current block; and
the second model parameter indicates an offset parameter when the cross-component prediction mode is used for the current block.

60. The method of claim 37, further comprising:

determining the first prediction value of the current block based on the cross-component prediction mode;
determining a second prediction value of the current block based on a non-cross-component prediction mode; and
determining a target prediction value of the current block according to the first prediction value and the second prediction value.

61. The method of any one of claims 37 to 60, further comprising:
encoding the value of the first syntax flag information, and signalling obtained encoded bits into a bitstream.

62. The method of claim 61, further comprising:
encoding the value of the first syntax flag information based on a context model, and signalling obtained encoded bits into a bitstream.

63. The method of claim 62, further comprising:

determining the context model according to information of a neighbouring block of the current block.

64. The method of claim 39, wherein determining the value of the second syntax flag information comprises:

determining a value of third syntax flag information;
in response to the third syntax flag information indicating that a chroma fusion mode is used for the current block, determining a value of fourth syntax flag information; and
in response to the fourth syntax flag information indicating that a linear-model chroma fusion mode is not used for the current block, determining the value of the second syntax flag information according to the value of the third syntax flag information and the value of the fourth syntax flag information.

65. The method of claim 64, wherein determining the value of the second syntax flag information according to the value of the third syntax flag information and the value of the fourth syntax flag information comprises:
setting the value of the second syntax flag information to a sum of the value of the third syntax flag information and the value of the fourth syntax flag information.

66. The method of claim 64, further comprising:
in response to the third syntax flag information indicating that the chroma fusion mode is not used for the current block, setting the value of the second syntax flag information to the value of the third syntax flag information.

67. The method of claim 64, further comprising:

in response to the fourth syntax flag information indicating that the linear-model chroma fusion mode is used for the current block, determining a value of fifth syntax flag information; and
determining the value of the second syntax flag information according to the value of the third syntax flag information, the value of the fourth syntax flag information, and the value of the fifth syntax flag information.

68. The method of claim 67, wherein determining the value of the fifth syntax flag information comprises:

in response to a single-linear-model chroma fusion mode being used for the current block, determining that the value of the fifth syntax flag information is a first value; and
in response to a multiple-linear-model chroma fusion mode being used for the current block, determining that the value of the fifth syntax flag information is a second value.

69. The method of claim 68, further comprising:
encoding the value of the fifth syntax flag information, and signalling obtained encoded bits into a bitstream.

70. The method of claim 64, wherein determining the value of the third syntax flag information comprises:

in response to the chroma fusion mode being not used for the current block, determining that the value of the third syntax flag information is a first value; and
in response to the chroma fusion mode being used for the current block, determining that the value of the third syntax flag information is a second value.

71. The method of claim 70, further comprising:
encoding the value of the third syntax flag information, and signalling obtained encoded bits into a bitstream.

72. The method of claim 64, wherein determining the value of the fourth syntax flag information comprises:

in response to the linear-model chroma fusion mode being not used for the current block, determining that the value of the fourth syntax flag information is a first value; and
in response to the linear-model chroma fusion mode being used for the current block, determining that the value of the fourth syntax flag information is a second value.

73. The method of claim 72, further comprising:
encoding the value of the fourth syntax flag information, and signalling obtained encoded bits into a bitstream.

74. The method of claim 39, wherein determining the value of the second syntax flag information comprises:

in response to a chroma fusion mode being not used for the current block, determining that the value of the second syntax flag information is a first value;

in response to the weighted chroma fusion mode being used for the current block, determining that the value of the second syntax flag information is a second value;

in response to a single-linear-model chroma fusion mode being used for the current block, determining that the value of the second syntax flag information is a third value; and

in response to a multiple-linear-model chroma fusion mode being used for the current block, determining that the value of the second syntax flag information is a fourth value.

75. The method of claim 74, wherein the first value is 0, the second value is 1, the third value is 2, and the fourth value is 3.

76. The method of claim 39, further comprising:
encoding the value of the second syntax flag information, and signalling obtained encoded bits into a bitstream.

77. The method of any one of claims 37 to 76, further comprising:

determining a value of sixth syntax flag information; and
in response to the sixth syntax flag information indicating that a non-cross-component prediction mode is used for the current block, proceeding to determining the mode enable information of the current block.

78. The method of claim 77, further comprising:
encoding the value of the sixth syntax flag information, and signalling obtained encoded bits into a bitstream.

79. The method of any one of claims 38 to 76, further comprising:

determining a value of seventh syntax flag information; and
in response to the seventh syntax flag information indicating that the cross-component prediction mode is used for the current block, proceeding to determining the mode enable information of the current block.

80. The method of claim 79, further comprising:
encoding the value of the seventh syntax flag information, and signalling obtained encoded bits into a bitstream.

81. The method of claim 38, further comprising:

determining the mode enable information of the current block;
in response to the mode enable information indicating that a CCMerge mode is enabled for the current block, determining a value of eighth syntax flag information;
in response to the eighth syntax flag information indicating that the CCMerge mode is used for the current block, decoding a bitstream to determine the index value of the current block; and
constructing the parameter candidate list of the current block, and determining the model parameter of the current block according to the parameter candidate list and the index value, wherein the model parameter is used for determining the first prediction value of the current block based on the cross-component prediction mode.

82. The method of claim 81, further comprising:
encoding the value of the eighth syntax flag information, and signalling obtained encoded bits into a bitstream.

83. A bitstream generated by performing bit encoding according to to-be-encoded information, wherein the to-be-encoded information comprises at least one of:

an index value of a current block, a value of first syntax flag information, a value of second syntax flag information, a value of third syntax flag information, a value of fourth syntax flag information, a value of fifth syntax flag information, a value of sixth syntax flag information, a value of seventh syntax flag information, or a value of eighth syntax flag information, wherein
the first syntax flag information indicates whether a chroma fusion merge mode is used for the current block, the second syntax flag information indicates whether a weighted chroma fusion mode is used for the current block, the third syntax flag information indicates whether a chroma fusion mode is used for the current block, the fourth syntax flag information indicates whether a linear-model chroma fusion mode is used for the current block, the fifth syntax flag information indicates whether a single-linear-model chroma fusion mode or a bilinear-model chroma fusion mode is used for the current block, the sixth syntax flag information indicates whether a non-cross-component prediction mode is used for the current block, the seventh syntax flag information indicates whether a cross-component prediction mode is used for the current block, and the eighth syntax flag information indicates whether a cross-component merge (CCMerge) mode is used for the current block.

84. An encoder, comprising a first determining unit, wherein

the first determining unit is configured to determine mode enable information of a current block; and determine a value of first syntax flag information, in response to the mode enable information indicating that a weighted chroma fusion mode is used for the current block and a chroma fusion merge mode is enabled for the current block; and
the first determining unit is further configured to construct a parameter candidate list of the current block, in response to the first syntax flag information indicating that the chroma fusion merge mode is used for the current block; and determine a model parameter of the current block according to the parameter candidate list, wherein the model parameter is used for determining a first prediction value of the current block based on a cross-component prediction mode.

85. An encoder, comprising a first memory and a first processor, wherein

the first memory is configured to store a computer program executable by the first processor; and
the first processor is configured to perform the method of any one of claims 37 to 82 when executing the computer program.

86. A decoder, comprising a second determining unit and a decoding unit, wherein

the second determining unit is configured to determine mode enable information of a current block;
the decoding unit is configured to decode a bitstream to determine a value of first syntax flag information, in response to the mode enable information indicating that a weighted chroma fusion mode is used for the current block and a chroma fusion merge mode is enabled for the current block; and decode the bitstream to determine an index value of the current block, in response to the first syntax flag information indicating that the chroma fusion merge mode is used for the current block; and
the second determining unit is further configured to construct a parameter candidate list of the current block, and determine a model parameter of the current block according to the parameter candidate list and the index value, wherein the model parameter is used for determining a first prediction value of the current block based on a cross-component prediction mode.

87. A decoder, comprising a second memory and a second processor, wherein

the second memory is configured to store a computer program executable by the second processor; and
the second processor is configured to perform the method of any one of claims 1 to 36 when executing the computer program.

88. A computer-readable storage medium storing a computer program which, when executed, is operable to implement the method of any one of claims 1 to 36 or the method of any one of claims 37 to 82.

Rec′<sub>L</sub>

LUMA
COMPONENT

2N

2N

Rec<sub>c</sub>

CHROMA
COMPONENT

N

N

FIG. 1

Cb/Cr

b

a

Y

FIG. 2A

FIG. 2B

FIG. 3

FIG. 4

FIG. 5

100

INPUT VIDEO

PARTITIONED INTO CODING BLOCKS

TRANSFORM AND QUANTIZATION UNIT — 101

QUANTIZED TRANSFORM COEFFICIENT

INVERSE TRANSFORM AND INVERSE QUANTIZATION UNIT — 106

FILTER CONTROL ANALYSIS UNIT — 107

FILTER CONTROL DATA

FILTERING UNIT — 108

INTRA PREDICTION DATA

MOTION DATA

CODING UNIT — 109

OUTPUT BITSTREAM

INTRA ESTIMATION UNIT — 102

INTRA PREDICTION UNIT — 103

INTER/INTRA SELECTION

MOTION COMPENSATION UNIT — 104

MOTION ESTIMATION UNIT — 105

DECODED PICTURE BUFFER UNIT — 110

OUTPUT VIDEO SIGNAL

FIG. 6

FIG. 7

FIG. 8

DETERMINE MODE ENABLE INFORMATION OF CURRENT BLOCK — S901

IF MODE ENABLE INFORMATION INDICATES THAT WEIGHTED CHROMA FUSION MODE IS USED FOR CURRENT BLOCK AND CHROMA FUSION MERGE MODE IS ENABLED FOR CURRENT BLOCK, DECODE BITSTREAM TO DETERMINE VALUE OF FIRST SYNTAX FLAG INFORMATION — S902

IF FIRST SYNTAX FLAG INFORMATION INDICATES THAT CHROMA FUSION MERGE MODE IS USED FOR CURRENT BLOCK, DECODE BITSTREAM TO DETERMINE INDEX VALUE OF CURRENT BLOCK — S903

CONSTRUCT PARAMETER CANDIDATE LIST OF CURRENT BLOCK, AND DETERMINE MODEL PARAMETER OF CURRENT BLOCK ACCORDING TO PARAMETER CANDIDATE LIST AND INDEX VALUE, WHERE MODEL PARAMETER IS USED FOR DETERMINING FIRST PREDICTION VALUE OF CURRENT BLOCK BASED ON CROSS-COMPONENT PREDICTION MODE — S904

FIG. 9

| | |
|---|---|
| DETERMINE MODE ENABLE INFORMATION OF CURRENT BLOCK | S1001 |

| | |
|---|---|
| IF MODE ENABLE INFORMATION INDICATES THAT CCMERGE MODE IS ENABLED FOR CURRENT BLOCK, DECODE BITSTREAM TO DETERMINE VALUE OF EIGHTH SYNTAX FLAG INFORMATION | S1002 |

| | |
|---|---|
| IF EIGHTH SYNTAX FLAG INFORMATION INDICATES THAT CCMERGE MODE IS USED FOR CURRENT BLOCK, DECODE BITSTREAM TO DETERMINE INDEX VALUE OF CURRENT BLOCK | S1003 |

| | |
|---|---|
| CONSTRUCT PARAMETER CANDIDATE LIST OF CURRENT BLOCK, AND DETERMINE MODEL PARAMETER OF CURRENT BLOCK ACCORDING TO PARAMETER CANDIDATE LIST AND INDEX VALUE, WHERE MODEL PARAMETER IS USED FOR DETERMINING FIRST PREDICTION VALUE OF CURRENT BLOCK BASED ON CROSS-COMPONENT PREDICTION MODE | S1004 |

FIG. 10

DETERMINE MODE ENABLE INFORMATION OF CURRENT BLOCK — S1101

↓

IF MODE ENABLE INFORMATION INDICATES THAT WEIGHTED CHROMA FUSION MODE IS USED FOR CURRENT BLOCK AND CHROMA FUSION MERGE MODE IS ENABLED FOR CURRENT BLOCK, DETERMINE VALUE OF FIRST SYNTAX FLAG INFORMATION — S1102

↓

IF FIRST SYNTAX FLAG INFORMATION INDICATES THAT CHROMA FUSION MERGE MODE IS USED FOR CURRENT BLOCK, CONSTRUCT PARAMETER CANDIDATE LIST OF CURRENT BLOCK — S1103

↓

DETERMINE MODEL PARAMETER OF CURRENT BLOCK ACCORDING TO PARAMETER CANDIDATE LIST, WHERE MODEL PARAMETER IS USED FOR DETERMINING FIRST PREDICTION VALUE OF CURRENT BLOCK BASED ON CROSS-COMPONENT PREDICTION MODE — S1104

FIG. 11

DETERMINE MODE ENABLE INFORMATION OF CURRENT BLOCK — S1101

IF MODE ENABLE INFORMATION INDICATES THAT WEIGHTED CHROMA FUSION MODE IS USED FOR CURRENT BLOCK AND CHROMA FUSION MERGE MODE IS ENABLED FOR CURRENT BLOCK, DETERMINE VALUE OF FIRST SYNTAX FLAG INFORMATION — S1102

IF FIRST SYNTAX FLAG INFORMATION INDICATES THAT CHROMA FUSION MERGE MODE IS USED FOR CURRENT BLOCK, CONSTRUCT PARAMETER CANDIDATE LIST OF CURRENT BLOCK — S1103

DETERMINE INDEX VALUE OF CURRENT BLOCK ACCORDING TO PARAMETER CANDIDATE LIST, WHERE INDEX VALUE INDICATES INDEX OF GROUP OF CANDIDATE MODEL PARAMETERS CORRESPONDING TO MINIMUM COST VALUE IN PARAMETER CANDIDATE LIST — S1201

ENCODE VALUE OF FIRST SYNTAX FLAG INFORMATION AND INDEX VALUE, AND SIGNAL OBTAINED ENCODED BITS INTO BITSTREAM — S1202

FIG. 12

130

ENCODER

1301

FIRST DETERMINING UNIT

1302

ENCODING UNIT

1303

FIRST PREDICTION UNIT

FIG. 13

130

ENCODER

1401

FIRST COMMUNICATION INTERFACE

1404

1403

FIRST PROCESSOR

1402

FIRST MEMORY

FIG. 14

150

DECODER

1501

SECOND
DETERMINING
UNIT

1502

DECODING UNIT

1503

SECOND PREDICTION UNIT

FIG. 15

150

DECODER

1601

SECOND COMMUNICATION
INTERFACE

1604

1603

SECOND
PROCESSOR

1602

SECOND
MEMORY

FIG. 16

170

1701

ENCODER

1702

DECODER

FIG. 17

## INTERNATIONAL SEARCH REPORT

| | International application No. |
|---|---|
| | **PCT/CN2023/093229** |

**A. CLASSIFICATION OF SUBJECT MATTER**

H04N19/186(2014.01)i;  H04N19/103(2014.01)i

According to International Patent Classification (IPC) or to both national classification and IPC

**B. FIELDS SEARCHED**

Minimum documentation searched (classification system followed by classification symbols)

IPC: H04N

Documentation searched other than minimum documentation to the extent that such documents are included in the fields searched

Electronic data base consulted during the international search (name of data base and, where practicable, search terms used)

CNABS; CNTXT; WPABSC; ENTXTC; DWPI; VEN; WOTXT; USTXT; ENTXT; CNKI; IEEE; JVET: 编码, 标识, 标志, 导出, 分量, 合并, 候选, 加权, 模式, 旗标, 融合, 色度, 信令, 颜色, 语法, encode, identification, flag, export, component, merge, candidate, weight, mode, fusion, chroma, signaling, color, syntax

**C. DOCUMENTS CONSIDERED TO BE RELEVANT**

| Category* | Citation of document, with indication, where appropriate, of the relevant passages | Relevant to claim No. |
|---|---|---|
| X | WO 2022116105 A1 (GUANGDONG OPPO MOBILE TELECOMMUNICATIONS CORP., LTD.) 09 June 2022 (2022-06-09) <br> description, paragraphs 118-530 | 1-5, 8-12, 18, 22-24, 37-41, 44-48, 54-56, 60-63, 76, 83-88 |
| A | US 2021112263 A1 (LG ELECTRONICS INC.) 15 April 2021 (2021-04-15) <br> entire document | 1-88 |
| A | WO 2023016439 A1 (BEIJING BYTEDANCE NETWORK TECHNOLOGY CO., LTD. et al.) 16 February 2023 (2023-02-16) <br> entire document | 1-88 |
| A | CAI, Jiaming et al. "Non-EE2: Cross-component merge mode for chroma intra coding" *Joint Video Experts Team (JVET) of ITU-T SG 16 WP 3 and ISO/IEC JTC 1/ SC 29 29th Meeting, by teleconference, 11–20 January 2023, JVET-AC0315-v2,* 16 January 2023 (2023-01-16), <br> entire document | 1-88 |

☑ Further documents are listed in the continuation of Box C.      ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **17 December 2023** | **19 December 2023** |

| Name and mailing address of the ISA/CN | Authorized officer |
|---|---|
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/093229** |

### C. DOCUMENTS CONSIDERED TO BE RELEVANT

| Category* | Citation of document, with indication, where appropriate, of the relevant passages | Relevant to claim No. |
| --- | --- | --- |
| A | ZHOU, Chuan et al. "EE2-1.6: On Chroma Fusion improvement" *Joint Video Experts Team (JVET) of ITU-T SG 16 WP 3 and ISO/IEC JTC 1/ SC 29 29th Meeting, by teleconference, 11–20 January 2023, JVET-AC0119-v1,* 04 January 2023 (2023-01-04), entire document | 1-88 |

Form PCT/ISA/210 (second sheet) (July 2022)

**INTERNATIONAL SEARCH REPORT**
Information on patent family members

International application No.

**PCT/CN2023/093229**

| Patent document cited in search report | | | Publication date (day/month/year) | Patent family member(s) | | | Publication date (day/month/year) |
|---|---|---|---|---|---|---|---|
| WO | 2022116105 | A1 | 09 June 2022 | US | 2023319267 | A1 | 05 October 2023 |
| | | | | KR | 20230111256 | A | 25 July 2023 |
| US | 2021112263 | A1 | 15 April 2021 | US | 11418803 | B2 | 16 August 2022 |
| | | | | WO | 2019194500 | A1 | 10 October 2019 |
| WO | 2023016439 | A1 | 16 February 2023 | | None | | |

Form PCT/ISA/210 (patent family annex) (July 2022)